(19) **Europäisches Patentamt / European Patent Office / Office européen des brevets**

(11) **EP 4 686 305 A1**

(12) **EUROPEAN PATENT APPLICATION**
published in accordance with Art. 153(4) EPC

(43) Date of publication:
28.01.2026 Bulletin 2026/05

(21) Application number: 24775275.1

(22) Date of filing: 21.03.2024

(51) International Patent Classification (IPC):
$H04W\ 74/08^{(2024.01)}$    $H04W\ 74/00^{(2009.01)}$
$H04L\ 1/08^{(2006.01)}$    $H04W\ 24/08^{(2009.01)}$
$H04B\ 17/318^{(2015.01)}$    $H04W\ 72/04^{(2023.01)}$
$H04B\ 7/0404^{(2017.01)}$    $H04B\ 7/06^{(2006.01)}$

(52) Cooperative Patent Classification (CPC):
H04B 7/0404; H04B 7/06; H04B 17/318;
H04L 1/08; H04W 24/08; H04W 72/04;
H04W 74/00; H04W 74/08

(86) International application number:
PCT/KR2024/095615

(87) International publication number:
WO 2024/196230 (26.09.2024 Gazette 2024/39)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 21.03.2023   KR 20230036730
07.04.2023   KR 20230046255
12.05.2023   KR 20230061879
15.05.2023   KR 20230062530
11.08.2023   KR 20230105697
27.09.2023   KR 20230130201
02.11.2023   KR 20230150327
19.02.2024   KR 20240023593
20.03.2024   KR 20240038597

(71) Applicant: **Electronics and Telecommunications Research Institute**
**Daejeon 34129 (KR)**

(72) Inventors:
- **KIM, Cheul Soon**
  **Daejeon 34129 (KR)**
- **MOON, Sung Hyun**
  **Daejeon 34129 (KR)**
- **LEE, Jung Hoon**
  **Daejeon 34129 (KR)**
- **KIM, Jae Heung**
  **Daejeon 34129 (KR)**
- **CHANG, Sung Cheol**
  **Daejeon 34129 (KR)**

(74) Representative: **Betten & Resch**
**Patent- und Rechtsanwälte PartGmbB**
**Maximiliansplatz 14**
**80333 München (DE)**

(54) **APPARATUS AND METHOD FOR EXPANDING ARRIVAL AREA OF NODE IN WIRELESS COMMUNICATION SYSTEM**

(57) An apparatus for extending reach of a node in a wireless communication system and a method thereof are proposed. The apparatus and method generally relates to uplink transmission technology of a terminal in the wireless communication system and, more particularly, to uplink transmission technology of a terminal having multiple channels in the wireless communication system. A method of operating a terminal in a wireless communication system includes a process of measuring RSRP for an SSB received from a BS, a process of determining the number of transmissions of a PRACH on the basis of the RSRP, a process of selecting valid ROs for transmitting the PRACH among ROs included in at least one of an SSB-RO association period or an SSB-RO association pattern period, which is corresponding to the SSB, and a process of selecting an RO group for PRACH transmission among the valid ROs by considering a time offset.

FIG. 1

base station —101

terminal —103

MIB/SSB/SIB 1 —105

Msg1 (repetition/sweeping) —107

Msg2 —109

Msg3 (repetition) —111

Msg4 —113

HARQ-ACK (repetition/sweeping) —115

## Description

## Technical Field

The present disclosure generally relates to uplink transmission technology of a terminal in a wireless communication system and, more particularly, to uplink transmission technology of a terminal having multiple channels in a wireless communication system.

## Background Art

In order to process rapidly increasing wireless data, a communication system (e.g., a new radio (NR) communication system) using a frequency band (e.g., a 6 GHz or more frequency band) higher than a frequency band (e.g., a 6 GHz or less frequency band) of long term evolution (LTE) (or LTE-A) is being considered. The NR communication system may support frequency bands above 6 GHz or more as well as 6 GHz or below, and may support more communication services and scenarios compared to those of LTE communication systems. For example, usage scenarios of the NR communication system may include Enhanced Mobile BroadBand (eMBB), Ultra Reliable Low Latency Communication (URLLC), Massive Machine Type Communication (mMTC), etc. Communication technologies are needed to satisfy the requirements of eMBB, URLLC, and mMTC.

Meanwhile, with the development of information and communication technology, various wireless communication technologies are being developed. Representative wireless communication technologies include long term evolution (LTE), new radio (NR), etc., which are defined in the 3rd Generation Partnership Project (3GPP) standard. LTE may be a wireless communication technology among 4th Generation (4G) wireless communication technologies, and NR may be a wireless communication technology among 5th Generation (5G) wireless communication technologies. In order to process wireless data rapidly increasing after the commercialization of 4G communication systems (e.g., communication systems supporting LTE), 5G communication systems (e.g., communication systems supporting NR) using a higher frequency band (e.g., a frequency band of above 6 GHz) than the 4G communication system as well as the frequency band of the 4G communication systems (e.g., a frequency band of 6 GHz or below) is being considered. The 5G communication system may also further consider Enhanced Mobile BroadBand (eMBB), Ultra-Reliable and Low Latency Communication (URLLC), Massive Machine Type Communication (mMTC), and Time Sensitive Communication (TSC). In particular, the mMTC, URLLC, and TSC may be applied in IoT scenarios. A single network should be able to support all or some of the above scenarios. It is determined that an mMTC scenario satisfies IMT-2020 requirements by using NB-IoT and LTE-MTC, and much discussion is required to satisfy a URLLC scenario.

## Disclosure

## Technical Problem

Based on the discussion as described above, the present disclosure provides a method of transmitting data to extend reach of a node and an apparatus thereof.

In addition, the present disclosure provides an apparatus for uplink transmission technology of a terminal in a wireless communication system and a method thereof.

In addition, the present disclosure provides an apparatus for uplink transmission technology of a terminal having multiple channels in a wireless communication system and a method thereof.

In addition, the present disclosure provides an apparatus for supporting feature combination in a wireless communication system and a method thereof.

In addition, the present disclosure provides an apparatus for determining a RACH occasion (RO) group in a wireless communication system and a method thereof.

In addition, the present disclosure provides an apparatus for dropping an RO in a wireless communication system and a method thereof.

In addition, the present disclosure provides an apparatus for providing a nested structure for ROs in a wireless communication system and a method thereof.

In addition, the present disclosure provides an apparatus for processing the last RO in a nested structure in a wireless communication system and a method thereof.

In addition, the present disclosure provides an apparatus for deriving a repetition pattern period considering an RO group and a method thereof.

In addition, the present disclosure provides an apparatus for processing an orphan RO where an RO group is considered and a method thereof.

In addition, the present disclosure provides an apparatus for selecting a starting RO for configured ROs and a method thereof.

In addition, the present disclosure provides an apparatus for supporting a mask index for a physical random access channel (PRACH) in a case where a time offset is set and a method thereof.

In addition, the present disclosure provides an apparatus for determining a repetition factor and transmission power when PRACH repetition is performed and a method thereof.

In addition, the present disclosure provides an apparatus for determining a sweeping factor and transmission power when PRACH sweeping is performed and a method thereof.

In addition, the present disclosure provides an apparatus for performing PRACH repetition in a case of contention free random access (CFRA) and a method thereof.

In addition, the present disclosure provides an apparatus for deriving a Tx beam of a PRACH and a method thereof.

In addition, the present disclosure provides an apparatus for extending reach of a physical downlink shared channel (PDSCH) and a method thereof.

In addition, the present disclosure provides an apparatus for extending reach of a physical uplink shared channel (PUSCH) and a method thereof.

In addition, the present disclosure provides an apparatus for extending reach of a physical uplink control channel (PUCCH) and a method thereof.

**Technical Solution**

According to various exemplary embodiments of the present disclosure, there is provided a method of operating a terminal in a wireless communication system, the method including: a process of measuring received signal received power (RSRP) for a synchronization signal block (SSB) received from a base station (BS); a process of determining the number of transmissions of a physical random access channel (PRACH) on the basis of the RSRP; a process of selecting valid ROs for transmitting the PRACH among random access channel occasions (ROs) included in at least one of an SSB-RO association period or an SSB-RO association pattern period, which is corresponding to the SSB; and a process of selecting an RO group for PRACH transmission among the valid ROs by considering a time offset.

According to various exemplary embodiments of the present disclosure, there is provided a apparatus as a terminal in a wireless communication system, the apparatus including: a transceiver; and a processor, wherein the processor may be configured to measure received signal received power (RSRP) for a synchronization signal block (SSB) received from a base station (BS), determine the number of transmissions of a physical random access channel (PRACH) on the basis of the RSRP, select valid ROs for transmitting the PRACH among random access channel occasions (ROs) included in at least one of an SSB-RO association period or an SSB-RO association pattern period, which is corresponding to the SSB, and select an RO group for PRACH transmission among the valid ROs by considering a time offset.

**Advantageous Effects**

The apparatus and the method thereof according to various exemplary embodiments of the present disclosure perform appropriate repetitive transmission or repetitive reception, so that when performing random access, a terminal is enabled to perform the random access smoothly even at a longer distance.

The effects of the present disclosure are not limited to the above-mentioned effects, and other effects that are not mentioned will be clearly understood by those skilled in the art from the following description.

**Description of Drawings**

FIG. 1 is a view illustrating an exemplary embodiment of a terminal performing random access in four steps according to various exemplary embodiments of the present disclosure.

FIG. 2 is a view illustrating a first exemplary embodiment in which PRACH transmission is resumed after the PRACH transmission is cancelled in some ROs in an RO group according to the exemplary embodiments of the present disclosure.

FIG. 3 is a view illustrating the first exemplary embodiment in which the PRACH transmission is dropped after the PRACH transmission is cancelled in some ROs in the RO group according to the exemplary embodiments of the present disclosure.

FIG. 4 a view illustrating a first exemplary embodiment of RO groups having a nested structure according to the exemplary embodiments of the present disclosure.

FIG. 5 is a view illustrating a first exemplary embodiment in which an RO group is derived from one association pattern period according to the exemplary embodiments of the present disclosure.

FIG. 6 is a view illustrating a second exemplary embodiment in which an RO group is derived from one association pattern period according to the exemplary embodiments of the present disclosure.

FIG. 7 is a view illustrating a first exemplary embodiment in which an RO group is derived from one generalized association (pattern) period according to the exemplary embodiments of the present disclosure.

FIG. 8 is a view illustrating a second exemplary embodiment in which an RO group is derived from one generalized association (pattern) period according to the exemplary embodiments of the present disclosure.

FIG. 9 is a view illustrating a third exemplary embodiment in which an RO group is derived from one generalized association (pattern) period according to the exemplary embodiments of the present disclosure.

FIG. 10 is a view illustrating a first exemplary embodiment in which RO groups are configured when a time offset is applied according to the exemplary embodiments of the present disclosure.

FIG. 11 is a view illustrating a second exemplary embodiment in which RO groups are configured when a time offset is applied according to the exemplary embodiments of the present disclosure.

FIG. 12 is a view illustrating an exemplary embodiment in which preamble sets used in one RO are allocated according to the exemplary embodiments of the present disclosure.

FIG. 13 is a view illustrating a first exemplary embodiment in which preamble sets corresponding to several repetition factors are allocated to one SSB according to the exemplary embodiments of the present disclosure.

FIG. 14 is a view illustrating a second exemplary embodiment in which preamble sets corresponding to several repetition factors are allocated to one SSB according to the exemplary embodiments of the present disclosure.

FIG. 15 is a view illustrating a third exemplary embodiment in which preamble sets corresponding to several repetition factors are allocated to one SSB according to the exemplary embodiments of the present disclosure.

FIG. 16 is a view illustrating an example of RO groups in a case where a mask index is 3 according to the exemplary embodiments of the present disclosure.

FIG. 17 is a view illustrating an example of a first method of interpreting a mask index according to the exemplary embodiments of the present disclosure.

FIG. 18 is a view illustrating an example of a second method of interpreting a mask index according to the exemplary embodiments of the present disclosure.

FIG. 19 is a view illustrating an example of a third method of interpreting a mask index according to the exemplary embodiments of the present disclosure.

FIG. 20 is a view illustrating an example of a fourth method of interpreting a mask index according to the exemplary embodiments of the present disclosure.

FIG. 21 is a view illustrating an example of a fifth method of interpreting a mask index according to the exemplary embodiments of the present disclosure.

FIG. 22 is a view illustrating a fourth exemplary embodiment in which preamble sets corresponding to several repetition factors are allocated to one SSB according to the exemplary embodiments of the present disclosure.

FIG. 23 is a view illustrating a first exemplary embodiment of a beam grid and Tx beam(s) corresponding to an SSB according to the exemplary embodiments of the present disclosure.

FIG. 24 is a view illustrating a first exemplary embodiment in which one mask index is interpreted at repetition factors different from each other according to the exemplary embodiments of the present disclosure.

FIG. 25 is a view illustrating frequency hopping that may be performed in a case where a PDSCH is repeatedly transmitted according to the exemplary embodiments of the present disclosure.

FIG. 26 is a view illustrating a configuration diagram of a base station in a wireless communication system according to various exemplary embodiments of the present disclosure.

FIG. 27 is a view illustrating a configuration diagram of a terminal in the wireless communication system according to various exemplary embodiments of the present disclosure.

**Best Mode**

The terms used in the present disclosure are only used to describe specific exemplary embodiments, and may not be intended to limit the scope of other exemplary embodiments. As used herein, the singular forms may include the plural forms as well, unless the context clearly indicates otherwise. The terms including technical and scientific terms used herein have the same meaning as commonly understood by those skilled in the art described in the present disclosure. Among the terms used in the present disclosure, terms defined in a general dictionary may be interpreted as having the same or similar meaning as the meaning in the context of the related art, and are not interpreted in an ideal or excessively formal meaning unless explicitly defined in the present disclosure. In some cases, even the terms defined in the present disclosure may not be interpreted to exclude the exemplary embodiments of the present disclosure.

The terms used in the present disclosure are only used to describe specific exemplary embodiments, and may not be intended to limit the scope of other exemplary embodiments. As used herein, the singular forms may include the plural forms as well, unless the context clearly indicates otherwise. The terms including technical and scientific terms used herein have the same meaning as commonly understood by those skilled in the art described in the present disclosure. Among the terms used in the present disclosure, terms defined in a general dictionary may be interpreted as having the same or similar meaning as the meaning in the context of the related art, and are not interpreted in an ideal or excessively formal meaning unless explicitly defined in the present disclosure. In some cases, even the terms defined in the present disclosure may not be interpreted to exclude the exemplary embodiments of the present disclosure.

In various exemplary embodiments of the present disclosure described below, a hardware approach method is described as an example. However, since the various exemplary embodiments of the present disclosure include technology using both hardware and software, the various exemplary embodiments of the present disclosure do not exclude a software-based approach method.

In addition, in the detailed description and claims of the present disclosure, "at least one of A, B, and C" may mean "only A", "only B", and "only C", or may mean "any combination of A, B, and C". In addition, "at least one of A, B, or C" or "at least one of A, B, and/or C" may mean "at least one of A, B, and C".

Hereinafter, the present disclosure relates to an apparatus for extending reach of a node in a wireless communication system and a method thereof. Specifically, the present disclosure describes uplink transmission technology for a terminal having multiple channels in the wireless communication system.

In the following description, terms referring to signals, terms referring to channels, terms referring to control information, terms referring to network entities, terms referring to components of an appratus, and the like are illustrated for convenience of the description. Accordingly, the present disclosure is not limited to the terms described below, but other terms having equivalent technical meanings may be used.

In addition, the present disclosure describes various exemplary embodiments by using terms used in some communication standards (e.g., 3rd Generation Partnership Project, 3GPP), but this is only an example for description. Various exemplary embodiments of the present disclosure may be easily modified and applied to other communication systems.

In the present disclosure, various modifications may be made and various exemplary embodiments may be provided, and specific exemplary embodiments will be illustrated in the drawings and described in detail. However, this is not intended to limit the present disclosure to a particular disclosed form. On the contrary, the present disclosure is to be understood to include all alternatives, equivalents, and substitutes that may be included within the idea and technical scope of the present disclosure.

It will be understood that, although the terms first, second, etc. may be used herein to describe various components, these components should not be limited by the terms described above. These terms are only used for the purpose of distinguishing one component from another component. For example, a first component may be referred to as a second component without departing from the scope of the present disclosure, and similarly, the second component may be referred to as the first component. The term "and/or" includes a combination of a plurality of related and described items, or any of the plurality of related and described items.

When a component is described as being "connected", "coupled", or "linked" to another component, that component may be directly connected, coupled, or linked to that other component. However, it should be understood that yet another component between each of the components may be present. In contrast, when a component is described as being "directly connected", "directly coupled", or "directly linked" to another component, it should be understood that there are no intervening component present therebetween.

The terminology used in the present disclosure is for the purpose of describing particular exemplary embodiments only and is not intended to be limiting. As used herein, the singular forms are intended to include the plural forms as well, unless the context clearly indicates otherwise. It will be further understood that the terms "comprise", "include", "have", etc. when used in the present disclosure, specify the presence of stated features, integers, steps, operations, elements, components, and/or combinations thereof but do not preclude the possibility of the presence or addition of one or more other features, integers, steps, operations, elements, components, and/or combinations thereof.

Unless otherwise defined, all terms including technical and scientific terms used herein have the same meaning as commonly understood by those skilled in the art to which the present disclosure belongs. It will be further understood that terms as defined in dictionaries commonly used herein should be interpreted as having a meaning that is consistent with their meaning in the context of the related art, and will not be interpreted in an idealized or overly formal sense unless expressly so defined herein.

A communication system or a memory system to which the exemplary embodiments according to the present disclosure are applied will be described. The communication system or memory system to which the exemplary embodiments according to the present disclosure are applied is not limited to the content described below, and the exemplary embodiments according to the present disclosure may be applied to various communication systems. Here, communication system may be used in the same sense as communication network.

Hereinafter, preferred exemplary embodiments of the present disclosure will be described in more detail with reference to the accompanying drawings. In order to facilitate overall understanding when the present disclosure is described, the same reference numerals are used for the same components in the drawings, and duplicate descriptions for the same components are omitted.

With the development of information and communication technology, various wireless communication technologies are being developed. Representative wireless communication technologies include long term evolution (LTE), new radio (NR), etc., which are defined in the 3rd Generation Partnership Project (3GPP) standard. LTE may be a wireless communication technology among 4th Generation (4G) wireless communication technologies, and NR may be a wireless communication technology among 5th Generation (5G) wireless communication technologies.

In order to process wireless data rapidly increasing after the commercialization of 4G communication systems (e.g., communication systems supporting LTE), 5G communication systems (e.g., communication systems supporting NR) using a higher frequency band (e.g., a frequency band of above 6 GHz) than the 4G communication system as well as the frequency band of the 4G communication systems (e.g., a frequency band of 6 GHz or below) is being considered. The 5G communication system may also further consider Enhanced Mobile BroadBand (eMBB), Ultra-Reliable and Low Latency Communication (URLLC), Massive Machine Type Communication (mMTC), and Time Sensitive Communication (TSC).

In particular, the mMTC, URLLC, and TSC may be applied in IoT scenarios. A single network should be able to support all or some of the above scenarios. It is determined that an mMTC scenario satisfies IMT-2020 requirements by using narrowband-Internet of Things (NB-IoT) and LTE-MTC, and much discussion is required to satisfy a URLLC scenario.

In order to reduce an error rate of data, a lower code rate and modulation rate (in a modulation and coding scheme, MCS) may be applied. However, in order to prevent a size of a field indicated by downlink control information (DCI) from becoming too large, the most frequently occurring MCSs are selected, and a form of repetitive transmission is supported in order to apply the lower MCS thereafter. In a case of the modulation rate, since quadrature phase shift keying (QPSK) is the lowest, the effect of further lowering the code rate may be achieved. In particular, in a case of uplink (UL), transmission power is limited, so the repetitive transmission may be performed in time resources rather than in frequency resources.

For purposes different from each other, the MCS is required to be lowered for eMBB traffic and URLLC traffic, which are supported by a 5G system. The eMBB traffic requires a lower MCS in order to extend reach thereof. In contrast, the URLLC traffic requires a lower MCS in order to reduce a delay time and achieve a lower error rate. Since the essential requirements are different as such, the eMBB traffic may perform repetitive transmission while time is relatively consumed, causing a latency, and the URLLC traffic may be used in downlink control information/radio resource control (DCI/RRC) by introducing new MCSs rather than performing repetitive transmission.

In order to support repetitive transmission in time for eMBB traffic, physical uplink shared channel (PUSCH) repetition (or PUSCH repetition type A) was introduced. In this case, the PUSCH (or PUSCH mapping type A) allocated in units of slots is transmitted repeatedly. This is a setting that allocates the time resources across a plurality of slots in order to extend the distances of reach. DCI (in a case of type 2 configured grant and dynamic grant)/RRC (type 1 configured grant) includes only time resources transmitted in a first slot, and indicates the number of repetitions through RRC signaling, so that the time resources that PUSCH repetition type A have are determined.

The repetitive transmission of URLL traffic is not appropriate because time is consumed, causing the latency, but may use the advantage of lowering a decoding latency that occurs as applying a sufficiently low MCS. This is because when the sufficiently low MCS is applied, the number of resource elements (REs) increases and a base station 101 (i.e., a decoder of a base station 101) has to wait until all REs are received. However, when a PUSCH to which a somewhat high MCS is applied is transmitted repeatedly, the base station 101 may operate the decoder thereof with only some REs, and the earliest time point at which decoding was successful may even be faster than a case when the lower MCS is applied in a single transmission. In order to reduce a delay time for the repetition, since the applying of PUSCH repetition type A causes an unnecessary latency, PUSCH repetition type B, in which a PUSCH (i.e., PUSCH mapping type B) allocated in units of mini-slot is transmitted repeatedly, was introduced. Time resources belong to PUSCH repetition type B are determined by indicating a combination of reference time resources which one PUSCH instance have and the number of repetitions in DCI (when type 2 configured grant and dynamic grant)/RRC (type 1 configured grant is applied).

In order to control the transmission power of SRS resources corresponding to a sounding reference signal index (SRI), the base station 101 may estimate each path attenuation for each SRS resource. The base station 101 may control the transmission power for SRS resources by using DCI. The DCI may include scheduling DCI (e.g., DCI format 0_0, 0_1, 0_2, or DCI format 1_0, 1_1, 1_2) or group common DCI (GC-DCI, e.g., DCI format 2_3, or DCI format 2_2). An index (a TPC command, where TPC stands for "transmit power control"), which means transmission power, is indicated to the terminal by using a field value of DCI, so that a terminal 103 may increase or decrease the transmission power. In order for the terminal 103 to determine power to be applied to a PUSCH, a value obtained by path attenuation, a value reflecting the field value of the DCI, and in addition, a bandwidth of the PUSCH indicated in the DCI, etc. may be reflected.

The terminal 103 may be configured with two or more sets by the base station 101 by using higher layer signaling. Elements constituting each of the set are transmission power parameters, and may be indicated to be suitable for scenarios different from each other (e.g., a URLLC scenario or an eMBB scenario). A set for interpreting the transmission power parameters from the scheduling DCI or activating DCI for allocating PUSCHs may be indicated to the terminal 103. In a case where the transmission power parameter sets are different, as an example, the terminal 103 may have different magnitudes of increase or decrease in transmission power indicated by the same TPC command.

In a case of Type-1 configured grant and Type-2 configured grant, each transmission power may be applied to an SRI associated with a PUSCH instance by using DCI format 2_3. In the case of the Type-2 configured grant, a set of transmission power parameters to be applied to PUSCH occasions may be indicated from the activating DCI. Thereafter, the terminal 103 may receive a TPC command for the SRI by using GC-DCI to interpret it appropriately for the indicated set, thereby being able to derive transmission power applied to a PUSCH instance by using transmission power for SRI associated with the PUSCH instance.

In a case of a dynamically scheduled PUSCH, transmission power applied to a PUSCH instance may be derived by combining the GC-DCI and the scheduling DCI. It is assumed that the terminal 103 stores the TPC command of the SRI by using the GC-DCI. In the case of the dynamically scheduled PUSCH, the TPC command and the set of transmission power parameters to be applied to a PUSCH occasion may be indicated in the scheduling DCI. The terminal 103 may derive the transmission power applied to the PUSCH instance by using the transmission power for the SRI associated with the PUSCH instance.

The repetitive transmission of hybrid automatic request-acknowledgment (a HARQ-ACK) may be indicated (or configured) by higher layer signaling for each format that a physical uplink control channel (PUCCH) has. In the terminal 103, the number of repetitions may be set independently of each other for PUCCH format i (i = 1, 3, 4). In a case of performing the repetitive transmission by the terminal 103, the same time resources may be transmitted repeatedly for each slot.

A uplink control information (UCI) type is divided into at least a scheduling request (SR), Layer 1-reference signal received power (L1-RSRP), a HARQ-ACK, and channel state information (CSI). When UCI is transmitted repeatedly, only one UCI type may be transmitted. To this end, the priority of UCI type may be defined in the technical specifications. In addition, when a piece of UCI is selected to be included in a PUCCH and is repeatedly transmitted, the terminal 103 may assume that no other UCI is transmitted before the transmission of the UCI is completed. To this end, in order to indicate the terminal 103 to transmit an SR or a HARQ-ACK, the base station 101 should indicate the terminal 103 to transmit the corresponding UCI after the transmission of the PUCCH is completed. Waiting for this may be very time consuming, and in some cases, the waiting time may act as a scheduling constraint for the base station 101.

In an example of a HARQ-ACK in the UCI type, a HARQ codebook may be generated, so that a HARQ-ACK is indicated to be transmitted in the same slot or subslot, or is transmitted on one PUCCH when the PUCCH's time resources indicated by DCI/RRC signaling that allocates PDSCHs overlap each other. The HARQ codebook generates information bits by arranging HARQ-ACK bits into a bit string according to a predetermined order specified in the technical specifications. The terminal may generate coded bits through an encoding process.

According to the exemplary embodiment, the encoding process may use a Reed-Muller code or a polar code. A code rate applied in the encoding process may be indicated by higher layer signaling. For example, one value in a given PUCCH format may be indicated to the terminal as the code rate.

According to the technical specifications, one codeword is mapped to one PUCCH. When the PUCCH is transmitted repeatedly, codewords are generated by using only one UCI type. When a PUCCH is transmitted only once, one or more UCI types may be concatenated into information bits and generated as one codeword through the same encoding process. However, since soft combining of the Reed Muller code or polar code is difficult in implementation, the same codewords are transmitted even when the PUCCH is transmitted repeatedly, and then the base station 101 may perform chase combining on the same codewords. According to the exemplary embodiment, coded bits or codewords may mean a bit string expressed by concatenating a multiple number of code blocks. The codewords may be mapped to REs through a modulation process.

Meanwhile, in spite of the same UCI type, the codewords may be mapped, being regarded as information different from each other. For example, UCI may be generated to support traffic having priorities different from each other. The SR or HARQ-ACK that supports eMBB traffic and the SR or a HARQ-ACK that supports URLLC traffic may be regarded as different information, which is distinct from each other. In this case, they may be distinguished even though their UCI types are the same.

The encoded UCI is mapped to a PUCCH. When the PUCCH is transmitted, the same preprocessing (or spatial information, or spatial relation) may also be maintained. Alternatively, when the PUCCH is transmitted, preprocessing different from each other may also be allowed for each PUCCH transmitted according to RRC signaling of the base station 101.

In order to support URLLC traffic, it is preferable for the terminal to frequently perform reception from DL resources and frequently perform transmission to UL resources. In a time division duplex system, since a terminal operates in half duplex, it may also take more time to support DL traffic and UL traffic depending on slot patterns. In contrast, in a frequency division duplex (FDD) system, there is no such problem because both downlink (DL) resources and uplink (UL) resources may be used by the terminal. However, in the frequency division duplex (FDD) system, two carriers are used. When two or more serving cells are configured for a terminal even in the time division duplex system, the DL resources and UL resources may be used by the terminal.

For example, in a system including at least one carrier that operates in FDD, there may be no latency time disadvantage to a terminal. For example, in a system composed only of carriers that operates in TDD, a terminal may suffer from the disadvantage of latency time. In order to solve this problem, carriers that operates in TDD may be configured with slots having patterns different from each other.

Carrier aggregation (CA) is configured in the terminal, and a primary cell (PCell) and secondary cell(s) (SCell (s)) may be activated. The PCell may be distinguished from each SCell in terms of including at least a cell-specific signaling (CSS) set. According to the exemplary embodiment, in order to reduce a delay time when URLLC traffic is supported, slots having the patterns different from each other may be configured and indicated to the terminal.

The eMBB traffic or URLLC traffic may be supported in a licensed band, but may also be supported in an unlicensed band. Carrier(s) belonging to the licensed band or carrier(s) belonging to the unlicensed band may also be used independently, but depending on the configuration of the base station 101, all the carriers belonging to the licensed band and carriers belonging to the unlicensed band may be used through the frequency aggregation.

A scenario in which two or more terminals receive data from the multiple number of transmission repetition points (TRPs) and perform data transmission may also be considered. According to the exemplary embodiment, it is assumed that one base station 101 or server may manage and schedule some or all of the multiple number of TRPs. The TRPs may be directly connected to each other, or may be connected to each other through the base station 101. The connection in this case may follow an Xn interface, or may follow a wireless interface (e.g., 3GPP NR) .

Since an interfering area may occur in areas between the TRPs, the TRPs may resolve the interfering area through cooperative transmission. The cooperative transmission may be performed on a terminal located between the TRPs. Even when the interfering area does not occur, the quality of wireless links may be improved by installing a large number of TRPs (or base stations 101) in order to transmit and receive a larger amount of data.

Depending on the cooperative transmission and reception of TRPs, this technology may be divided into dynamic point selection (DPS) and joint transmission (JT). For a specific physical resource block (PRB) set, the DPS is a method of receiving data from only one TRP, and the JT is a method of receiving data from two or more TRPs. Dynamic point blanking (DPB) is a type of the JT, and may not receive data from some TRPs but from the remaining TRPs. The JT is further divided into coherent JT and noncoherent JT. The JT is distinguished according to whether or not a terminal is able to perform coherent combining of signals received from each TRP when reception is performed.

Depending on a delay time and traffic allowance of a backhaul to which the base station 101 or TRPs are connected, the TRPs may participate in cooperative transmission and reception in real time, but there may also be a case where the TRPs are unable to participate. A terminal may support JT by receiving a single DCI (sDCI) or may support the JT by receiving multiple DCIs (mDCI).

In a case of using the sDCI, a terminal may transmit and receive data from TRPs. In particular, it is preferable for the TRPs to be able to cooperate through a backhaul without latency. When using mDCI, a terminal 103 exchanges data with some TRPs, but even when the terminal 103 exchanges the data with other TRPs, it is preferable to perform communication by allocating semi-static resources because of the difficulty of the TRPs to cooperate in real time through the backhaul.

According to the conventional technical specifications, a control resource set (CORESET) pool index was introduced and used to distinguish TRPs. The CORESET pool index is for a set of CORESETs, and in an independent state of transmission configuration indicator (TCI), each CORESET may be indicated to the terminal 103 through the RRC signaling and/or the medium access control (MAC) control element (CE). Accordingly, it may be seen that the CORESET pool index does not necessarily correspond to TRPs, but more specifically, further divides each TRP into TxP and RxP to correspond to an RxP. For example, it may be interpreted such that an Rx beam received from a TxP may be derived from a TCI state, and UL signals/channels scheduled from the DCIs searched in CORESETs belonging to one CORESET pool index may be received from the same RxP.

In order for the terminal 103 to generate a gain by performing coherent combining, TRPs should be synchronized to a certain degree with each other and also CSI reports are required to be shared. Otherwise, in terms of performance, it is advantageous to perform noncoherent combining at the terminal 103.

The terminal 103 may be mounted on a vehicle and thus may have fewer restrictions on the size and weight thereof, but portability for direct use by a person may also be considered.

Small cells or IAB nodes may be arranged to extend reach. The transmission volume of small cells or IAB nodes may be affected by the quality of a backhaul, and securing the backhaul may be expensive. As an alternative to this, wireless relay devices may be arranged so as to deliver higher quality signals to terminals. The wireless relay devices may be classified into several types depending on the method of delivering signals. The more functions each wireless relay device supports, the more each wireless relay device may show similar performance to that of the base station 101, and the fewer functions each wireless relay device supports, the lower the cost each wireless relay device is able to be arranged.

The wireless relay devices considered in the present disclosure may perform a minimum function of transmitting data while allowing the terminals 103 to generate beams. The base station 101 should transmit wireless signals to control such wireless relay devices. Each wireless relay device may be configured to receive appropriate parameters from such wireless signals.

In the present disclosure, a four-step random access (RA) procedure is mainly described. The four-step RA procedure described in the present disclosure may be applied to a two-step RA procedure. For example, MsgA may be transmitted and received in the same or similar manner as Msg1, and also MsgB may be transmitted and received in the same or similar manner as Msg2.

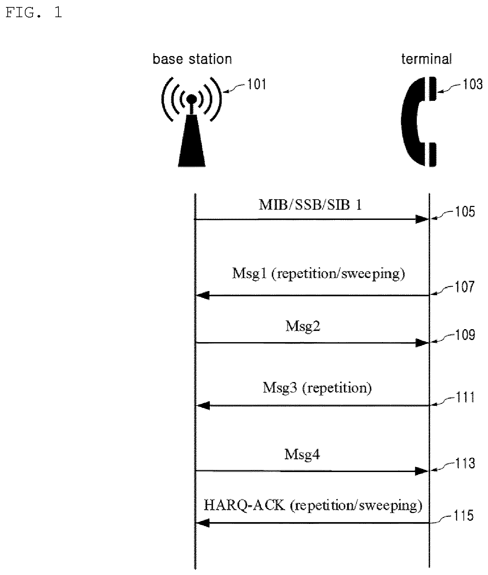

FIG. 1 is a view illustrating an exemplary embodiment of a terminal for performing random access in four steps according to various exemplary embodiments of the present disclosure.

Referring to FIG. 1, a terminal 103 may perform a four-step access procedure (e.g., a four-step RA procedure) to perform an initial access.

In operation 105, a base station 101 may transmit system information to the terminal 103. According to the exemplary embodiment, the system information may include a master information block (MIB), a synchronization signal block (SSB), and a system information block 1 (SIB 1). The system information may include fundamental information for the terminal 103 to connect to the base station 101.

In operation 107, the terminal 103 may transmit a physical random access channel (PRACH) (e.g., a RA preamble, a PRACH preamble, and Msg1) to the base station 101, and the base station 101 may receive the PRACH from the terminal 103.

In operation 109, the base station 101 may transmit a physical downlink shared channel (PDSCH) (e.g., random access response (a RAR) and Msg2) to the terminal 103, and the terminal 103 may receive the PDSCH from the base station 101.

In operation 111, the terminal 103 may transmit a PUSCH (e.g., Msg3) to the base station 101, and the base station 101 may receive the PUSCH from the terminal 103.

In operation 113, the base station 101 may transmit a physical downlink control channel (PDCCH) and/or a PDSCH (e.g., Msg4) to the terminal 103, and the terminal 103 may receive the PDCCH and/or PDSCH from the base station 101.

In operation 115, the terminal 103 may transmit a hybrid automatic repeat request (HARQ)-acknowledgement (ACK) for the PDSCH to the base station 101, and the base station 101 may receive the HARQ-ACK from the terminal 103.

In each of operations 105 to 115, a channel may include a message defined in the higher layer. The message may be Msg1 in operation 107, the message may be Msg2 in operation 109, the message may be Msg3 in operation 111, and the message may be Msg4 in operation 113. In a case where operations 105 to 115 are completed, a contention resolution procedure at the base station 101 may be completed, and a radio resource control (RRC) connection may be established between the terminal 103 and the base station 101.

In operation 105, the base station 101 may transmit system information including at least one of time resource information, frequency resource information, or sequence resource information for the PRACH.

According to the exemplary embodiment, the system information may include at least one of a master information block (MIB), a synchronization signal block (SSB), or a system information block (SIB). The terminal 103 may receive the system information from the base station 101 and obtain the time resource information, frequency resource information, and/or sequence resource information for the PRACH included in the system information. After transmitting the PRACH, the terminal 103 may perform a monitoring operation (hereinafter, referred to as a "PDCCH monitoring operation") for receiving the PDCCH from the base station 101. The PDCCH monitoring operation may be performed in a resource area (e.g., a time period) generated by a search space and a control resource set (CORESET). The terminal 103 may perform the monitoring operation in a slot (e.g., a monitoring occasion) belonging to a RAR window in order to receive a RAR (e.g., Msg2) from the base station 101.

a RAR may be generated in a medium access control (MAC) layer of the base station 101. The base station 101 may transmit the PDSCH including the RAR to the terminal 103. That is, the RAR may be transmitted on the PDSCH. The terminal 103 may receive the PDSCH including the RAR from the base station 101. The terminal 103 may check information element(s) included in the RAR. The terminal 103 may check whether a random access preamble identifier (RAPID) included in the RAR is identical to a RAPID of Msg1 transmitted by the terminal 103. In a case where the RAPID included in the RAR is identical to the RAPID of Msg1 transmitted by the terminal 103, the terminal 103 may perform a third step (e.g., a transmission step of Msg3). When the RAR including the same RAPID as the RAPID of Msg1 transmitted by the terminal 103 is not received within the RAR window, the terminal 103 may determine that the contention has not been resolved. In this case, the terminal 103 may retransmit a PRACH.

A RAR may include a backoff indicator (BI) field. The terminal 103 may check the BI indicated by the RAR and derive an upper limit value of backoff time by using the BI and an appropriate scaling factor. The terminal may select any value between zero and the upper limit value and may regard the selected value as a backoff time so as to restart the RA procedure from a first step thereof. In a case where the PRACH is retransmitted, the terminal 103 may increase a retransmission counter and increase power for retransmission of the PRACH.

A PRACH format (e.g., a preamble format) may be divided into a PRACH short format (e.g., A1, A2, A3, B1, B2, and B3) and a PRACH long format according to the number of orthogonal frequency division multiplexing (OFDM) symbols to which the PRACH preamble (e.g., the RA preamble) is mapped. The types of the PRACH short format may be subdivided according to the length of cyclic prefix (CP), the length of sequence, and/or the length of guard time (GT). The GT may mean a guard period (GP).

The terminal 103 may derive a resource location of a RACH occasion (RO) in a time domain by using a PRACH configuration index. The PRACH configuration index may be interpreted according to a frequency band in which the PRACH is transmitted and a duplex method. For example, a PRACH configuration index in a frequency domain duplexing (FDD) system (e.g., an FDD system supporting FR1) may be interpreted differently from a PRACH configuration index in a time domain duplexing (TDD) system (e.g., a TDD system supporting FR1). The PRACH configuration index in FR1 may be interpreted differently from the PRACH configuration index in FR2.

Table 1 may represent some of PRACH configuration indexes in a communication system supporting FR1.

[Table 1]

| PRACH configuration index | Preamble format | $n_f \bmod x = y$ | | Subframe number | Starting symbol | Number of PRACH slots in frame | Number of time-domain PRACH occasions within PRACH slot $(N_t^{RA,slot})$ | PRACH Duration $(N_{dur}^{RA})$ |
|---|---|---|---|---|---|---|---|---|
| 106 | A1 | 1 | 0 | 0,1,2,3, | 0 | 2 | 6 | 2 |
| | | | | 4,5,6,7, 8,9 | | | | |
| 114 | A1/B1 | 1 | 0 | 7 | 0 | 2 | 7 | 2 |

Table 2 may represent some of PRACH configuration indexes in a communication system supporting FR2.

[Table 2]

| PRACH configuration index | Preamble format | $n_f \bmod x = y$ | | Subframe number | Starting symbol | Number of PRACH slots in frame | Number of time-domain PRACH occasions within PRACH slot $(N_t^{RA,slot})$ | PRACH Duration $(N_{dur}^{RA})$ |
|---|---|---|---|---|---|---|---|---|
| 11 | A1 | 2 | 1 | 3,7,11,1 5,19,23, 27,31,35 ,39 | 0 | 1 | 6 | 2 |
| 202 | A1/B1 | 16 | 1 | 4,9,14,1 9,24,29, 34,39 | 2 | 1 | 6 | 2 |

Since a PRACH configuration index is received from system information, terminals (e.g., terminals 103) performing a random access procedure (e.g., an initial access procedure) may interpret the PRACH configuration index in common. The base station 101 may indicate one or two PRACH formats to the terminal 103. The two PRACH formats may coexist. For the coexistence of the two PRACH formats, the two PRACH formats may include CPs having lengths different from each other and/or GTs having lengths different from each other. According to the exemplary embodiment, the lengths of PRACH preambles in the two PRACH formats may be identical.

Referring to Table 1, "in a case where a PRACH configuration index is indicated as 106 and a result of system frame number (SFN) mod 1 is 0," the terminal 103 may select a subframe having subframe indexes 0 to 9. In Table 1 and Table 2, nf may be a SFN. In other words, the terminal 103 may transmit a PRACH in all subframes. One subframe may correspond to two PRACH slots. There may be six PRACH occasions within one PRACH slot. A PRACH occasion may mean a RACH occasion (RO). A terminal may transmit PRACHs at six locations (e.g., six PRACH occasions) within one PRACH slot. A PRACH having a preamble format A1 may be transmitted, and the duration of the PRACH may correspond to two symbols.

Referring to Table 1, in a case where a PRACH configuration index is indicated as 114, the terminal 103 may use preamble format A1 or preamble format B1. The number of locations (e.g., PRACH occasions) where PRACHs can be transmitted within a PRACH slot may be seven.

The base station 101 may indicate or configure an association pattern period to the terminal 103. The association pattern period may include one or more association periods. One association pattern period including ROs may be repeated within 160 ms (milliseconds). 160 ms may be related to a transmission period of system information block (SIB)1.

In a case where an associated period is used for requesting system information (SI), the base station 101 may indicate an associated period index to the terminal 103. The minimum integer multiple of a pattern including all Rach occasions (ROs) corresponding to all synchronization signal blocks (SSBs) may be determined (e.g., derived) by using the number of SSBs (e.g., ssb-PositionsInBurst) indicated to the terminal 103 by RRC signaling. The derivable values (e.g., minimum values) may be defined in the technical specifications and expressed as in Table 3 below.

[Table 3]

| PRACH configuration period | Association period (number of PRACH association period) |
|---|---|
| 10 | {1,2,4,8,16} |
| 20 | {1,2,4,8} |
| 40 | {1,2,4} |
| 80 | {1,2} |
| 160 | {1} |

For example, a PRACH configuration period may be derived on the basis of a PRACH configuration index indicated to the terminal 103. In Table 2, in a case where the PRACH configuration index is indicated as 11, since x equals to 2, a length of the PRACH configuration period may be regarded as 20 ms. Thereafter, a time required to map all SSB(s) to RO(s) may be derived according to the number of SSB(s). In Table 3, one of values {1, 2, 4, 8} may be selected. In a case where 4 is selected in Table 3, the length of a total period including four associated periods may be interpreted as 80 ms. That is, the length of each of the four associated periods may be 20 ms. Since the length of the total period including the four associated periods is 80 ms, an association pattern period may be repeated twice.

According to the exemplary embodiment, one SSB may be mapped to a plurality of ROs. Alternatively, the plurality of SSBs may be mapped to one RO. That is, in a case where the plurality of SSBs is mapped to one RO, multiple SSBs may be transmitted by using the same RO. The base station 101 may indicate mapping information between the SSBs and the RO to the terminal 103 by using RRC signaling. The mapping information between the SSBs and the RO may be ssb-perRACH-OccasionAndCB-PreamblesPerSSB.

The terminal 103 may derive (N, R) from ssb-perRACH-OccasionAndCB-PreamblesPerSSB. In (N, R), N may mean the number of SSBs mapped to one RO. In (N, R), R may mean the number of PRACH preambles. N may be greater than or equal to 1. In a case where N > 1, the plurality of SSBs may be mapped to one RO. Alternatively, N may be less than 1. In a case where N < 1, one SSB may be mapped to a plurality of ROs.

**[Method of supporting feature combination]**

In a mobile communication system, use cases may be distinguished starting from a transmission step of an Msg1 PRACH in order to support various use cases, features, or combinations of features. When there are many resources that may be allocated to a RACH, a separate RO may be allocated for each use case. However, in order to support more than two use cases in one RO, the use cases may be distinguished from each other by a preamble. For example, by RRC signaling that is broadcasted from a base station 101 or a serving cell, a terminal 103 may be indicated that PRACH preamble sets different from each other are allocated for each use case.

According to the conventional technical specifications, information on the transmission of PRACH and/or the derivation of RO resources may be included in RACH-ConfigCommon. FeatureCombinationPreamblesList included in RACH-ConfigCommon may be possibly considered.

The featureCombinationPreamblesList may include one or a plurality of FeatureCombinationPreambles.

The featureCombinationPreambles may include information for defining a PRACH preamble set. According to the exemplary embodiment, the FeatureCombinationPreambles may include at least one of a value at which a preamble index starts or the number of preambles. Moreover, the FeatureCombinationPreambles may additionally include FeatureCombination.

In FeatureCombination, whether use cases supported by the technical specifications are supported or not may be independently indicated. For example, the FeatureCombination includes at least redCap, smallData, nsag, and msg3-repetition, so that each use case may be expressed as supported (e.g., (true)) or not supported (e.g., (not true) or (false)). According to the exemplary embodiment, it may mean that the redCap is for a case of a terminal that supports reduced capability, the smallData is for a case of a terminal that supports small data transmission, the nsag is for a case of a terminal that supports network slicing, and the msg3-repetition is for a case of a terminal that supports a function capable of repeatedly transmitting Msg3 PUSCH.

According to the conventional technical specifications, ServingCellConfigCommon or SIB 1, which includes featurePriorities, may be received from the base station 101 or the serving cell. According to the exemplary embodiment, the ServingCellConfigCommon includes at least one of redCapPriority, slicingPriority, msg3-repetitions-Priority, or sdt-Priority, and FeaturePriority may be indicated. In addition, FeaturePriority is indicated as one of values 0, 1,..., 7, wherein lower values have higher orders. In a case where multiple values are indicated for featurePriorities, the terminal 103 may select a use case having the lowest value from a corresponding PRACH preamble set.

According to the conventional technical specifications, the terminal 103 may perform an operation of determining the applicability of valid ROs. A valid RO may mean an applicable RO notified to the terminal by the base station 101. "Applicable" may mean an RO, among valid ROs, suitable for its own current status and conditions (e.g., terminal functions, network conditions, service requirements, etc.).

Thereafter, for the valid ROs determined as applicable, an operation of determining availability may be performed. "Available" may mean a state where a resource among the valid ROs determined as applicable is actually available, i.e., a state where a resource is not currently in use and may be actually allocated and used without technical restrictions.

Thereafter, a step of determining selection may be performed for the valid ROs determined as available. The selection may mean selecting at least one RO from among the available ROs by taking into account network conditions, service quality requirements, user experience, etc. from among the valid ROs.

Here, a step of determining the validity of ROs (i.e., a step of determining valid ROs) is not necessarily required to be performed in advance. For example, a selection may be performed among applicable ROs, and then the step of determining valid ROs may also be performed. For example, the step of determining the valid ROs among the applicable ROs may be performed, and then the selection may be performed. For convenience of description, the methods described below assume that the step of determining the valid ROs is performed first, but the methods are not necessarily limited thereto.

According to the exemplary embodiments of the present disclosure, cases following Rel-15 NR, Rel-16 NR, and Rel-17 NR may be considered. A case where one of terminals following Rel-17 NR attempts to perform msg3-repetition is considered. For convenience of description, an operation of checking whether reference signal received power (RSRP) of an SSB exceeds or does not exceed a threshold is referred to as a first condition. For convenience of description, it is referred to as first configuration information for Rel-15/16 and second configuration information for Rel-17. The reason why this information is distinguished is that partitioning of a PRACH preamble set by using featurePriority is supported from Rel-17 NR, so configuration information may be indicated separately in order to support backward compatibility.

In a UL bandwidth part (a UL BWP), in a case where only a feature of msg3-repetition is supported, the first condition may not be tested. The Msg3-repetition may be considered applicable in a corresponding valid RO. Since there is only one feature, it may be regarded as to be selected as is. That is, in a case where the msg3-repetition feature is enabled in the UL BWP and the corresponding feature is the only feature, the corresponding feature may be applied directly without a complex condition test.

A valid RO indicated as msg3-repetition in the second configuration information for Rel-17 may be used. According to the exemplary embodiment, even when msg3 is transmitted once, a repetition factor may be regarded as 1. That is, this may mean that even though not transmitted repeatedly, msg3 may be processed as part of a repetitive transmission process.

In a UL BWP, in a case where two or more features (e.g., spatial division transmission (sdt) and msg3-repetition) are supported, the first condition is tested, "applicable or not applicable" is determined for each set of resources, and then whether to select or not may be determined. For example, when both sdt and msg3-repetition are determined to be applicable, the terminal 103 should select an optimal resource that supports the two functions. Through such a process, the terminal 103 may efficiently connect to the base station 101 and optimize service quality.

When the terminal 103 is determined to be in a cell center, it may determine that the Msg3-repetition is not applicable. The reason is that in a case of locating in the cell center, the terminal 103 experiences good signal quality, so it may be determined that the feature such as Msg3-repetition is not required.

In the case where the terminal 103 is in the cell center, the msg3-repetition may be determined as "not associated with any feature indication" for the valid RO indicated in the first configuration information.

For other valid ROs indicated in the second configuration information, msg3-repetition may be determined as "not available", and other features (i.e., sdt) may be determined as "applicable", but the msg3-repetition may be determined as "not available" because a random access procedure of the terminal 103 is triggered to perform the msg3-repetition.

In such a case, the terminal 103 selects a resource that is "not associated with any feature indication", which may be derived as the first configuration information.

When a terminal 103 is determined to be at a cell edge, it may be determined that Msg3-repetition is applicable.

This is because the terminal located at the cell edge generally have weak signal strength and may have difficulty connecting to a base station.

For a valid RO indicated by the first configuration information, it may be determined as "not associated with any feature indication". That is, the valid RO indicated by the first configuration information may be configured without considering Msg3-repetition.

For other valid ROs indicated in the second configuration information, msg3-repetition is determined to be "available", and other features (i.e., sdt) are determined to be "applicable", but it may be determined to be "not available" because the random access procedure of the terminal is triggered to perform the msg3-repetition. The terminal selects a resource indicating that the msg3-repetition is available, and this may be a valid RO according to the second configuration information.

Through such a process, the terminal located at the cell edge may select optimal resources that may improve network access and enhance communication quality, so that overall network performance and user experience may be improved.

According to another exemplary embodiment of the present disclosure, a valid RO that supports both Msg3-repetition and sdt may be considered. According to the exemplary embodiment, a terminal attempting to perform sdt may perform the random access procedure after it is already known as "sdt applicable" in the higher layer through MAC. By performing comparison for the first condition, it may be determined whether Msg3-repetition is "applicable" or "not applicable".

However, since the random access procedure was triggered for sdt, only the sdt may be determined as "available". Accordingly, a valid RO may be selected for the sdt.

PRACH repetition refers to a procedure in which a terminal repeatedly transmits a PRACH preamble multiple times. The PRACH repetition is useful in environments having weak signals, and may increase a probability that a receiving base station 101 will detect access attempt of a terminal through multiple repetitions. A repetition factor may correspond to the number of times the terminal has transmitted preambles.

PRACH sweeping refers to a procedure in which a terminal 103 transmits PRACH preambles by applying various Tx beams. The terminal 103 transmits preambles applied with Tx beams different from each other across multiple ROs, whereby the PRACH sweeping may increase a probability of successful access attempt in other ROs even in a case where reception is not normal in a specific RO. A sweeping factor may indicate the number of Tx beams that the terminal 103 applies to the preambles.

According to the exemplary embodiment, in a case where PRACH repetition (or PRACH sweeping) is supported, the PRACH repetition is supported in an RO having the same features as those following the conventional technical specifications, whereby a PRACH preamble set may be additionally partitioned.

The terminal 103 may select one value from among a plurality of repetition factors/sweeping factors. Each repetition factor/sweeping factor that may be supported in a base station 101 or a serving cell may be indicated to have a separate feature priority for each repetition factor/sweeping factor. For example, the base station 101 may assign a higher priority to a higher repetition factor, thereby inducing the terminal 103 to select the higher repetition factor in an area where signals are weak.

Alternatively, the PRACH repetition (or PRACH sweeping) may be regarded as a single use case and given one feature priority. For example, a single feature priority for Msg1 may be configured by RRC signaling, and all repetitions for Msg1 may use the same feature priority.

<u>Method 1:</u> feature combinations and/or use cases are regarded as separate and indicated, so that a PRACH preamble set may be partitioned for each repetition factor/sweeping factor. That is, a separate PRACH preamble set may be allocated for each repetition factor or sweeping factor. In this way, each factor may be optimized for specific communication environments or requirements.

According to the exemplary embodiment, the respective repetition factors/sweeping factors may be indicated with feature priorities different from each other. That is, the base station 101 may indicate which factor to use preferentially in a specific situation to the terminal 103. For example, in a situation where emergency communication is required, a repetition factor with a higher priority may be selected. In this case, the terminal 103 may support repetition factors/sweeping factors different from each other in the same RO. Accordingly, the terminal 103 may select various transmission strategies according to indications of the base station 101.

<u>Method 2:</u> For each repetition factor/sweeping factor, feature combinations and/or use cases may be considered as identical.

Parts of a PRACH preamble set may be derived from information indicating a feature combination and/or use case (or other RRC parameters belonging to corresponding information elements), and may correspond to respective repetition factors/sweeping factors.

For example, in a case where feature priorities are the same even though the repetition factors/sweeping factors are different, the PRACH preamble set may reflect each feature indication. That is, the PRACH preamble set may include the union of PRACH preambles corresponding to respective features.

**[Method of determining RO group]**

For a method of determining an RO group, a method of repeatedly transmitting Tx beams to be applied to PRACHs without changing, or a method of transmitting Tx beams to be applied to PRACHs with changing is considered. For convenience of description, the case where the Tx beams to be applied to the PRACHs are maintained and transmitted repeatedly may be referred to as PRACH repetition, and the case where the Tx beams to be applied to PRACHs are allowed to be changed and transmitted may be referred to as PRACH sweeping. However, the technical specifications do not necessarily distinguish between these methods by which the PRACHs are transmitted multiple times, or only one of these methods may be allowed to use.

The base station 101 may transmit an SSB and transmit Type 0-PDCCH CSS set/CORESET for the SSB. The terminal 103 may receive these, thereby receiving an MIB and system information (e.g., SIB 1). In a case where the SSB received by the terminal 103 has RSRP lower than a certain standard, it is required to extend the reach of the PRACHs. The terminal 103 may transmit the PRACHs multiple times by PRACH sweeping, PRACH repetition, or a combination thereof.

In a case when the terminal 103 is determined to perform the PRACH sweeping, a Tx beam that the terminal 103 applies to the PRACH sweeping may be derived from an SSB. In implementation, the Tx beam may be derived from an Rx beam from which the terminal receives the SSB, and the Tx beam may be applied to a PRACH and transmitted to the base station 101.

According to the conventional technical specifications, the terminal 103 may transmit a PRACH once and then monitor a search space set/CORSET in order to receive an Msg2 PDSCH. By using the system information, the terminal 103 may derive time resources and frequency resources of ROs. Depending on methods defined by the technical specifications, some ROs may or may not be valid. PRACH transmission may be considered only in ROs that deem it valid. An RO that is determined to be valid may be referred to as a valid RO.

In a case where a slot pattern (i.e., tdd-UL-DL-ConfigurationCommon) is not indicated to the terminal, in order for an RO to be valid, a PRACH slot should not be received before an SSB (i.e., for a valid RO, an SSB should be received the same time or before the PRACH slot), and receiving the PRACH slot should be started after receiving Ngap number of symbols apart from the last symbol of the SSB. A position of the SSB may be given by RRC signaling (e.g., ssb-PositionsInBurst in SIB 1 or in ServingCellConfigCommon). That is, the PRACH slot may be positioned after the SSB is received.

In a case where a slot pattern (i.e., tdd-UL-DL-ConfigurationCommon) is indicated to the terminal, in order for an RO to be valid, an RO should be configured with UL symbols or a PRACH slot should not be received before an SSB (i.e., for a valid RO, an SSB should be received the same time or before the PRACH slot), and receiving the PRACH slot should be started after receiving Ngap number of symbols apart from the last symbol of the SSB. A position of the SSB may be given by RRC signaling (e.g., ssb-PositionsInBurst in SIB 1 or in ServingCellConfigCommon).

According to the exemplary embodiment, the Ngap may be determined according to a subcarrier spacing (SCS) used by a PRACH preamble in the technical specifications. For example, when the SCS is 1.25 kHz or 5 kHz, the Ngap may be zero. When the SCS is 15 kHz, 30 kHz, 60 kHz, or 120 kHz, the Ngap may be two. When the SCS is 480 kHz, the Ngap may be eight. When the SCS is 960 kHz, the Ngap may be 16. In addition, in a case of PRACH preamble format B4, the Ngap may be zero.

The terminal 103 determines whether the RO to which the PRACH is transmitted is valid or invalid, and when the RO is determined to be valid, the PRACH may be transmitted. However, in some cases, the PRACH may not be transmitted.

According to the conventional technical specifications, operation may be performed with a single serving cell, or contiguous carrier aggregation (CA) may be performed in the same frequency band, or non-contiguous CA may be considered in the same frequency band.

Considering a case where an RRC parameter (i.e., intraBandNC-PRACH-simulTx-r17) is not indicated, there may occur a case where the terminal 103 does not transmit a PRACH, a PUSCH, a PUCCH, and an SRS in the same slot. In this case of the slot, the slot may be derived by comparing the SCS of UL BWPs where the PRACHs are to be transmitted and the SCS where the PUSCH, PUCCH, and SRS are to be transmitted, and by using a smaller SCS.

Alternatively, for a first slot in which a PRACH is to be transmitted and a second slot in which a PUSCH, a PUCCH, and an SRS are to be transmitted, even a case where the first or last symbol of the first slot and the first or last symbol of the second slot are separated by less than N symbols is regarded as a case where the terminal 103 does not transmit the PRACH, the PUSCH, the PUCCH, and the SRS in the same slot. According to the exemplary embodiment, values of N may be given differently depending on SCSs. For example, an SCS is given as 2 in a case of 15 kHz or 30 kHz, an SCS is given as 4 in a case of 60 kHz or 120 kHz, an SCS is given as 16 in a case of 240 kHz, and an SCS is given as 32 in a case of 480 kHz. According to the exemplary embodiment, an SCS is given as the smaller SCS by comparing the SCS of UL BWPs where the PRACHs are to be transmitted and the SCS of UL BWPs where the PUSCH, PUCCH, and SRS are to be transmitted.

According to the exemplary embodiment, when a PUSCH is indicated as PUSCH repetition type B, the above-described PRACH transmission may be determined for each PUSCH repetition (or each PUSCH instance).

Next, a case where a random access procedure is indicated by PDCCH order is considered. When a PRACH is transmitted in a selected RO, a difference between the last symbol that received the PDCCH order (i.e., the last symbol of a CORESET associated with a search space set in which the PDCCH order was detected) and the first symbol of the PRACH transmission should be equal to or greater than a predetermined time (ms) (i.e., Equation 1).

$$[\text{Equation 1}]$$

$$N_{T,2} \; + \; \Delta_{\text{BWPSwitching}} \; + \; \Delta_{\text{Delay}} \; + \; T_{\text{switch}}$$

In Equation 1, $N_{T,2}$ is a length of N2 symbols, and may be related to a PUSCH preparation time according to the processing capability 1 of a terminal. The processing capability requires an SCS as a parameter, and may be given a smaller SCS by comparing the SCS of the UL BWPs where the PRACHs are to be transmitted and the SCS where the PUSCH, the PUCCH, and the SRS are to be transmitted. For example, when an SCS of the PRACH is performed at 1.25 kHz or 5 kHz, the terminal should derive an appropriate N2 value for the PUSCH by considering an SCS value in order to derive N2. In this case, the terminal should determine the SCS required for actual PUSCH transmission on the basis of the processing capability thereof and given SCS value, and derive a N2 symbol length through the SCS.

In Equation 1, a value of $\Delta_{\text{BWPSwitching}}$ may be given separately in the technical specifications when a BWP changes, or may be regarded as zero in a case where the BWP does not change.

Referring to Equation 1, a value of $\Delta_{\text{Delay}}$ may be given as 0.5 ms in FR1 and 0.25 ms in FR2. In addition, a value of $T_{\text{switch}}$ may be a switching gap duration given in the technical specifications.

According to the exemplary embodiment, it may be considered that the terminal 103 does not support simultaneous transmission of an SRS and a PRACH, or that the terminal 103 is not indicated with a specific RRC parameter (i.e., intraBandNC-PRACH-simulTx-r17) in "intra-band non-contiguous CA band combination". In this case, the terminal 103 may not be indicated to transmit the SRS and PRACH simultaneously on carriers different from each other.

In a case where PRACH repetition (or PRACH sweeping) is transmitted, all PRACH transmissions may be performed in one RO group. According to the exemplary embodiment, PRACH transmission may be regarded as one RACH attempt.

A repetition/sweeping factor is determined as any one of values indicated to the terminal and may be equal to the number of valid ROs belonging to the RO group.

For example, in a case where one value is indicated to the terminal 103 as the repetition/sweeping factor, the number of valid ROs belonging to the RO group may be equal to this value. That is, the terminal may repeat the PRACH transmission as many times as the indicated repetition/sweeping factor or perform the transmission by using beam sweeping.

For example, in a case where a plurality of values are indicated to the terminal 103 as repetition/sweeping factors, each one of the values may be equal to the number of valid ROs belonging to a corresponding RO group. That is, the terminal 103 may repeat the PRACH transmission in different RO groups for the respective repetition/sweeping factors or perform the transmission by using the beam sweeping.

## [Drop of RO]

In a case of ROs belonging to an RO group, transmission of a PRACH and transmission of another UL signal/channel may collide with each other. In the case of the conventional technical specifications (e.g., Rel-17 NR), the terminal 103 may select either the UL signal/channel or the PRACH. In an occasion, after the PRACH is determined to be dropped, the terminal 103 may not transmit the PRACH in a corresponding RO. In addition, a PRACH that is not transmitted may not be retransmitted thereafter. Accordingly, the terminal 103 may transmit the PRACH fewer times than the repetition/sweeping factor.

According to the exemplary embodiment, in the terminal 103, the number of valid ROs may be interpreted as being the same as a repetition/sweeping factor, whereby an RO group may be derived. However, in some of these valid ROs, PRACH transmission may be dropped. In such a case, the number of times that PRACHs are actually transmitted by the terminal 103 may be less than the repetition/sweeping factor.

In addition, in a case where transmission of a PRACH is dropped for a given reason, the terminal 103 may not select a corresponding RO group. In addition, when the terminal 103 is able to predict that a UL signal/channel is transmitted, it may be determined that the UL signal/channel overlaps with some of valid ROs belonging to a certain RO group. In such a case, the terminal 103 may not select the corresponding RO group. In contrast, transmission of a UL signal/channel may occur while the terminal 103 is performing PRACH repetition (or PRACH sweeping). For example, an indication from the base station 101 may be received by a terminal by using DCI. In such a case, the terminal 103 may not predict dropping the PRACH. Accordingly, it is preferable to specify the operation for transmitting the remaining PRACHs.

For convenience of description, since there may be multiple ROs associated with a PRACH cancelled, an RO that is positioned first in time among the ROs associated with the PRACH cancelled should be considered. For convenience of description, this is referred to as a "cancelled first valid RO".

According to the exemplary embodiments of the present disclosure, in a case where a cancelled first valid RO is predicted, the terminal may not use a corresponding RO group.

<u>Method 3:</u> A terminal 103 may not perform RACH attempt in an RO group expected to be cancelled. However, depending on the time predicted by the terminal 103, it may be determined that PRACH transmission is performable for some ROs belonging to the RO group. When the PRACH transmission is determined to be performable and the PRACH transmission is performed, it may be assumed that the terminal 103 transmits all parts of preambles.

When the PRACH is not received in some ROs, the base station 101 may fail to detect a PRACH preamble. In such a case, the terminal 103 may no longer perform the PRACH transmission in a corresponding RO group.

<u>Method 4:</u> The terminal 103 may transmit PRACHs with the number of times less than a repetition/sweeping factor by using only some of valid ROs of a selected RO group.

According to the exemplary embodiment, a PRACH may not be transmitted from the time at which a cancelled first RO is predicted. That is, a PRACH may not be transmitted in some of preceding ROs, including the cancelled first RO. In such a case, a time point at which the cancelled first RO is derived may be derived by using variables indicated in the technical specifications and/or RRC signaling.

According to another exemplary embodiment, RACH attempt may be performed even though a cancelled first valid RO is predicted. In such a case, it may be assumed that all valid ROs located before the cancelled first valid RO have PRACHs transmitted.

According to a yet another exemplary embodiment, in valid ROs located after a cancelled first valid RO, PRACH transmission may be restarted or the PRACH transmission may no longer be performed. Depending on a condition under which PRACH transmission is supposed to be cancelled, a PRACH may be dropped from an additional valid RO.

<u>Method 5:</u> In a case of predicting some of PRACH repetitions (or sweeping factors) to be dropped, a terminal 103 may transmit a PRACH as is that is not dropped.

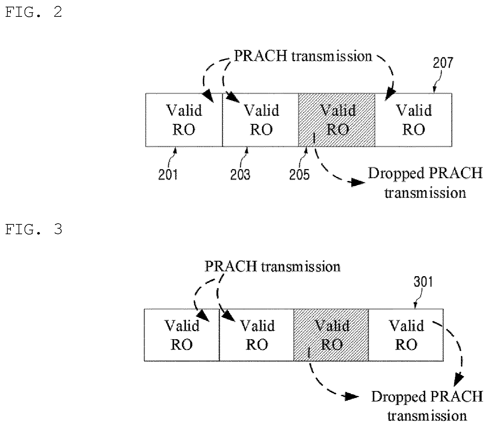

FIG. 2 is a view illustrating a first exemplary embodiment in which PRACH transmission is resumed after PRACH transmission is cancelled in some ROs in an RO group according to the exemplary embodiments of the present disclosure. The proposed method may be easily extended and applied even when other repetition/sweeping factors (e.g., 2, 4, or 8) are indicated to a terminal and/or a cancelled first valid RO is located in a different position in an RO group.

Referring to FIG. 2, PRACHs may be transmitted in a first RO 201, a second RO 203, and a fourth RO 207. Since PRACH preambles may be detected even though only three PRACHs are received at a base station 101, it is preferable for the PRACHs to be received in the remaining ROs belonging to a selected RO group even though some dropping occurs as in a valid RO 205.

In addition, the operation of dropping a PRACH in a valid RO may only be involved in the physical layer, and may not have any separate influence on the higher layer. Following method 5, RACH-related counters (e.g., a BI counter, a ramping counter, etc.) may be independent of whether the PRACH is dropped or not, and no changes may be required.

<u>Method 6:</u> In a case of predicting some PRACH repetitions (or sweeping) to be dropped, a terminal 103 may not transmit all of PRACHs that are not dropped.

FIG. 3 is a view illustrating the first exemplary embodiment in which PRACH transmission is dropped after the PRACH transmission is cancelled in some ROs in the RO group according to the exemplary embodiments of the present disclosure. The proposed method may be easily extended and applied even when other repetition/sweeping factors (e.g., 2, 4, or 8) are indicated to the terminal and/or a cancelled first valid RO is located in a different position.

Referring to FIG. 3, a PRACH may not be transmitted even in a fourth RO 301.

Since a PRACH preamble may not be detected when the base station 101 receives PRACHs less than four times, it is preferable for a terminal to have a minimized PRACH in an RO belonging to a selected RO group in order not to cause separate interference or in order to save battery life.

In addition, when a PRACH is dropped, this may be regarded as a case where RACH attempt was not performed. In such a case, a change to a RACH-related counter may be required at the higher layer. Alternatively, a time point for performing the change of the RACH-related counter may also be set on the basis of the last RO in an RO group.

<u>Method 7:</u> When an RO in which PRACH transmission is dropped occurs among valid ROs of a selected RO group, a terminal 103 may regard this case as that corresponding RACH attempt was not performed.

**[Nested structure]**

According to the exemplary embodiments of the present disclosure, RO groups corresponding to repetition/sweeping factors different from each other may have a nested structure. For convenience of description, in a case where the repetition/sweeping factors that may be supported by a base station 101 are limited to specific numbers (e.g., 2, 4, and 8), the RO groups having time resources different from each other may be referred to as an RO group (2), an RO group (4), and an RO group (8). That is, in the case where the repetition/sweeping factors supported by the base station 101 are 2, 4, and 8, the RO groups corresponding to respective factors may be defined as the RO group (2), the RO group (4), and the RO group (8). For example, in a case of the Nested structure, all ROs in the RO group (2) may overlap with specific ROs in the RO group (4), and ROs in the RO group (4) may overlap with specific ROs in the RO group (8).

In technical specifications, ROs belonging to an RO group (k) may also be forced to have the same frequency resources. Alternatively, separate resource indexes may also be indicated so as to have frequency resources different from each other. In such a case, when RO groups are indicated such that there is no ROs having the intersection of an RO group (2), an RO group (4), and an RO group (8), the consumption of UL resources is severe and it may sometimes be regarded as wasteful. Accordingly, it is preferable for the RO groups to have the intersection and have a nested structure.

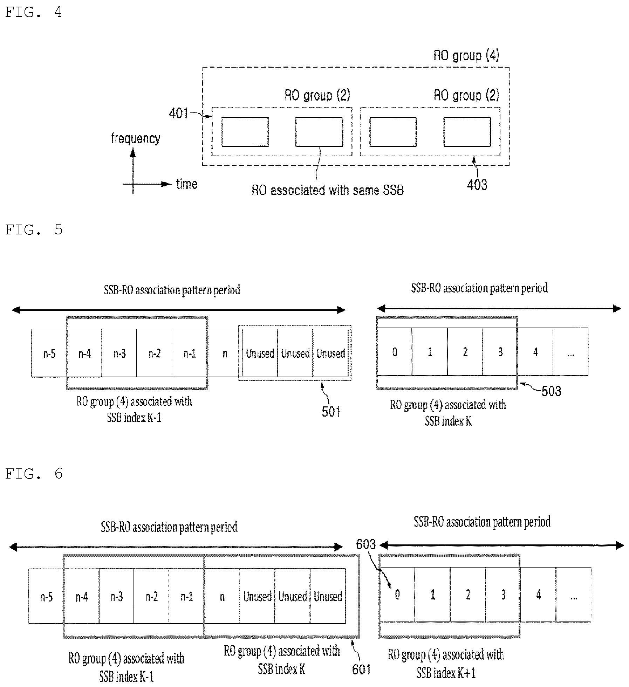

FIG. 4 a view illustrating a first exemplary embodiment of RO groups having a nested structure according to the exemplary embodiments of the present disclosure.

Referring to FIG. 4, an RO group (2) and an RO group (4) may be configured to overlap each other. The RO group (2) may be a subset of the RO group (4). In a case where the RO groups have a nested structure, the front two ROs and the rear two ROs within the RO group (4) may be interpreted as corresponding RO groups(2).

Referring to FIG. 4, RO groups with the same repetition/sweeping factor should not overlap each other and should not have any intersection. That is, the RO groups with the same repetition/sweeping factor should be independent of each other. For example, in FIG. 4, the RO group (2) 401 and the RO group (2) 403 that do not overlap each other may have the same repetition/sweeping factor.

In contrast, RO groups having the intersection should be distinguishable from each other by using PRACH preambles.

<u>Method 8:</u> In an RO group configured in a nested structure, a starting RO index is indicated and applied to an RO group having a small repetition/sweeping factor.

When the maximum repetition/sweeping factor supported by a serving cell is known to a terminal 103, a starting RO index may be easily derived. In such a case, rather than a separate starting RO index being indicated to the terminal 103, the time resources and frequency resources of the largest RO group are known, so that the time resources and frequency resources of smaller RO groups may be determined. That is, in a case where information on the time and frequency resources for the largest RO group based on the maximum repetition/sweeping factor is known to the terminal, the terminal may identify the starting RO index based thereon. The specific method is described in Method 9.

<u>Method 9:</u> In RO groups configured in a nested structure, resource locations of RO groups corresponding to other repetition/sweeping factors may be derived from a resource location of an RO group corresponding to the largest repetition/sweeping factor.

For example, in a case of an RO group configured with up to eight ROs in maximum, the base station 101 may derive the locations of an RO group (4) and an RO group (2). For example, in a case of an RO group configured with up to four ROs in maximum, the base station 101 may derive the location of an RO group (2). In addition, in the base station 101, an RO group (8) and an RO group (2) may be configured, but RO group (4) may not be configured. To this end, not only the maximum value of the repetition/sweeping factor, but also all values for which the repetition/sweeping factors are supported may be known from the system information.

That is, in a case where an RO group (8) is the largest group and resources therefor are determined, the resources of an RO group (4) and an RO group (2) may be determined according to the relative positions and sizes thereof within an RO group (8). By optimizing resource allocation among RO groups having repetition/sweeping factors different from each other in this way, resources for smaller RO groups may be determined on the basis of the largest RO group.

<u>Method 10:</u> The base station 101 may include only the largest repetition/sweeping factor in the system information, or may include all supported repetition/sweeping factors in the system information. In this way, a terminal 103 is enabled to identify the resource location of an RO group corresponding to a relevant repetition/sweeping factor, and based thereon, may infer the resource locations of RO groups having smaller repetition/sweeping factors.

According to the exemplary embodiments of the present disclosure, in a case where a repetition/sweeping factor is supported as a large value, ROs belonging to an RO group may be associated in one or more SSB-RO association periods. Alternatively, the ROs may be associated in one or more SSB-RO association pattern periods. According to the exemplary embodiment, the SSB-RO association periods or the SSB-RO association pattern periods may be derived from information indicated to terminals in order to support a PRACH that is transmitted only once.

An SSB-RO association period may be a period that defines how ROs are associated with a particular SSB. Accordingly, during the SSB-RO association period, the ROs are associated with the specific SSB and may transmit a PRACH corresponding to the corresponding SSB.

An SSB-RO association pattern period may be a period that defines how ROs are associated with various SSB in what patterns. Accordingly, during the SSB-RO association pattern period, the ROs may be associated with various SSBs.

<u>Method 11:</u> An RO group may be configured with only ROs belonging to one SSB-RO association period or one SSB-RO association pattern period. In the case of method 11, since all ROs are associated with the same SSB or the same SSB patterns, consistency within the RO group may be ensured.

__Method 12:__ ROs belonging to one or more SSB-RO association periods or one or more SSB-RO association pattern periods may also constitute one RO group. In the case of method 12, ROs in which each RO spans multiple SSB-RO association (pattern) periods, whereby the flexibility of a network may be increased.

For convenience of description, in a case where two or more SSB-RO association (pattern) periods are considered, they may be referred to as generalized SSB-RO association (pattern) periods or time periods.

**[Method of processing last RO group in nested structure]**

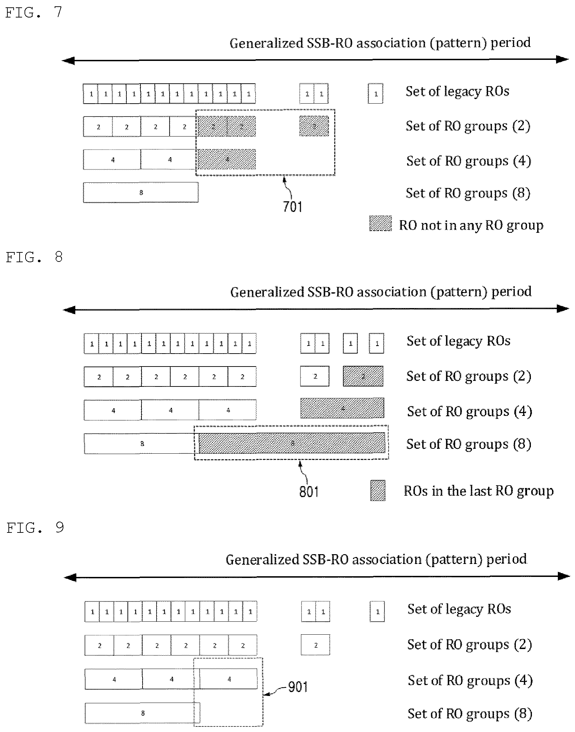

In a case where a plurality of repetition factors may be configured and RO groups are configured in a nested structure, some ROs belonging to a generalized SSB-RO association (pattern) period or one or more SSB-RO association (pattern) periods may be left behind. That is, a method of configuring an RO group having ROs located at the end of a predetermined reference period is described. FIG. 7 in which an RO group is not configured and FIG. 8 in which an RO group is configured may be considered.

__Method 13:__ ROs constituting an RO group may be configured to always overlap each other even for repetition factors different from each other. Method 13 is related to the exemplary embodiments of FIGS. 7 and 8.

FIG. 7 is a view illustrating a first exemplary embodiment in which an RO group is derived from one generalized association (pattern) period according to the exemplary embodiments of the present disclosure.

Referring to FIG. 7, FIG. 7 illustrates that repetition factors having 2, 4, and 8 may be supported. In a generalized SSB-RO association (pattern) period, RO groups corresponding to some repetition factors may not be defined in a case of leaving the nested structure. In FIG. 7, when an RO group (8) is configured, an RO group (4) and an RO group (2) are not defined as well so that the RO group (4) and the RO group (2) always overlap with the RO group (8). This represents ROs marked with hatching in 701. In addition, legacy ROs are not affected by this, so the legacy ROs may follow the conventional technical specifications. In addition, according to the exemplary embodiments of the present disclosure, this method may be applied even in a case where the generalized SSB-RO association (pattern) period is derived, indicated, or fixed regardless of the repetition factors.

FIG. 8 is a view illustrating a second exemplary embodiment in which an RO group is derived from one generalized association (pattern) period according to the exemplary embodiments of the present disclosure.

Referring to FIG. 8, FIG. 8 may illustrate a case where repetition factors having 2, 4, and 8 are supported. An aspect of having a nested structure is the same, but one period may be derived longer so that all ROs in 801 are used. For convenience of description, an RO group (2), an RO group (4), and an RO group (8) are represented as long rectangles in FIG. 8, but they may only occur at the intersection with a legacy RO, and for example, it may mean that the RO group (8) is configured with discontinuous ROs.

__Method 14:__ ROs constituting an RO group may be configured to overlap each other for repetition factors different from each other, and may not overlap with any RO group belonging to a generalized SSB-RO association (pattern) period. Method 14 is related to FIG. 9.

FIG. 9 is a view illustrating a third exemplary embodiment in which an RO group is derived from one generalized association (pattern) period according to the exemplary embodiments of the present disclosure.

Referring to FIG. 9, FIG. 9 illustrates a case where repetition factors having 2, 4, and 8 are supported. In one generalized SSB-RO association (pattern) period, an RO group may be configured for each repetition factor. In FIG. 9, an RO group (8), an RO group (4), and an RO group (2) are configured, and they are arranged to overlap with each other as much as possible, but some RO groups in 901 may not overlap with other RO groups.

Referring to FIG. 9, the RO group (4) always overlaps with the RO group (2), but may not overlap with the RO group (8) in 901. For example, an RO group ($k_2$) always overlaps with an RO group ($k_1$), but in some cases the RO group ($k_2$) may not overlap with an RO group ($k_3$), and in this case, a relationship $k_1 < k_2 < k_3$ may hold.

According to another exemplary embodiment of the present disclosure, a generalized SSB-RO association (pattern) period is derived from any one repetition factor, and this may also be applied when an RO group is configured for other repetition factors.

__Method 15:__ A generalized SSB-RO association (pattern) period is derived by using the largest repetition factor configurable, and this may also be applied when an RO group is configured for smaller repetition factors.

For example, in a case where repetition factors may be set to $k_1$, $k_2$, and $k_3$ (where, $k_1 < k_2 < k_3$), a generalized SSB-RO association (pattern) period may be derived by using the repetition factor $k_3$. The repetition factors $k_2$ and $k_1$ may be applied as is to the derived generalized SSB-RO association (pattern) period. Likewise, in a case where repetition factors may be set to $k_1$ and $k_2$ (where, $k_1 < k_2$), a generalized SSB-RO association (pattern) period may be derived by using the repetition factor $k_2$. The repetition factor $k_1$ may apply the derived generalized SSB-RO association (pattern) period as is.

**[Method of determining K in order to derive period of repetitive pattern (e.g., generalized association (pattern) period) considering RO group]**

According to the exemplary embodiments of the present disclosure, a predetermined value K may be explicitly indicated to a terminal or implicitly derived in order to derive one generalized SSB-RO association (pattern) period to be applied to all repetition factors. Alternatively, K may be a constant given in the technical specifications. According to the exemplary embodiment, K may represent a relationship between an SSB-RO association pattern period derived by using a legacy RO and the generalized SSB-RO association (pattern) period. That is, K number of SSB-RO association pattern periods are concatenated, and may be interpreted as one generalized SSB-RO association (pattern) period.

In a case where K is derived implicitly, a method in which the conventional technical specifications related to the SSB-RO association (pattern) period are applied in legacy ROs may be just extended and generalized to an RO group In this way, the maximum K value may be determined on the basis of a TDD slot configuration and SSB patterns, etc. That is, by way of analyzing how uplink and downlink transmissions are arranged in time on the basis of the TDD slot configuration and analyzing how a base station 101 transmits SSBs through an SSB pattern analysis, a K value may be determined on the basis thereof.

Accordingly, it is preferable to reduce the time taken for an RO group to be repeated for all SSBs. That is, a predetermined time is indicated in the technical specifications, and the maximum K that does not exceed this time is derived, or K may be explicitly indicated to a terminal.

**Method 16:** A predetermined time is introduced in the technical specifications and used in a process of determining K. According to the exemplary embodiment, the predetermined time may be determined as a single value (e.g., 160 ms), and K for determining a generalized SSB-RO association (pattern) period so that this period does not exceed the corresponding time may be derived.

**Method 17:** K may be indicated to a terminal 103.

According to the exemplary embodiment, K may be included in a SIB together with repetition factors and used to derive RO groups.

According to another exemplary embodiment, in a case where one repetition factor is set, K for an RO group may be derived according to the conventional technical specifications, and in a case where two or more repetition factors are set, a nested structure may be configured so that K may be configured to a terminal. Once K is determined, a generalized SSB-RO association (pattern) period may also be determined.

To this end, the method of determining a predetermined reference period (e.g., a generalized SSB-RO association (pattern) period or one or more SSB-RO association (pattern) periods) may be applied differently in Method 16 and Method 17. The predetermined reference period may mean the minimum time for determining that a shape in which "RO groups(k) for all configured k" are arranged is repeated in the same manner in units of system frame number or subframe in the higher layer other than the physical layer.

According to the exemplary embodiment, in a case where one or more repetition factors are set, a value of K may be the minimum K for which at least one or more "RO groups(k) for all configured k" are generated for all repetition factors. In such a case, the generalized SSB-RO association (pattern) period or one or more SSB-RO association (pattern) periods may have the different number of RO groups(k) belonging to depending on a repetition factor k.

According to the exemplary embodiment, in the case where one or more repetition factors are set, the value of K may be the minimum K for which at least one or more "RO groups(k) for all configured k" are generated for all repetition factors. In such a case, the generalized SSB-RO association (pattern) period or one or more SSB-RO association (pattern) periods may have the different number of RO groups(k) belonging to depending on the repetition factor k.

**[Method of interpreting orphan RO considering RO Group]**

According to the conventional technical specifications, ROs included in one SSB-RO association period are configured with ROs associated with respective SSBs, and such SSBs may mean all SSBs transmitted from a base station 101. In addition, one SSB-RO association pattern period may be derived by concatenating one or more integer SSB-RO association periods. According to the exemplary embodiment, the last ROs in an SSB-RO association pattern period may not belong to any SSB-RO association period. Accordingly, a terminal 103 may not transmit a PRACH for a corresponding RO. Orphan RO may refer to RO(s) that are not used for PRACH transmission among the last RO(s) of an SSB-RO association pattern period.

According to the exemplary embodiment, when an RO group is configured, the last ROs that do not belong to any SSB-RO association period may not be used. Since an associative relationship between certain ROs and an SSB is not derived from the conventional RACH procedure in the base station 101, a terminal may not be able to use the corresponding ROs, even though an RO group is configured.

**Method 18:** ROs that have not been used previously may not be included in an RO group.

Even when corresponding ROs are used, considering SSB indexes, the last ROs of the previous SSB-RO association pattern period may be associated with the last SSB index, and the first ROs of the subsequent SSB-RO association pattern period may be associated with the first SSB index. Accordingly, even though an RO group is configured, the ROs may not be used because the ROs should be associated with the same SSB index. That is, when certain ROs are associated with a different SSB index, these ROs may not be included in the same RO group.

That is, in order to reuse the existing SSB-RO association period and/or the existing SSB-RO association pattern period as a generalized SSB-RO association period and/or a generalized SSB-RO association pattern period, it is preferable that ROs belonging to an RO group belong to the same SSB-RO association period and/or SSB-RO association pattern period.

According to the exemplary embodiment, in a case of multi-PRACH transmissions using separate preambles for shared ROs, a rule of mapping from the existing SSB to an RO is reused, and only the RO for the SSB mapped to single PRACH transmission may be used for multi-PRACH transmissions.

<u>Method 19:</u> ROs belonging to an RO group may belong to the same SSB-RO association (pattern) period.

According to another exemplary embodiment of the present disclosure, when an RO group is configured, such ROs may be used. Since a base station 101 does not use ROs while the conventional RACH procedure is performed, a terminal is unable to know which SSB the corresponding ROs are associated with. Therefore, the base station 101 may indicate the SSB with which the corresponding ROs are associated.

In particular, in a case where a repetition/sweeping factor is a large value, an SSB-RO association period should be derived to be sufficiently large because many ROs separated in time are required. Accordingly, in order to solve this problem, when an RO group is configured, it is preferable to use ROs not used in the conventional technical specifications.

In such a case, when RO groups are configured from system information (or configuration information of a serving cell), practically all ROs may belong to at least one RO group. According to the exemplary embodiment, when one RO belongs to two or more RO groups, the repetition/sweeping factors of the RO groups may be different from each other.

For example, an RO group (k) and an RO group (1) may be configured in a nested structure or overlapped structure. Alternatively, for example, the RO group (k) and the RO group (1) may have SSB-RO association periods different from each other or SSB-RO association pattern periods different from each other.

FIG. 5 is a view illustrating a first exemplary embodiment in which an RO group is derived from one association pattern period according to the exemplary embodiments of the present disclosure. Specifically, FIG. 5 may be a view corresponding to method 18.

Referring to FIG. 5, some ROs 501 are unused, and ROs 503 may be considered from the next SSB-RO association pattern period. Accordingly, the ROs 503 where SSB index K starts may be classified and valid ROs and applicable or available ROs in the conventional technical specifications as well. According to the exemplary embodiment, considering the conventional technical specifications, SSB index K may be SSB index 0 (where, K = 0). That is, the number of SSB indexes to which PRACH repetition/sweeping may be applied is K, where, SSB indexes are 0, 1,..., K-1.

FIG. 6 is a view illustrating a second exemplary embodiment in which an RO group is derived from one association pattern period according to the exemplary embodiments of the present disclosure. Specifically, FIG. 6 may be a view corresponding to method 19.

Referring to FIG. 6, an RO group may be configured by additionally using unused ROs in the conventional technical specifications. Accordingly, an RO group 601 corresponding to SSB index K may be different from the conventional technical specifications. According to the exemplary embodiment, considering the conventional technical specifications, SSB index K+1 603 may be SSB index 0 (where, K = 0). That is, the SSB indexes to which PRACH repetition/sweeping may be applied are 0, 1,..., K (i.e., K + 1 in total), so the number of SSB indexes may increase by 1 compared to that when Method 18 is applied.

**[Method of selecting starting RO after RO group is configured]**

After each RO group is configured, a terminal may perform contention-based random access (CBRA) or contention-free random access (CFRA) in order to minimize a collision probability. In a case where too many terminals perform CBRA or CFRA for the same RO group (k), the collision probability may increase. Accordingly, in order to reduce the collision probability, a base station 101 may configure or indicate the terminal to set an RO offset or a time offset through RRC signaling.

For one (generalized) association pattern period, a starting RO may be determined. Thereafter, ROs that are consecutive in time and transmitted on the same frequency resource may be selected. According to the exemplary embodiment, the number of selected ROs may be equal to a repetition factor (k). For convenience of description, when this is called as an RO group (k), the RO offset may be applied to an RO group 1 (k) and the next RO group 2 (k). That is, an RO derived by adding the RO offset to the last RO of the RO group 1 (k) may be the same as the first RO of the RO group 2 (k). Alternatively, the first RO in the RO group 2 (k) may be a valid RO that occurs thereafter.

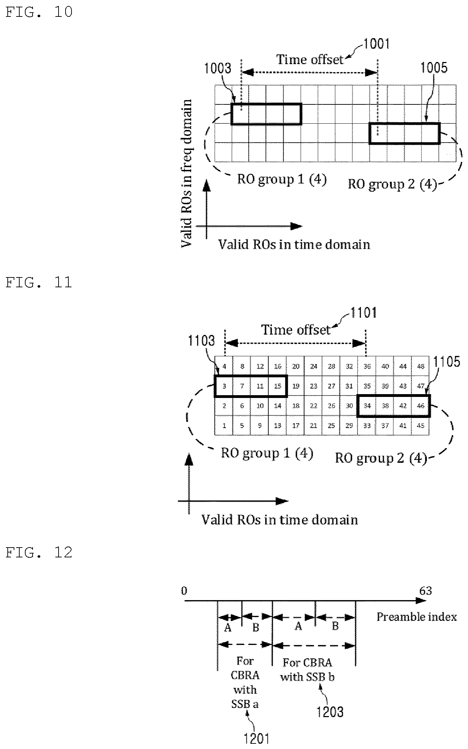

FIG. 10 is a view illustrating a first exemplary embodiment in which RO groups are configured when a time offset is applied according to the exemplary embodiments of the present disclosure.

Referring to FIG. 10, for a specific SSB, valid ROs may be derived from time resources and frequency resources. In a case where a terminal determines that a repetition factor is 4, an RO group 1 and an RO group 2 may be selectable. According to the exemplary embodiment, the first RO belonging to the RO group 1 and the first RO belonging to the RO group 2 may have a predetermined period (i.e., a time offset or an RO offset). The terminal may select the RO group 1 or the RO group 2 in order to perform CBRA or CFRA.

Referring to FIG. 10, a time offset 1001 is 8 in the case of FIG. 10, but other values are also assignable thereto. According to the exemplary embodiment, the time offset may only be an integer multiple of a repetition factor. According to another exemplary embodiment, not only the time offset is necessarily the integer multiple of the repetition factor, but also other values thereof may also be accepted.

RO offsets may be added together in time. That is, according to the exemplary embodiment, when converted to an RO index, a starting RO may be derived as a value obtained by multiplying the repetition factor. Alternatively, according to another exemplary embodiment, the RO offset may not be the integer multiple of the repetition factor.

According to a yet another exemplary embodiment, an RO offset may be interpreted as an RO index. That is, a starting RO may be derived by regarding the RO offset as a value that has already been multiplied by the repetition factor. Therefore, the first ROs of an RO group 1 (k) 1003 and an RO group 2 (k) 1005 may differ by at least an RO offset (k). According to the exemplary embodiment, the RO offset (k) means the RO offset that is given differently for each repetition factor (e.g., k). For convenience of description, the RO offset may also be referred to as a time offset.

FIG. 11 is a view illustrating a second exemplary embodiment in which RO groups are configured when a time offset is applied according to the exemplary embodiments of the present disclosure.

Referring to FIG. 11, when it is assumed that nFDM (i.e., the number of ROs in the same time) is 4, a time offset may be 31 in a case of converting a time offset 1101 into an RO index difference. Since an RO index of the first RO of an RO group 1 (4) 1103 is 3 and an RO index of the first RO of an RO group 2 (4) 1105 is 34, the time offset may be 31 in a case of converting the time offset 1101 into the RO index difference.

A time offset may be indicated to the terminal as a separate value for each repetition factor. Accordingly, from the perspective of the base station 101, when any terminal performs a random access procedure, RO groups different from each other may be available or unavailable for repetition factors different from each other.

The density at which PRACH repetition/sweeping is used may be reduced by using a time offset. According to the exemplary embodiment, an RO where the legacy PRACH procedure and PRACH repetition/sweeping coexist and an RO where they do not coexist may be distinguished by the time offset. For the RO not provided with the coexistence, it is preferable that a preamble set assigned to the PRACH repetition/sweeping is not allocated.

According to the conventional technical specifications, a terminal 103 may use some of a maximum of 64 PRACH preambles in one RO for random access and the rest thereof are used for a system information request. Some of the PRACH preambles used for the random access may be used for CFRA, and the rest may be used for CBRA.

FIG. 12 is a view illustrating an exemplary embodiment in which preamble sets used in one RO are allocated according to the exemplary embodiments of the present disclosure.

Referring to FIG. 12, the terminal 103 may perform SI requests, or may select one of CFRA or CBRA, select a PRACH preamble set accordingly, select a PRACH preamble within the PRACH preamble set, and transmit a PRACH in a corresponding RO.

In a case where the CBRA is performed, one or more SSBs and one RO may be associated. FIG. 12 illustrates a case example where two SSBs correspond to one RO. Depending on the ratios of SSB-RO association, the PRACH preamble used in the CBRA may be used as a whole without the concept (or the configuration) of group, or may be divided into group A in 1201 and group B in 1203, which are corresponding to respective SSBs.

The terminal 103 may perform at least one of network slicing, small data transmission, msg3 repetition, or msg1 repetition (i.e., PRACH repetition/sweeping). This may be interpreted as supporting a separate feature, so a PRACH preamble set may be further subdivided.

According to the exemplary embodiment, a PRACH preamble set partition may be indicated or configured to the terminal(s) 103 in an SIB. A start index of a PRACH preamble set and the number of preambles may be known.

In a case where a time offset is indicated or configured, a terminal 103 should use the time offset as well as information received in SIB 1 in order to derive an RO group.

According to the exemplary embodiment, the time offset may belong to SIB 1 or may be derived from other information belonging to the SIB 1.

According to the exemplary embodiment, in order to determine an RO group, only valid ROs may be selected as a first operation. As a second operation, RO groups according to a repetition factor may be determined among the valid ROs, and by considering this, a (generalized) association pattern period may be determined. As a third operation, RO groups may be derived again on the basis of a time offset (or an RO offset based on an RO index). In a case where the time offset is not indicated or configured, the third operation may be omitted.

For each repetition factor, an RO group may be determined by considering a time offset. Accordingly, compared to a case where the time offset is not considered, RO groups may be derived by using only a portion of the ROs belonging to the (generalized) association pattern period in the case where the time offset is considered.

According to the exemplary embodiment, when a time offset is considered among ROs, an RO that does not belong to an RO group may only be used as a legacy CBRA (or CFRA). In this case, a PRACH preamble set may be derived from a parameter corresponding to the legacy CBRA (or CFRA). In addition, the PRACH preamble set usable in the RO group may not be used for other use.

According to another exemplary embodiment, when a PRACH preamble set allocated for an RO group does not belong to the RO group when a time offset is considered among ROs, it is preferable that the PRACH preamble set allocated for the RO group may be used for other use.

**Method 21:** For an RO group (k) derived by considering both a repetition factor k and a time offset, an RO belonging to the RO group (k) may be used in a PRACH preamble set associated with the repetition factor k.

**Method 22:** For an RO group (k) derived by considering both a repetition factor k and a time offset, in ROs not belonging to the RO group (k), a PRACH preamble set associated with the repetition factor k may be used for other use and may be used as a legacy CBRA associated with the same SSB (i.e., k = 1).

Therefore, according to methods 21 and 22, by applying an RO offset (k), the terminal 103 may interpret differently a PRACH preamble set applied in the ROs belonging to the RO group (k) and a PRACH preamble set applied in the ROs not belonging to the RO group (k).

According to the exemplary embodiment, a SIB may not require separate signaling for this. That is, among the PRACH preamble sets, a PRACH preamble set associated with a specific SSB may be used for the use of fallback (i.e., k = 1), thereby allowing the PRACH preamble set to be interpreted differently without the separate signaling.

In contrast, in a case where separate signaling is added in the SIB so that a time offset is indicated or configured to the terminal 103, the use of a PRACH preamble set may be indicated or configured in an RO that does not belong to an RO group (k) corresponding to some repetition factors. For example, when the terminal 103 considers the values of k and time offsets (k), the use and range of PRACH preamble sets for each of these combinations may be indicated or configured to the terminal 103.

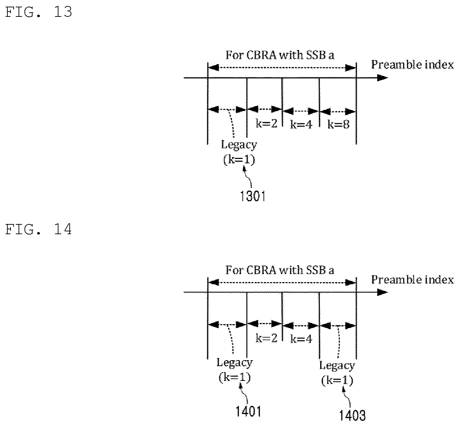

FIG. 13 is a view illustrating a first exemplary embodiment in which preamble sets corresponding to several repetition factors are allocated to one SSB according to the exemplary embodiments of the present disclosure. FIG. 13 may correspond to method 21.

Referring to FIG. 13, FIG. 13 illustrates an RO 1301 in which k = 2, 4, and 8 is applied and a legacy operation (i.e., k = 1) is supported. A PRACH preamble set may be partitioned into four parts. In a case where an RO offset (k) is not indicated or configured or a time offset (k) is applied, a corresponding RO may belong to an RO group (k).

FIG. 14 is a view illustrating a second exemplary embodiment in which preamble sets corresponding to several repetition factors are allocated to one SSB according to the exemplary embodiments of the present disclosure. FIG. 14 may correspond to method 22.

Referring to FIG. 14, only k = 2 and 4 is able to be applied in FIG. 14, and an RO group (k) 1403 for k = 8 may not be considered. In this case, the terminal 103 may reuse a PRACH preamble set 1403 corresponding to k = 8 and use it as a PRACH preamble set 1401 for k = 1.

In the same way, methods 21 and 22 may be applied to cases where k has different values.

According to the exemplary embodiment, the PRACH preamble set for legacy RA and the PRACH preamble set for PRACH repetition may indicate or configure preamble sets overlapping each other.

According to the conventional technical specifications, in order to represent a preamble set for legacy RA, a start index of preambles and the number of preambles may be represented. In addition, for a specific k, the start index of the preambles and the number of preambles may be shown. Both represent features different from each other and may represent mutually disjoint preamble sets. According to the exemplary embodiment, any one feature from the overlapping preamble sets may be used.

**Method 23:** Preamble sets for legacy RA may be indicated or configured to include preamble sets corresponding to repetition factors k (where k > 1). In a case where both of the legacy RA and PRACH repetition are performed in one RO, only a portion of the preamble sets for the legacy RA is used, so only the complement of the preamble sets corresponding to a condition (k > 1) may be used.

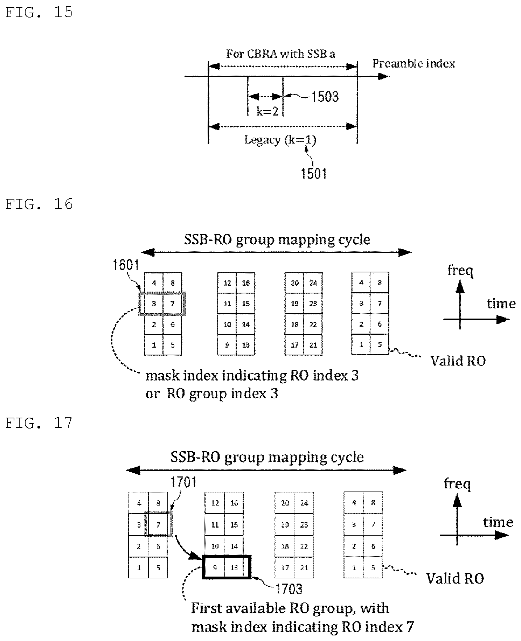

FIG. 15 is a view illustrating a third exemplary embodiment in which preamble sets corresponding to several repetition factors are allocated to one SSB according to the exemplary embodiments of the present disclosure. FIG. 15 may correspond to method 23.

Referring to FIG. 15, FIG. 15 illustrates a method in which a repetition factor (k = 2) 1503 and legacy RA 1501 are generated in the same RO and a preamble set is divided. The preamble set used in the legacy RA may be indicated or configured to include a preamble set 1503 applicable to k = 2. A terminal 103 may select a PRACH preamble that may be used for PRACH repetition from the preamble set applicable to k = 2. In a case where the terminal 103 performs the legacy RA, a PRACH preamble may be selected only from a preamble index other than the preamble set applied to k = 2.

According to the exemplary embodiment, the example in FIG. 15 and method 23 may be easily extended even in a case where other k is supported. For example, for k1 # k2 > 1, where k1 and k2 are different from each other, PRACH preamble sets having the intersection with each other may be indicated or configured, but in a case where both repetition factors for k1 and k2 are supported, PRACH preambles may be selected only from a difference set of the repetition factors.

In a case where PRACH preamble sets corresponding to two or more repetition factors are not mutually inclusive, a difference set and the intersection may be generated. In such a case, according to the exemplary embodiment, only repetition factors may be prioritized for selecting the difference set or the intersection.

<u>Method 24:</u> Priorities different from each other are introduced in repetition factors different from each other, so that a repetition factor for a higher priority (or lower priority) may use all preambles belonging to a PRACH preamble set, and a repetition factor for a lower priority (or higher priority) may use only preambles belonging to a difference set among preambles belonging to the PRACH preamble set.

For example, when PRACH preamble sets for k1 and k2 are considered, in a case where k1 has a higher priority, a PRACH preamble set corresponding to k1 is entirely used, and a PRACH preamble set corresponding to k2 may be used only a part thereof.

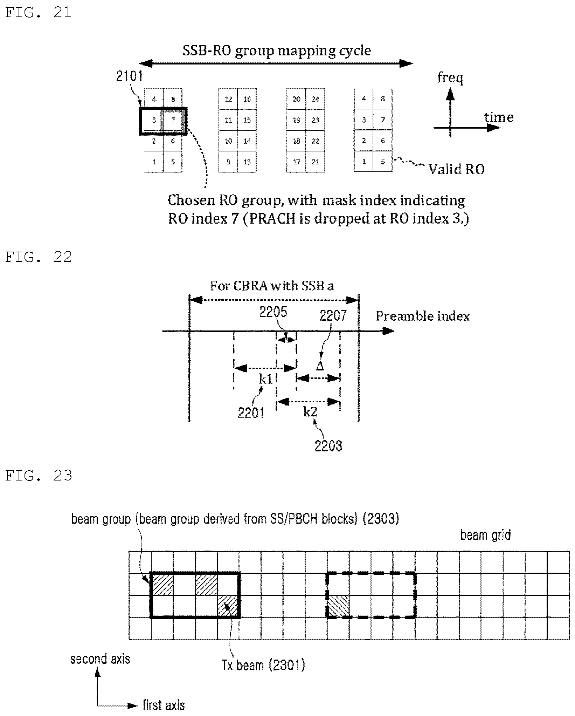

FIG. 22 is a view illustrating a fourth exemplary embodiment in which preamble sets corresponding to several repetition factors are allocated to one SSB according to the exemplary embodiments of the present disclosure.

Referring to FIG. 22, for k1 and k2, the intersection 2205 is generated between a PRACH preamble set 2201 corresponding to k1 and a PRACH preamble set 2203 corresponding to k2. According to method 24, k1 uses the whole PRACH preamble set, and k2 may use a part ($\Delta$) 2207 of the PRACH preamble set.

In a case where k1, k2, and k3 are considered, method 24 is applied pairwise multiple times, so that only a preamble belonging to a part of the PRACH preamble set may be used.

In a case where method 24 is to be applied, in the terminal 103, the priority of a repetition factor should be separately indicated or configured to the terminal 103, or the interpretation method of the repetition factor should be derived by the technical specifications. For example, when a value (i.e., 2, 4, or 8) of the repetition factor is larger, the intersection of the PRACH preamble sets may also be used. According to the exemplary embodiment, when interpreted in method 24, this may mean that the value of the repetition factor is immediately regarded as the priority of the repetition factor.

<u>Method 25:</u> When a value of a repetition factor is large, it may be interpreted that a priority for determining a PRACH preamble set is higher.

However, according to another exemplary embodiment proposed in the present disclosure, PRACH preamble sets may have a relationship in which the PRACH preamble sets may have a mutually inclusive relationship without generating the intersection or a difference set. In such a case, repetition factors different from each other may select preambles for only the difference set.

<u>Method 26:</u> PRACH preamble sets associated with two or more repetition factors may be indicated or configured so as to have a mutually inclusive relationship.

**[Method of supporting mask index in case where time offset is set when PRACH repetition is performed]**

According to the conventional technical specifications, in the case of CFRA, a mask index may serve a role in transmitting PRACHs to only some ROs. Resources (i.e., ROs) of CFRA are indicated by RRC signaling, and mask indexes may have values different from each other depending on the purpose of CFRA.

As shown in Table 4, a mask index may be meaningful in encompassing PRACH Mask Index, msgA-SSB-SharedRO-MaskIndex, and ssb-SharedRO-MaskIndex. For example, the PRACH mask index may be an index that determines whether to allow PRACH transmission for specific ROs in a CFRA procedure. The msgA-SSB-SharedRO-MaskIndex may be an index for determining which ROs are allowed to be used among ROs shared between a four-step RACH (or type-1 RACH) and a two-step RACH (or type-2 RACH). The ssb-SharedRO-MaskIndex may be an index for determining which RO(s) are allowed to be used among ROs shared by corresponding feature(s) or feature combination(s) thereof when the feature(s) or feature combination(s) thereof are indicated.

Time offsets may reduce a collision probability of terminals 103 by distributing RO groups(k) in time according to repetition factors. The time offsets may be used for similar purposes as the PRACH mask.

According to the exemplary embodiment, this method relates to a case where a method of applying a time offset and a method of applying a mask index are not performed in the same RO because PRACH repetition/sweeping is supported.

In addition, according to the exemplary embodiment, this method relates to a case where the RO offset is not applied when the mask index is indicated or configured.

<u>Method 27:</u> In a case where both a mask index and a time offset are indicated or configured, a terminal 103 may transmit a PRACH by applying only one of them.

<u>Method 28:</u> It may not be expected that a mask index is indicated or configured in an RO having a valid repetition factor.

According to the exemplary embodiment, separate RRC signaling may be required to indicated or configured a time offset without indicating or configuring a PRACH mask to a terminal 103.

<u>Method 29:</u> When a mask index is indicated or configured in CFRA, a terminal 103 may interpret this as a time offset indicated or configured for each repetition factor.

In another exemplary embodiment proposed in the present disclosure, a terminal 103 may transmit a PRACH at the intersection of a mask index and a time offset when both are indicated or configured.

The terminal 103 may derive a valid RO by using a mask index indicated in a PDCCH order, and the valid RO may be the first RO belonging to the first mapping cycle at the time the PDCCH order is received or after a predetermined amount of time has elapsed thereafter. Here, the mapping cycle may mean a time (or a resource) with which mapping of SSB-RO (group) is performed for all SSB indexes indicated to the terminal. According to the exemplary embodiment, in the PDCCH order, an SSB index and/or a PCI, or an additional cell id indicator may be indicated. In order to take the mapping cycle into account, RO groups may be derived for a given SSB index without considering a time offset. Thereafter, a generalized association (pattern) period may be derived. An RO group belonging to the first mapping cycle may be selected. The mask index may be applied thereafter.

<u>Method 30:</u> A terminal 103 may perform PRACH repetition by using an allowed RO only.

The terminal 103 may transmit only some ROs in an RO group. ROs that are not allowed in a mask index may not have a PRACH transmitted. The terminal 103 may regard a corresponding RO as PRACH dropping, and the number of PRACH transmissions may be determined by reinterpreting a separate dropping condition.

<u>Method 31:</u> A mask index may refer to an RO group. The RO group for which the mask index is interpreted may be the RO group derived without considering a time offset.

When selecting an RO group, a terminal 103 may transmit PRACHs in the number of ROs equal to the number of the repetition factors, and the number of times the PRACHs are transmitted may be determined according to the separate dropping condition.

In a case where a mask index does not mean one RO index, it may mean a plurality of RO indexes. Alternatively, it may mean all RO indexes, or even indexes, or odd indexes. Accordingly, in the terminal 103, the mask index without a specific pattern may simply be regarded as to indicate the first RO of an RO group. Alternatively, the terminal 103 may regard the mask index as to indicate an even RO group or an odd RO group in units of RO group.

According to the exemplary embodiment, a mask index may mean one RO index. Considering the mapping cycles of RO groups, an RO of an RO group may correspond to a mask index starting from a first available mapping cycle. Here, the mapping cycle may be interpreted as an SSB-RO mapping cycle or an SSB-RO group mapping cycle. Their detailed description will be given below.

For example, when an RO index is given as "a" (where, a = 1,...,8), an RO corresponding to the RO index a may be selected from the first RO group. Accordingly, each of RO groups may correspond to one mask index.

FIG. 16 is a view illustrating an example of RO groups in a case where a mask index is 3 according to the exemplary embodiments of the present disclosure.

Referring to FIG. 16, in a case where a mask index is indicated as 3, an RO group 1601 configured with RO indexes 3 and 7 may be selected. The mask index being indicated as 3 may be interpreted as being indicated as an RO index 3, but it may also be interpreted as being indicated as a third RO group.

However, when a mask index is taken into further consideration, a different interpretation method may be required.

FIG. 17 is a view illustrating an example of a first method of interpreting a mask index according to the exemplary embodiments of the present disclosure.

Referring to FIG. 17, a mask index may indicate to an RO index 7 1701. This may be interpreted to mean that the mask index indicates one RO, and more specifically, it may be interpreted to mean that the first RO index of an RO group is indicated. A terminal 103 may search for the RO group that may start from the RO index 7. Referring back to FIG. 17, this may be an RO group 1703 configured with RO indexes 9 and 13.

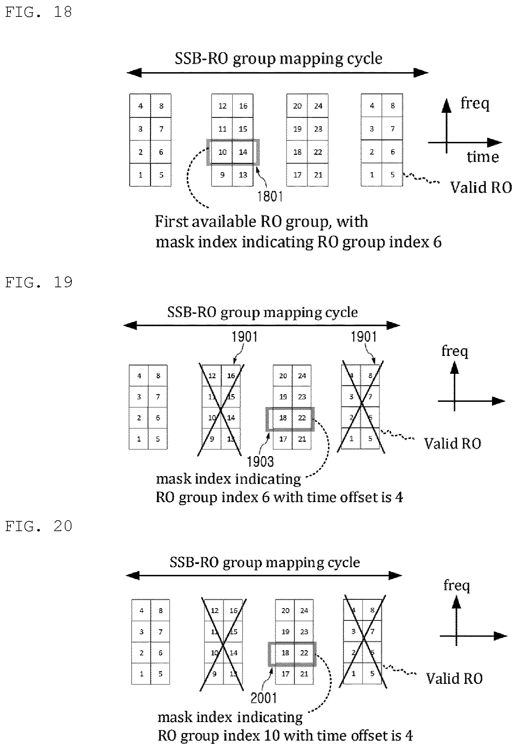

FIG. 18 is a view illustrating an example of a second method of interpreting a mask index according to the exemplary embodiments of the present disclosure.

Referring to FIG. 18, a mask index is interpreted in units of RO group, and in a case where the mask index indicates 6, a terminal 103 may select an RO group index 6. This may be configured with RO indexes 10 and 14 in 1801. Therefore, the interpretation method of the mask index according to the conventional technical specifications are unable to indicate such an RO group.

FIG. 19 is a view illustrating an example of a third method of interpreting a mask index according to the exemplary embodiments of the present disclosure. FIG. 19 illustrates an interpretation of a case where a time offset as well as a mask index are additionally considered.

Referring to FIG. 19, a mask index may be interpreted as an RO group index after a time offset is indicated. That is, a set of ROs is configured by using valid ROs, and the time offset may be applied thereafter. This may be consistent with the method applied in CBRA. Here, in a case of being triggered for reasons such as CFRA, this means that the mask index is additionally indicated. Accordingly, method 32 may be proposed.

<u>Method 32:</u> After a time offset is applied, a mask index may be applied to an RO group index.

Referring back to FIG. 19, a new mapping cycle may start by mapping all ROs (groups) corresponding to other SSB indexes at the time when 24 ROs are mapped. In FIG. 19, RO indexes 9 to 16 and RO indexes 1 to 8 may not be used because a time offset is additionally considered to indicate an RO group 1901. Since the mask index uses the first mapping cycle (or the earliest mapping cycle), unused RO indexes 1 to 8 may be distinguished from used RO indexes 1 to 8. In a case where the mask index indicates 6, a terminal 103 may select a sixth RO group 1903. This may be configured with RO indexes 18 and 22.

<u>Method 33:</u> An RO group index is interpreted as referring only to valid RO groups, so indexing or numbering of invalid RO groups may not be performed.

This may be regarded as a method of RO group indexing. This is because specifying an invalid RO group may result in wasted index.

Referring back to FIG. 19, in order to indicate an RO group configured with RO indexes 18 and 22, an RO index 18 may be indicated and an RO group having this as the first RO may be derived, or a tenth RO group including an invalid RO group may be indicated from the PRACH mask (see method 43 and FIG. 20) .

To clarify this, FIG. 20 may be referenced.

FIG. 20 is a view illustrating an example of a fourth method of interpreting a mask index according to the exemplary embodiments of the present disclosure. Both FIGS. 19 and 20 may be derived by using the same parameters, while having an exception that only respective mask indexes may be different.

Referring to FIG. 20, in order to indicate an RO group index 10, a mask index is different from that in FIG. 19.

<u>Method 34:</u> An RO group index is interpreted as all RO groups, so indexing or numbering of all valid or invalid RO groups may be performed. That is, by indicating a 10th RO group 1901 including the invalid RO group from the PRACH mask, an RO group 1901 having an RO index 18 may be indicated.

FIG. 21 is a view illustrating an example of a fifth method of interpreting a mask index according to the exemplary embodiments of the present disclosure. Both FIGS. 20 and 21 may be derived by using the same parameters, while having an exception that only respective mask indexes thereof may be different.

Referring to FIG. 21, in order to indicate an RO group index 7, a mask index is different from that in FIG. 20.

The mask index of FIG. 21 may be a mask index indicating an RO index 7 in a situation where an RO group 2101 is selected. In this case, PRACH transmission may be dropped at an RO index 3.

**[Method of determining repetition factor and transmission power when PRACH repetition is performed]**

A method of determining a repetition factor and Tx power is described. These are closely related to each other. This is because, considering a link budget of a PRACH, both of the Tx power and repetition factor may be used to compensate for path loss.

In a case where RSRP of an SSB received by a terminal 103 is determined to be too small, a repetition factor may be derived as 2 or more. In addition, when Tx power derived by using the RSRP of the SSB is not greater than $P_{CMAX,f,c}$ of the terminal 103, the repetition factor may also be derived as 1.

According to the conventional technical specifications, for a UL BWP b of a carrier f of a serving cell c, Tx power may be determined by referring to Equation 2. $P_{PRACH,target,f,c}$ is indicated in the higher layer and may correspond to a value (e.g., PREAMBLE _RECEIVED _TARGET _POWER) desired to be received by a base station 101. $PL_{b,f,c}$ may correspond to path loss derived by using the RSRP measured at a DL BWP of the carrier f of the serving cell c.

$$[\text{Equation } 2]$$

$$P_{PRACH,b,f,c} = \min\{P_{CMAX,f,c}, P_{PRACH,target,f,c} + PL_{b,f,c}\}$$

According to Equation 2, in a case where a value of $P_{PRACH,target,f,c} + PL_{b,f,c}$ is greater than $P_{CMAX,f,c}$, a terminal 103 may transmit Tx power by applying the $P_{CMAX,f,c}$. That is, the exemplary embodiment proposed in the present disclosure may compare the $P_{PRACH,target,f,c} + PL_{b,f,c}$ and the $P_{CMAX,f,c}$ in order to determine a repetition factor.

<u>Method 35:</u> A repetition factor greater than 1 may be selected only in a case where a value of $P_{PRACH,target,f,c} + PL_{b,f,c}$ is greater than $P_{CMAX,f,c}$.

In another exemplary embodiment proposed in the present disclosure, a repetition factor may be determined on the basis of RSRP. When the RSRP measured by using a received SSB is compared with boundary value(s), the repetition factor may be derived. To this end, a base station 101 may include one or more boundary value(s) in system information.

The system information may include one or more boundary values. A terminal 103 may receive the system information from the base station 101 and derive one or more boundary values $\gamma_0, \gamma_1, \gamma_2, \cdots$ from the system information. The terminal 103 may derive information about a period on the basis of the boundary value(s). The terminal 103 may interpret the information about the period as $\{x | \gamma_{n+1} \le x < \gamma_n\}$ or $\{x | \gamma_n \le x < \gamma_{n+1}\}$. In a case where only one boundary value is set or indicated to the terminal 103, the terminal 103 may interpret the information about the period as $\{x|-\infty \leq x < \gamma_n\}$ or $\{x|\gamma_n \leq x < \infty\}$. The information about the period may be appropriately interpreted according to a units of measurement of RSRP. The terminal 103 may derive the RSRP for an SSB by performing a monitoring operation (e.g., a measurement operation) for the SSB and determine the period to which the measured RSRP belongs. The terminal 103 may derive the number of transmissions of PRACHs according to the period to which the measured RSRP belongs.

<u>Method 36:</u> RSRP of an SSB may be measured and compared to boundary value(s), thereby determining a repetition factor.

Alternatively, some combination of the above two methods may be applied. According to the exemplary embodiment, one boundary value may be included in the system information, so that the RSRP measured by using the SSB selected by the terminal 103 may be compared with the boundary value. In a case where it is determined that the RSRP is less than the boundary value, the terminal 103 is determined to be in a boundary area of reach, and may start performing a procedure for calculating a repetition factor. This may be determined on the basis of Tx power. In a case where it is determined that the RSRP is not less than the boundary value, the terminal 103 is determined to be in the center area of the reach, and may determine a repetition factor as 1 among resources indicated to perform conventional random access or to perform PRACH repetition.

<u>Method 37:</u> RSRP of an SSB is measured and compared with one boundary value, so that in a case where it is determined that a terminal 103 is in a boundary area of reach, a repetition factor may be determined on the basis of a process of deriving Tx power.

After the repetition factor is determined, Tx power may be determined. In the method proposed in the present disclosure, a method of minimizing a repetition factor is first performed, and then the Tx power may be determined.

For convenience of description, in a case where a repetition factor is given as N, the base station 101 may perform non-coherent combining. This may mean that an SINR of a PRACH increases by N times. Since a PRACH sequence is a Zadoff Chu sequence and has excellent correlation characteristics, it is assumed that the cross correlation of PRACH sequences may be ignored. For example, N may satisfy a relationship in Equation 3.

$$[\text{Equation 3}]$$

$$(N-1) \cdot P_{CMAX,f,c} < P_{PRACH,target,f,c} + PL_{b,f,c} \leq N \cdot P_{CMAX,f,c}$$

<u>Method 38:</u> A repetition factor may be determined as a minimum value that satisfies Rx power (or an SINR) required by a base station 101.

When a repetition factor is determined, Tx power may be derived accordingly. In order to minimize the repetition factor, the Tx power may be maximized (in method 39) or may also have a minimized value while PRACH is repeated the number of times predetermined (in method 40). According to the exemplary embodiment, the same Tx power may be maintained while the PRACH is repeated. Alternatively, a terminal 103 may assume that path loss is derived by using the same DL RS. Different Tx powers may be derived while the PRACH is repeated. Since the Tx power may be derived according to the path loss derived by the terminal 103, a portion of the PRACHs may be transmitted, and the remaining PRACHs may also be transmitted because a time (or an event) in which the terminal 103 updates the path loss according to the implementation may occur.

<u>Method 39:</u> Tx power may be determined as $P_{CMAX,f,c}$.

<u>Method 40:</u> Tx power may be determined as $(P_{PRACH,target,f,c} + PL_{b,f,c})/N$.

Methods 35, 38, and 39 proposed above may be applied when exact path loss is known. In a case where the path loss is not known exactly or the path loss expires due to the movement of a terminal 103, it is preferable to allow more margin ($\Delta > 0$). This may be expressed by Equation 4 below, and $\Delta$ may also be considered in methods 35, 38, and 39. That is, $P_{PRACH,target,f,c} + PL_{b,f,c} + \Delta$ is reflected so that Method 41 and Method 42 below may be considered.

$$[\text{Equation 4}]$$

$$(N-1) \cdot P_{CMAX,f,c} < P_{PRACH,target,f,c} + PL_{b,f,c} + \Delta \leq N \cdot P_{CMAX,f,c}$$

<u>Method 41:</u> A repetition factor greater than 1 may be selected only in a case where a value of $P_{PRACH,target,f,c} + PL_{b,f,c} + \Delta$ is greater than $P_{CMAX,f,c}$.

<u>Method 42:</u> Tx power may be determined as $(P_{PRACH,target,f,c} + PL_{b,f,c} + \Delta)/N$.

When Msg1 is transmitted, a terminal 103 may monitor ra-SearchSpace from a slot after a predetermined amount of time has elapsed thereafter. This is conveniently called an RA response window. When Msg2 is not obtained from a search space set belonging to the RAR window, it may be regarded as that contention has occurred. In this case, the terminal 103 may derive a random value from a value given as BI, and derive a time when a PRACH is not retransmitted.

In a case where a PRACH is retransmitted, Tx power increases further, and this may be called power ramping. According to the conventional technical specifications, $P_{PRACH,target,f,c}$ that the base station 101 desires to receive may be reflected as increasing by step size. That is, it may be changed to DELTA_PREAMBLE + (PREAMBLE_POWER_RAMPING_COUNTER - 1) x PREAMBLE_POWER_RAMPING_STEP + POWER_OFFSET_2STEP_RA. According to the exemplary embodiment, POWER_OFFSET_2STEP_RA may be 0 dB. DELTA_PREAMBLE may be a constant indicated by RRC signaling and be a value dependent on a PRACH format. PREAMBLE_POWER_RAMPING_COUNTER may be a value determined by the number of times the terminal 103 has performed the power ramping.

According to the exemplary embodiment, in a ramping step, a value used in the conventional PRACH transmission may also be reused (in method 43), or may be additionally indicated by RRC signaling and applied only to PRACH repetition. In the latter case, the ramping step may also be determined regardless of a repetition factor (in method 44), but the ramping step may also be determined by reflecting the repetition factor (in method 45).

<u>Method 43:</u> A ramping step applied to PRACH repetition may be reused as a ramping step used in a single transmission (i.e., a legacy behavior) of a PRACH.

<u>Method 44:</u> A ramping step applied to PRACH repetition is separately indicated (i.e., a ramping step 2), and may be applied regardless of a repetition factor in a case where a terminal 103 performs the PRACH repetition.

In the exemplary embodiment, a terminal 103 may apply the ramping step 2 even in a case where a repetition factor is derived as 1, and may apply the ramping step 2 even in a case where a repetition factor is derived as 2 or more. In another exemplary embodiment, the terminal 103 may apply a conventional ramping step in a case where a repetition factor is derived as 1, but may apply the ramping step 2 in a case where a repetition factor is derived as 2 or more.

<u>Method 45:</u> A ramping step applied to PRACH repetition is separately indicated (i.e., a ramping step 3), and in a case where a terminal 103 performs the PRACH repetition, a ramping step 4 corrected by reflecting repetition factors may be applied.

Tx power may be derived by reflecting the ramping step 4. The ramping step 4 may be derived from the ramping step 3 and the repetition factor. For example, a value obtained by dividing the ramping step 3 by a repetition factor may be determined as the ramping step 4. In a case where the ramping step 3 is reflected when target Rx power = $N \cdot P$ is expressed, target Rx power$^+$ = $N \cdot P^+$ = $N \cdot (P$ + ramping step 4$)$ may be obtained. Accordingly, being increased by the repetition factor, the ramping step 4 may be interpreted as the ramping step 3.

In the conventional technical specifications, when a terminal 103 determines Tx power of a PRACH, path loss is fully compensated, so the reason why the terminal 103 is unable to receive a RAR may be interpreted as contention. Similarly, when PRACH repetition is performed, a repetition factor is a value determined to compensate for the path loss, so a method of further coping with contention may also be performed by power ramping as in the conventional technical specifications.

In the conventional technical specifications, power ramping may be performed when a PRACH is transmitted and a corresponding RAR is not received in return. When PRACH repetition is performed, both of the power ramping and a repetition factor should be considered. In the exemplary embodiment proposed in the present disclosure, the power ramping is performed first, and then it is enabled to increase the repetition factor. In another exemplary embodiment proposed in the present disclosure, a repetition factor may be increased first, and then it is enabled to perform power ramping.

In a case where PRACH repetition is performed so that the terminal 103 minimizes a repetition factor (in method 38), Tx power may be applied at a maximum value (in method 39) or Tx power may be applied at a value slightly smaller than the maximum value (in method 40). When method 39 is performed, it is preferable to perform the method of only further increasing the repetition factor because power ramping may not be performed. When method 40 is performed, the power ramping may be performed first, or the repetition factor may be increased first.

<u>Method 46:</u> At least one of power ramping increasing or repetition factor increasing may be performed first by RRC signaling.

In a case of determining Tx power of a PRACH, a terminal 103 may determine the Tx power for each RO belonging to an RO group. The above methods may determine the Tx power of the PRACH at a reference time in order to determine the RO group (i.e., in order to determine a repetition factor). The implementation of the terminal 103 determines a time period during which an RSRP value is measured, the number of SSB samples, a time during which L3 filtering is performed, or the like. However, after the repetition factor is derived, a change in RSRP measured by the terminal 103 and/or a change to an SSB accordingly are not reflected in the repetition factor. Once the repetition factor and an RO group are derived, the terminal 103 may not perform SSB reselection until contention resolution ultimately fails.

**[Method of determining sweeping factor and transmission power when PRACH sweeping is performed]**

In a case of PRACH repetition, a repetition factor and Tx power may be calculated by considering a link budget. In contrast, in a case of PRACH sweeping, since Tx beams may be changed, most of SINRs may be secured by properly associating at least one or more Tx beams with Rx beams of a base station 101 among Tx beams selected by a terminal 103. Other Tx beams may not contribute much to the SINRs.

A terminal 103 operating in FR2 may transmit a capability signaling (e.g., a capability report) including UL-DL beam correspondence. The capabilities of the terminal 103 may be classified into "capability 1 to satisfy the requirement of beam correspondence by performing UL beam sweeping" and "capability 0 to satisfy the requirement of beam correspondence without performing UL beam sweeping". The terminal 103 may transmit at least one of capability 1 or capability 0 to the base station 101.

A terminal 103 supporting capability 1 may not be able to ensure beam correspondence before performing UL beam sweeping. In such a case, the beam correspondence may not be ensured even though the terminal 103 transmits a PRACH in an RO associated with an SSB. The terminal 103 supporting capability 1 may perform PRACH repetition without changing Tx beams. The base station 101 (or a transmission and reception point (TRP) and an Rx panel) may not be aware of Tx beams of the terminal 103 used for PRACH transmission. The terminal 103 supporting capability 0 may derive a plurality of Tx beams by using one SSB. Even in this case, the base station 101 (or the TRP and the Rx panel) may receive signals from the terminal 103. Accordingly, the terminal 103 may perform PRACH sweeping while changing the Tx beams.

A terminal 103 supporting FR1 may not perform beam-based operations. Accordingly, the above-described constraints may not be considered. The terminal 103 may transmit PRACHs in an RO associated with an SSB, and there may be a degree of freedom in selecting Tx beams. In the PRACH sweeping and/or PRACH repetition, the terminal 103 may use different Tx beams each time of transmitting the PRACHs.

The base station 101 is unable to know a Tx beam selected by the terminal 103. Accordingly, even when a PRACH is received repeatedly, the base station 101 may independently perform reception processing for a PRACH preamble for each RO. In this case, the base station 101 may not be able to perform a soft combining operation for the PRACHs.

The terminal 103 may determine the Tx beam and/or Tx power of a PRACH on the basis of an SSB. For convenience of description, a PRACH i may be transmitted in an RO i associated with an SSB {i, j,...}. The terminal 103 may derive Tx power of a PRACH j transmitted in an RO j on the basis of reception strength (e.g., RSRP) of an SSB j.

The terminal 103 may determine the number of repetitions of the PRACH j by using one SSB j. "In a case where the terminal 103 uses a plurality of SSBs and Tx beam of the terminal 103 is derived from each of the SSBs", each Tx beam may have the number of repetitions different from each other.

In a case where the terminal 103 selects the plurality of SSBs, the terminal 103 may determine the number of PRACH repetitions on the basis of a comparison result between RSRP and an RSRP threshold of each of the plurality of SSBs. In a case where the terminal 103 repeatedly transmits PRACHs on the basis of the sweeping method of Tx beams, the number of ROs required for each SSB may be different.

In the exemplary embodiment proposed in the present disclosure, the terminal 103 may perform PRACH repetitive transmission by using the first Tx beam, and then perform the PRACH repetitive transmission by using the second Tx beam. In another exemplary embodiment proposed in the present disclosure, PRACH transmission using a changed Tx beam may be configured as one transmission unit, and the terminal 103 may repeatedly perform the transmission unit. In this case, the number of PRACH repetitions for each Tx beam may be the same.

A Tx beam of PRACH may be determined by referring to other reference signals (RSs) as well as an SSB. For example, each of different RSs may be a channel state information (CSI)-RS, a positioning reference signals (PRS), and/or a sounding reference signal (SRS). According to the exemplary embodiment, the base station 101 may indicate a transmission configuration indicator (TCI)-state or an RS of a PRACH to the terminal 103, and the terminal 103 may determine a Tx beam to be applied to a PRACH instance on the basis of the TCI state or RS indicated by the base station 101.

In order to derive the Tx beam of the PRACH from the SSB, there is no need to establish an RRC connection between the terminal 103 and the base station 101. In order to indicate an RS (e.g., a CSI-RS, a PRS, and an SRS) to the terminal 103, the RRC connection between the terminal 103 and the base station 101 is required to be established. Even though the Tx beam is not indicated to the terminal 103 before establishing the RRC connection between the terminal 103 and the base station 101, the terminal 103 may determine the Tx beam by using the SSB. In order to indicate the Tx beam to the terminal 103, the base station 101 may indicate the SSB, DL RS, and/or UL RS to the terminal 103.

According to the exemplary embodiment, in a case where a TCI state of a PRACH is indicated to the terminal 103, the base station 101 may signal a serving cell ID, a BWP ID, an RS resource ID, and/or a physical cell identifier (PCI) (or an index or identifier of a PCI) to the terminal 103 in order to indicate the RS referred to by the TCI state to the terminal 103. The terminal 103 may repeatedly transmit a PRACH instance by using the same Tx beam. Alternatively, the terminal 103 may transmit a PRACH instance on the basis of a Tx beam sweeping method. In such a case, information indicating the Tx beam of the PRACH may include information about one or more RSs. The terminal 103 may derive one Tx beam from each RS. In a case where two or more RSs are indicated to the terminal 103, the terminal 103 may repeatedly transmit the PRACH instance.

In a case where the terminal 103 transmits a PRACH to a base station other than a serving base station, frequency resources and/or PCI for PRACH transmission may be indicated in advance.

The terminal 103 may derive two or more Tx beams for an SSB. It may be difficult to determine in advance the Tx beams derived from the terminal 103. It may be difficult to separately indicate the Tx beams derived from the terminal 103. The terminal 103 may obtain time synchronization and frequency synchronization on the basis of one SSB and derive Tx beam(s) satisfying beam correspondence. "Beam correspondence to SSB is established" may mean "satisfying predefined conditions".

A plurality of Tx beams may be derived, and all the derived Tx beams may correspond to the same spatial relation information (e.g., the same SSB). The Tx beams may be orthogonal to each other. Alternatively, the Tx beams may not be orthogonal. The Tx beams may have a radiation pattern having some lobes overlapping.

FIG. 23 is a view illustrating a first exemplary embodiment of a beam grid and Tx beam(s) corresponding to an SSB according to the exemplary embodiments of the present disclosure.

Referring to FIG. 23, a Tx beam 2301 of a terminal 103 may correspond to one grid, and Tx beams associated with the same SSB may be classified into adjacent grids. The grids may form one beam group 2303 and may be interpreted as grids that satisfy one SSB and beam correspondence.

In a case where the base station 101 may simultaneously apply Rx beams different from each other, the base station 101 may indicate through signaling that a plurality of SSBs corresponds to one RO. For example, the terminal 103 may transmit a PRACH preamble in one RO corresponding to n number of SSBs (SSB 1, SSB 2,..., and SSB n). n may be a natural number. The terminal 103 may derive n number of Tx beams (Tx beam 1,..., and Tx beam n) on the basis of beam correspondence. The Tx beams may be distinguished by TCI states, spatial relationship information, and/or quasi colocation (QCL). The terminal 103 may derive Tx power of a PRACH on the basis of the measurement result (e.g., RSRP) of SSB. Accordingly, the Tx power may vary for each Tx beam.

Through signaling, the base station 101 may indicate that one SSB corresponds to a plurality of ROs (RO 1, RO 2,..., and RO m), and m may be a natural number. For example, in a case where m number of ROs corresponding to one SSB are set in a time domain, the terminal 103 may select n' number of ROs and transmit PRACHs in n' number of ROs. n' may be less than or equal to m, and the n' ROs may belong to an RO group (n') that follows a nested structure. The terminal 103 may derive n' number of Tx beams (Tx beam 1,..., and Tx beam n') on the basis of beam correspondence for the same SSB.

"A case where Tx beams of a terminal 103 are orthogonal" may be "a case where a base station arranges TRPs (or RxPs) geographically apart" or "a case where the base station uses a plurality of Rx panels". In such a case, Tx beams of the terminal 103 may form a beam group. Alternatively, the Tx beams of the terminal 103 may have grids spaced far apart from each other. Even through beam correspondence for a single SSB is not satisfied, the Tx beams may be Tx beams derived from the single SSB.

In a case where PRACH sweeping is performed, the terminal 103 may be able to derive up to n' number of Tx beams different from each other for an RO group (n'), but may also be able to generate a smaller number (e.g., k, where k < n') of Tx beams depending on capability thereof. According to the exemplary embodiment, an RO group corresponding to a repetition factor not greater than k may be selected from among RO groups supported by the base station 101. According to another exemplary embodiment, the terminal 103 selects an RO group (n'), but some Tx beams may be selected redundantly. Whether the terminal 103 selects which Tx beam among the k number of Tx beams only once or select which Tx beam twice or more times may be determined in implementation.

For convenience of description, the number of ROs selected to perform PRACH sweeping may be referred to as a sweeping factor. This sweeping factor may be distinguished from a corresponding repetition factor in the PRACH repetition.

According to the exemplary embodiment, the terminal 103 may determine a sweeping factor according to capability. The number of times the terminal 103 transmits PRACHs may be derived from sweeping factors, and their values may be the same.

<u>Method 47:</u> A terminal 103 may repeatedly transmit PRACHs by determining the maximum sweeping factor according to capability.

In a case where the terminal 103 performs PRACH sweeping, one sweeping factor may be derived and independent of a link budget. The sweeping factor is given as the capability of the terminal 103, and in this case, a gain of a Tx beam may be regarded as to have the maximum value according to the capability of the terminal 103. In such a case, depending on the capability of the terminal 103, a Tx beam with too narrow a width may be derived, whereby the time required for beam matching may be further increased on the contrary.

According to method 47, even though the terminal 103 is located at a boundary of reach, the sweeping factor does not increase, so the terminal 103 may support Tx beams having gains different from each other according to the link budget.

<u>Method 48:</u> A terminal 103 may support two or more sweeping factors in order to support any one beam gain (or a beamwidth) according to a link budget.

In the exemplary embodiment, when the capability of the terminal 103 supports a maximum sweeping factor of 8 or more, the sweeping factor may correspond to one coverage level. For example, sweeping factors of 2, 4, and 8 may be supported.

In the exemplary embodiment, when the capability of the terminal 103 supports a maximum sweeping factor of 4 or more and less than 8, the sweeping factor may correspond to one coverage level. For example, sweeping factors of 2 and 4 may be supported.

In the exemplary embodiment, when the capability of the terminal 103 supports a maximum sweeping factor of 2 or more and less than 4, the sweeping factor may correspond to one coverage level. For example, a sweeping factor of 2 may be supported.

The terminal 103 may use the same SSB in order to derive Tx beams corresponding to a sweeping factor. Therefore, the larger the sweeping factor, the more Tx beams are required, and the Tx beams may be expected to have higher gain.

According to the exemplary embodiment, the sweeping factor applied by the terminal 103 may be applied as the maximum sweeping factor. Any sweeping factor that may be set may be supported in a DL BWP. The terminal 103 may select an RO group corresponding to a relevant sweeping factor and then perform PRACH sweeping.

According to another exemplary embodiment, a sweeping factor applied by a terminal 103 may be derived from a value measured as being insufficient in a link budget of the terminal 103. It is preferable that the terminal 103 may support several values as beam gains. For example, 3 dB, 6 dB, 9 dB, etc. may be considered. The terminal may receive an SSB and measure and obtain RSRP.

<u>Method 49:</u> By using threshold(s) in SIB 1, a gain desired to be obtained by performing PRACH sweeping may be identified. This may be derived as a sweeping factor.

The terminal 103 attempts to obtain a gain insufficient in a link budget from each Tx beam, but Tx power may be derived equally for each Tx beam. Referring to Equation 2, this is because the Tx power may be derived identically in a case of measuring path loss by using the same SSB for the same target Rx power.

According to the exemplary embodiment, in a case where a value of $P_{PRACH,target,f,c} + PL_{b,f,c}$ is greater than $P_{CMAX,f,c}$, PRACH sweeping is performed so that a PRACH may be transmitted two or more times.

According to another exemplary embodiment, a sweeping factor may be determined on the basis of RSRP. When the RSRP measured by using a received SSB is compared with boundary value(s), the sweeping factor may be derived. To this end, the base station 101 may include one or more boundary value(s) in the system information.

For example, when RSRP is compared with the boundary values and then a sweeping factor is derived, a terminal should be able to increase a SINR at the base station 101 by using a gain of a Tx beam. Accordingly, the Tx beam derived from the terminal should be able to provide similar gains when the sweeping factor is the same. Such Tx beams may be determined in implementation. In addition, the terminal should be able to distinguish Tx beams from each other. For example, the Tx beams applied to PRACH sweeping may be preconfigured and obtained through a procedure of UL beam management, so as to be applied to PUSCH transmission in an RRC connected state.

The terminal 103 may receive the system information from the base station 101 and derive one or more boundary values from the system information. The terminal 103 may derive information about a period on the basis of the boundary value(s). The Information about the period may be appropriately interpreted according to the units of measurement of RSRP. The terminal 103 may derive RSRP for an SSB by performing a monitoring operation (e.g., a measurement operation) for the SSB and determine the period to which the measured RSRP belongs. The terminal 103 may derive the number of transmissions of PRACHs according to the period to which the measured RSRP belongs.

The methods below may be applied in combination and may be summarized into methods below.

<u>Method 50:</u> A sweeping factor greater than 1 may be selected only in a case where a value of $P_{PRACH,target,f,c} + PL_{b,f,c}$ is greater than $P_{CMAX,f,c}$.

<u>Method 51:</u> The RSRP of an SSB may be measured and compared to boundary value(s), so that a sweeping factor may be determined.

<u>Method 52:</u> in a case where the RSRP of an SSB is measured and compared with one boundary value and it is determined that a terminal 103 is in a boundary area of reach, a sweeping factor may be determined on the basis of a process of deriving Tx power.

The methods by which Tx power is determined may differ from each other for PRACH repetition and PRACH sweeping. This is because the PRACH sweeping may be transmitted only once and received by the base station 101. Accordingly, it is preferable to derive Tx beams applied to the PRACH sweeping so that a gain obtainable from a repetition factor may become a gain obtainable from a sweeping factor. For example, the gain obtainable from the repetition factor may be understood as a directivity gain of a Tx beam or a gain of a main lobe.

In power ramping, a value applied to a PRACH transmitted once in the conventional technical specifications may also be reused. That is, it may be reflected such that $P_{PRACH,target,f,c}$, which is what the base station 101 desires to receive, increases by step size. That is, it may be changed to DELTA_PREAMBLE + (PREAMBLE _POWER_RAMPING_COUNTER - 1) x PREAMBLE _POWER_RAMPING_STEP + POWER_OFFSET_2STEP_RA. According to the exemplary embodiment, POWER_OFFSET _2STEP_RA may be 0 dB, and DELTA_PREAMBLE may be a constant indicated by RRC signaling and be a value dependent on a PRACH format. PREAMBLE_POWER_RAMPING_COUNTER may be a value determined by the number of times the terminal 103 has performed power ramping.

<u>Method 53:</u> For a ramping step applied to PRACH sweeping, a ramping step used in a single transmission of a PRACH (i.e., a legacy behavior) may be reused.

In the conventional technical specifications, when a terminal 103 determines Tx power of a PRACH, path loss is fully compensated, so the reason why the terminal 103 is unable to receive a RAR may be interpreted as contention. Similarly, when PRACH sweeping is performed, since a sweeping factor is a value determined to compensate for the path loss, a method of further coping with contention may also be performed by power ramping as in the conventional technical specifications.

In the conventional technical specifications, power ramping may be performed when a PRACH is transmitted and a corresponding RAR is not received accordingly. When the PRACH sweeping is performed, both of the power ramping and a sweeping factor should be considered. According to the exemplary embodiment, the power ramping may be performed first, and then the sweeping factor may be increased. According to another exemplary embodiment, a sweeping factor is increased first, and then power ramping may be performed.

<u>Method 54:</u> At least one of power ramping or sweeping factor increase may be performed first by RRC signaling.

For example, when the terminal 103 performs PRACH sweeping and a RAR is not received, the PRACH sweeping may be performed again by using the same sweeping factor. As exemplified in FIG. 23, the terminal 103 may have performed the PRACH sweeping by using only some of a plurality of Tx beams having the same gain (i.e., as many numbers as the sweeping factor). However, the terminal 103 may still be able to experiment with multiple Tx beams. In such a case, it is preferable for the terminal 103 to apply the Tx beams differently while maintaining the sweeping factor and/or Tx power as is.

<u>Method 55:</u> When a terminal 103 is unable to receive a RAR in an RA window, the terminal 103 may perform PRACH sweeping again while maintaining a sweeping factor.

According to the exemplary embodiment, in the technical specifications, a terminal 103 may assume a set of Tx beams (or a codebook of Tx beams). According to the exemplary embodiment, the set of Tx beams may be required to have gains greater than a predetermined level. For example, the technical specifications may set several boundary values, and Tx beams having a gain not smaller than the corresponding boundary values may be determined in advance depending on the capability of the terminal 103. Such a set of Tx beams may be maintained or managed during a manufacturing process of the terminal 103 or during a testing process with the base station 101. According to the exemplary embodiment, the gain of beam and the boundary values may be used to determine a sweeping factor.

The number of Tx beams constituting the set of Tx beams may not be less than the sweeping factor. For example, when the PRACH sweeping procedure is performed and the sweeping factor is determined as x, x number of Tx beams different from each other should be able to be selected.

In a case of using a sweeping factor of 2, this may correspond to a boundary value of 3 dB. When each Tx beam with a gain of not less than 3 dB are used, the terminal 103 may perform PRACH sweeping by using a given sweeping factor. Likewise, even though the sweeping factor is to be used with a different value, the terminal 103 may use each Tx beam having an appropriate gain.

<u>Method 56:</u> A set of Tx beams is configured according to gain so that a terminal 103 may use the set of Tx beams in PRACH sweeping.

It is preferable that a Tx beam, among a set of Tx beams, in which a PRACH is successfully detected by a base station 101 is used as a Tx beam of an Msg3 PUSCH.

According to the conventional technical specifications, even though PRACH sweeping/repetition is not performed, a Tx beam that may be determined by using only an SSB may be applied to the Msg3 PUSCH. In addition, the Tx beam of the Msg3 PUSCH remains unchanged, and may be transmitted repeatedly.

When a Tx beam that obtains a sufficient gain is selected among Tx beams of PRACH, the Tx beam of the Msg3 PUSCH is used, whereby the gain may be obtained. Accordingly, it is preferable that the base station 101 may indicate the Tx beam to the terminal 103 in the Msg2 PDSCH.

<u>Method 57:</u> A RA-RNTI may be derived from any one of ROs detected by a base station 101.

A terminal 103 may receive a RAR and perform some contention resolution. In this case, the terminal 103 may derive a random access preamble identity (RAPID) and a random access-radio network temporary identifier (RA-RNTI). Since an RO is associated with the RA-RNTI, a Tx beam associated with the RO (i.e., a Tx beam selected by a base station 101 among Tx beams used for PRACH sweeping) may be derived. A TCI state (or a spatial relation, or qcl, or a Tx beam) of an Msg3 PUSCH may be determined by using the Tx beam.

**[Method of performing PRACH repetition for CFRA]**

Random access (in CBRA) performed by a terminal 103 in a case where contention resolution may occur and random access (in CFRA) performed in a case where a base station 101 indicates resources so as to prevent contention from occurring may be distinguished in PRACH transmission.

CBRA may be further divided into Type 1 random access or Type 2 random access. CFRA may be further divided into a higher layer-triggered RA procedure and a physical layer-triggered RA procedure. In the case of CFRA, a PRACH mask index is indicated to the terminal 103, so as to derive that some of ROs may be used and some ROs may not be used. According to the exemplary embodiment, an RO may be derived by using information indicated to the terminal 103 for a CBRA configuration or information indicated to the terminal 103 for a general random access procedure.

The physical layer-triggered CFRA may be performed from a PDCCH received by the terminal 103. Information required for the CFRA may be derived from a specific DCI format. According to the conventional technical specifications, DCI format 1_0 is scrambled with a C-RNTI, but when a value of a frequency domain resource allocation (FDRA) field is composed only of 1, other fields of the DCI format may include at least a RAPID, a UL/SUL indicator, an SSB index, and a mask index. In addition, a physical cell identifier (PCI) may also be included. In addition, the remaining bits may be reserved.

The mask index may indicate whether ROs are used or not. An RO may be selected from among ROs indicated by the mask index in the same association period. When a plurality of ROs are allowed to be provided with the mask index, one valid RO among them may be randomly selected by the terminal 103 or the first RO, which occurs after DCI is received and a predetermined processing time has elapsed, may be selected. In a case of such a plurality of ROs, the terminal 103 may arbitrarily select one from among the ROs. The terminal 103 may transmit a PRACH to the base station 101 by using a PRACH preamble derived from a RAPID indicated in the DCI. Alternatively, the terminal 103 may transmit a PRACH to the base station 101 by using a mask index and a RAPID according to higher layer signaling.

According to the conventional technical specifications, a mask index may be expressed by 16 indexes or 4 bits, and as shown in Table 4, the mask index may represent all ROs, only half of the ROs, or one RO. Table 4 may illustrate mask index values (Table 7.4-1 in TS 38.321). As shown in Table 4, a mask index may be meaningful in encompassing PRACH Mask Index, msgA-SSB-SharedRO-MaskIndex, and ssb-SharedRO-MaskIndex. For example, the PRACH mask index may be an index that determines whether to allow PRACH transmission for specific ROs in a CFRA procedure. The msgA-SSB-SharedRO-MaskIndex may be an index for determining which ROs are allowed to be used among ROs shared between a four-step RACH (or type-1 RACH) and a two-step RACH (or type-2 RACH). The ssb-SharedRO-MaskIndex may be an index for determining which RO(s) are allowed to be used among ROs shared by corresponding feature(s) or feature combination(s) thereof when the feature(s) or feature combination(s) thereof are indicated.

[Table 4]

| PRACH Mask Index/ *msgA-SSB-SharedRO-MaskIndex/ ssb-SharedRO-MaskIndex* | Allowed PRACH occasion(s) of SSB |
|---|---|
| 0 | All |
| 1 | PRACH occasion index 1 |
| 2 | PRACH occasion index 2 |
| 3 | PRACH occasion index 3 |
| 4 | PRACH occasion index 4 |
| 5 | PRACH occasion index 5 |
| 6 | PRACH occasion index 6 |
| 7 | PRACH occasion index 7 |
| 8 | PRACH occasion index 8 |
| 9 | Every even PRACH occasion |
| 10 | Every odd PRACH occasion |
| 11 | Reserved |
| 12 | Reserved |
| 13 | Reserved |
| 14 | Reserved |
| 15 | Reserved |

Higher layer-triggered CFRA may be performed in a case where the terminal 103 satisfies RRC signaling and predetermined conditions without a separate PDCCH. According to the conventional technical specifications, there may be a case where RSRP derived from a measured SSB or CSI-RS is higher than a predetermined threshold. Alternatively, in a case where only an SSB or CSI-RS, which is not higher than a predetermined boundary value is indicated to the terminal 103, one SSB or CSI-RS may be arbitrarily selected. The following methods may be considered to derive a Tx beam.

<u>Method 58:</u> A Tx beam of a PRACH may be derived on the basis of an SSB. In a terminal 103, even though CFRA is triggered by using SSB RSRP or CSI-RS RSRP, a DL RS/channel from which the Tx beam is derived may be an SSB.

<u>Method 59:</u> A Tx beam of a PRACH may be derived on the basis of a CSI-RS. In a terminal 103, even though CFRA is triggered by using SSB RSRP or CSI-RS RSRP, a DL RS/channel from which the Tx beam is derived may be the CSI-RS.

<u>Method 60:</u> A Tx beam of a PRACH may be derived on the basis of a CSI-RS or an SSB. In a terminal 103, a Tx beam may be derived by using a DL RS/channel where RSRP is measured in a case where CFRA is triggered by using the SSB RSRP or CSI-RS RSRP.

This covers a method of deriving a repetition factor (or a sweeping factor) when CFRA is performed. These may be applied in combination with the above-described methods. RSRP is measured and CFRA may be triggered by using this RSRP. The following methods may be considered as a method of deriving a repetition factor.

<u>Method 61:</u> A repetition factor may be derived by using at least one of SSB RSRP of or CSI-RS RSRP.

For example, in the case of a random access procedure based on an SSB as well, a repetition factor may be determined by using SSB RSRP measured by using the SSB. In addition, in contrast, in the case of a random access procedure based on a CSI-RS, a repetition factor may be determined by using CSI-RS RSRP measured by using the CSI-RS.

<u>Method 62:</u> A repetition factor may be derived from DCI format information or RRC signaling.

For example, a repetition factor may be indicated in an information field of DCI. A terminal 103 may be indicated, by RRC signaling, which index a repetition factor is mapped to, and the index may be indicated to the terminal 103 by the DCI. Alternatively, a value indicated in the DCI to the terminal 103 may also directly indicate the repetition factor. In this case, the value of the information field and the repetition factor may correspond one-to-one.

<u>Method 63:</u> A repetition factor may be derived from an information field of DCI.

For example, a part of an area allocated as reserved bits in DCI format 1_0 may be used. In order to support repetition factors of at least 2, 4, and 8, two bits of DCI format 1_0 may be used, and the reserved bits may be reduced by two bits.

According to the conventional technical specifications, one RO index may be indicated to a terminal 103 in a mask index. For example, in a case where one SSB corresponds to L number of ROs (L = 1, 2, 4, 8), an RO index of any one of the ROs may be indicated to the terminal 103. In a case where PRACH repetition is performed, it is preferable to perform interpretation differently from that of the conventional technical specifications or to introduce a separate indicator.

<u>Method 64:</u> Allowed resources in a mask index may mean ROs where PRACHs may be transmitted. A terminal 103 may then repeatedly transmit the PRACHs by using consecutive ROs or discontinuous ROs.

For example, an RO indicated by a mask index may mean the first RO of an RO group. Alternatively, an RO indicated in the mask index may be any one RO belonging to an RO group.

In the conventional technical specifications, since a PRACH is transmitted from one RO, a value of a mask index may represent one RO index. However, when PRACH repetition/sweeping is considered, direct extension to an RO group may be difficult. For example, since a PRACH occasion index 3 and a PRACH occasion index 4 represent ROs adjacent to each other, RO groups may overlap each other in a case where repetition factors (or sweeping factors) are given as 2, 4, 8, etc. Since it is difficult for ROs belonging to overlapping RO groups to perform combining for detecting preambles at a base station 101, it is preferable that the RO groups do not overlap each other.

<u>Method 65:</u> A mask index may be interpreted as a unit of RO.

A terminal 103 may have the same interpretation method as in the conventional technical specifications for a mask index. For example, when a PRACH occasion index k (e.g., k = 6) is given, the terminal 103 may select a k-th RO belonging to the same association (pattern) period among ROs associated with an SSB indicated by DCI or RRC signaling. In addition, only an RO that is interpreted as a valid RO is allowed to transmit a PRACH.

<u>Method 66:</u> A mask index may be interpreted as a unit of RO group.

In a case where PRACH sweeping/sweeping and a legacy PRACH share an RO, mask indexes with the same value may be indicated to a terminal 103. By at least using RSRP, the terminal 103 may determine whether to perform PRACH repetition or whether to transmit a legacy PRACH (i.e., one-time transmission), and interpretations different from each other are allowed for the same mask indexes. Since a base station 101 may not know this, load balancing of ROs for PRACH repetition and/or the legacy PRACH may not be able to be performed. Accordingly, it is preferable to indicate different mask indexes depending on whether to perform the PRACH repetition or to transmit the legacy PRACH.

When the first RO or the first RO group that occurs after a predetermined time boundary is selected, this may mean an RO, which is allowed or not allowed in a mask index. According to the exemplary embodiment, a predetermined time boundary may be an association (pattern) period.

For example, a mask index may refer to the first RO group (or the first RO of the first RO group) belonging to the earliest mapping cycle (or the first available mapping cycle) that occurs, after a predetermined time is elapsed, at a time point when the terminal 103 is triggered to perform the RA procedure.

<u>Method 67:</u> A mask index in a case where a repetition factor > 1 and a mask index in a case of legacy PRACH transmission (or a repetition factor = 1) may be separately indicated.

For example, in the terminal 103, when the repetition factor > 1, ROs may be allocated separately and each mask index may also be indicated. However, both a case where the repetition factor is greater than 1 and a case where the repetition factor is 1 may also share the same ROs, so in these cases, subsets of PRACH preambles may be used differently, and also the mask indexes may be used differently from each other.

Since the measurement of RSRP varies depending on the locations of the terminal 103, repetition factors with different values may be derived. The same mask indexes may be applied to the repetition factors different from each other, or mask indexes different from each other may also be indicated for respective repetition factors.

For example, the same mask index k may be indicated for a terminal 1 in which a repetition factor is derived as 2 and a terminal 2 in which a repetition factor is derived as 4. According to method 66, since the sizes of RO groups are different, the terminal 1 may interpret a mask index k for two ROs, and the terminal 2 may interpret a mask index k for four ROs. For convenience of description, considering a case where k = 4, it may be interpreted as an RO index 4 according to Table 4.

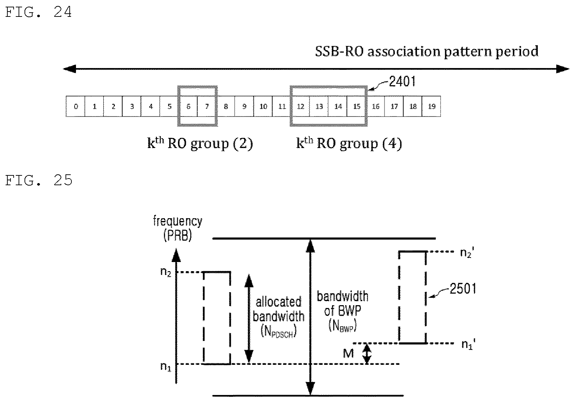

FIG. 24 is a view illustrating a first exemplary embodiment in which one mask index is interpreted at repetition factors different from each other according to the exemplary embodiments of the present disclosure.

Referring to FIG. 24, in a case where k = 4, it may be interpreted as an RO group 2401 located at the k-th position from a boundary of an association period. Alternatively, it may be interpreted as an RO group located at the k-th position from a boundary of a generalized association period.

According to the exemplary embodiment, the generalized association period may be a time, the number of subframes, or the number of slots in which all SSBs indicated to be transmitted to a terminal are mapped at least once so that RO groups associated with respective SSBs are mapped at least once. Alternatively, a generalized association period may be defined for the same time period (e.g., a period X) for all repetition factors. This may also be interpreted as an association pattern period or a generalized association pattern period for an RO group. In such a case, ROs may be formed into RO groups starting from the same slot regardless of the repetition factors. For example, in FIG. 24, an RO group (2) and an RO group (4) start from the same RO index 0.

<u>Method 68:</u> An RO group index may be reset in one mapping cycle.

According to the exemplary embodiment, a mapping cycle may be a generalized association period or a generalized association pattern period. According to a conventional method, a mapping cycle may mean a time during which all SSB indexes are mapped at least once and RO(s) associated with the SSB indexes are mapped at least once. This may be expressed as an SSB-RO mapping cycle. However, in a case where the terminal 103 transmits a PRACH preamble more than once, it may mean a time during which all SSB indexes are mapped more than once to RO groups. This applies even when the terminal 103 performs CFRA, but the same interpretation may be applied even when the terminal 103 performs CBRA. This may be expressed as an SSB-RO group mapping cycle.

A conventional association period may include an integer number of mapping cycles, and a mapping cycle may start from the middle of an association period. Similarly, a generalized association period may include an integer number of generalized mapping cycles. Accordingly, according to the exemplary embodiment, time resources (e.g., a system frame number (SFN), a slot index, etc.) at which the conventional mapping cycle starts and time resources at which the proposed generalized mapping cycle starts may be different from each other.

In addition, according to the exemplary embodiment, an index or identification information of an RO group may be reset at each generalized mapping cycle.

In contrast, there exists a case where the base station 101 does not know a repetition factor derived by the terminal 103. Since a mask index in CFRA should be used for the purpose of load balancing of ROs, it is preferable to select RO indexes that are easy for the base station 101 to perform prediction. In a case where the terminal 103 derives a repetition factor, the following method may be applied because the base station 101 does not know the repetition factor.

<u>Method 69:</u> A mask index may be indicated for each repetition factor.

A base station 101 may indicate a list of mask indexes or a plurality of mask indexes to a terminal 103 through RRC signaling. For the higher layer-triggered RA procedure, a mask index corresponding to a repetition factor may be used. For example, the values of the mask indexes may be included in a RACH configuration or a dedicated RACH configuration.

In a case of the physical layer-triggered RA procedure, whether it is repetition or not should be derived from a DCI format because a mask index may be interpreted differently depending on a case of a repetition factor greater than 1 and a case of legacy PRACH transmission.

<u>Method 70:</u> A separate information field for indicating whether PRACH repetition is performed or not may be included in DCI.

Alternatively, as presented in Method 62 and Method 63, in case of the physical layer-triggered RA procedure, a repetition factor (or a sweeping factor) may be explicitly indicated in a DCI format. In such a case, a terminal 103 may derive an RO group because both of the repetition factor and the mask index are indicated.

Another exemplary embodiment of interpreting a mask index may be considered. In addition to method 66 of reinterpreting the mask index, it may be assumed that RO indexes are allowed by way of being interpreted according to the conventional technical specifications.

<u>Method 71:</u> A mask index is interpreted as a case where PRACH repetition is not performed (i.e., the conventional technical specifications). An RO group may be derived, the RO group considering repetition factors only from the allowed ROs.

In a case where all RO indexes, even RO indexes, or odd RO indexes are allowed in Table 4, an RO group may be configured with only the allowed ROs. A terminal 103 may receive a DCI format, select one of RO groups that occur after a predetermined period of time, or select an RO group that is arranged the fastest.

In a case where a specific RO index is indicated in Table 4, an RO group may not be configured with only the allowed ROs. For example, an RO group having an allowed RO as the first RO may be derived. When the corresponding first RO is invalid, PRACH transmission may not be performed.

In contrast, for example, a valid RO for which PRACH transmission may be performed among ROs that are not earlier than the allowed RO may be selected, and an RO group having this valid RO as the first RO may be derived. This may be illustrated in FIG. 21.

Referring to FIG. 21, the selected RO group may be configured with RO indexes 3 and 7. An RO index 7 is indicated to a terminal by a PRACH mask index, and an RO index 3 may also be included according to an RO group to which the RO index 7 belongs. However, in the terminal, a PRACH may not be transmitted at the RO index 3 and may transmit the PRACH only at the RO index 7.

According to another exemplary embodiment of the present disclosure, only a specific value may be indicated for a mask index. In Table 4, in the case where all ROs, even ROs, and odd ROs are indicated, a repetition factor is additionally considered by using only the allowed ROs so that an RO group may be derived. However, in a case where a specific RO index is given in Table 4, it may be difficult to properly interpret a case where an RO group is configured. In such a case, the base station 101 may not indicate a mask index to the terminal 103. The terminal 103 may expect only a few values for the mask index.

<u>Method 72:</u> In a case where PRACH repetition is performed, it may be assumed that no RO indexes are indicated by a mask index.

## [Method of deriving Tx beam of PRACH]

A terminal 103 supporting PRACH repetition may maintain a Tx beam of a PRACH the same while the PRACH repetition is in progress. However, maintaining the same Tx beam may mean storing a transmission coefficient of the terminal 103 in a predetermined memory.

For example, considering a case where the terminal 103 performs type-1 random access or CBRA in an RRC idle state, the terminal 103 may not transmit another UL signal/channel before PRACH transmission is completed. However, for example, considering a case where the terminal 103 performs CFRA in an RRC connected state, an RO group may not necessarily be configured with only ROs adjacent in time. Depending on a TDD UL-DL slot configuration or a RACH configuration, ROs associated with the same SSB may have a significant temporal gap. This gap may be a value as large as a PRACH association period.

An UL signal/channel may be scheduled between adjacent ROs. In such a case, the terminal 103 may change a transmission coefficient to transmit the scheduled UL signal/channel, and may perform a procedure of applying the transmission coefficient to be applied to the PRACH again from a memory. This process may require a separate memory.

In such a case, the terminal 103 may be given the maximum time to store the transmission coefficient according to the capability. After this time elapsed, the terminal 103 may not maintain the same transmission coefficient. Accordingly, ROs belonging to an RO group may obtain Tx beams from the same SSB, but the same transmission coefficient may be maintained for a period of time according to the capability. It may be assumed that the same transmission coefficient is not maintained at the base station 101 after the corresponding time has elapsed.

<u>Method 73:</u> The maximum time for which a transmission coefficient is maintained according to the capability of the terminal 103 is determined, and the transmission coefficient may be derived again for the time thereafter.

According to another exemplary embodiment, the terminal 103 may derive a Tx beam for each RO in order to determine the Tx beam. That is, the terminal 103 may not be required to perform a procedure of storing the transmission coefficient in the separate memory and reloading the transmission coefficient for each RO that should transmit a PRACH. However, in such a case, there is a possibility that Tx beams different from each other may be derived for the same SSB.

Accordingly, in the technical specifications, Tx beams may not be associated with ROs belonging to an RO group.

When Tx beams different from each other are derived for the same SSB or multiple Tx beams are derived, it may be regarded as PRACH sweeping in an RO group. Instead of deriving a Tx beam for each RO, multiple Tx beams may be derived and applied in the order of ROs belonging to an RO group. In contrast, in PRACH repetition, since a Tx beam may be independently derived for an SSB, a transmission coefficient to be applied to a PRACH may be derived differently depending on UL-DL beam reciprocity in a case where the same transmission coefficient is derived or a method of receiving the SSB (e.g., a reception coefficient) changes depending on the mobility of the terminal 103.

**[Method of extending reach of PDSCH]**

A terminal 103 may receive ra-SearchSpace and decode a random access response. A RAR is monitored in the ra-SearchSpace, and the terminal 103 may derive a RA-RNTI from one or a plurality of PRACH(s) used in PRACH repetition/sweeping.

According to the conventional technical specifications, the RA-RNTI may be derived as a function of time resources of an RO where a PRACH is transmitted. In a case where a repetition factor or a sweeping factor is determined to be 2 or more, the terminal 103 may derive the RA-RNTI by using the first RO included in an RO group or the last RO that is arranged. This may be described in method 75 below.

<u>Method 75:</u> A terminal 103 may derive a RA-RNTI by using the first RO included in an RO group or the last RO that is arranged.

Considering a case where a RA-RNTI is derived by using an RO located at the very beginning in time, there may be a large difference between a time at which a RAR window starts and a time at which a PRACH is transmitted. According to the conventional technical specifications, a time at which the RA-RNTI is derived at a time the PRACH is transmitted, and thus a time at which the RAR window (or ra-SearchSpace) starts may not differ much. For example, in a system that operates with FDD, a RAR window (or ra-SearchSpace) may start after a predetermined processing time (e.g., a few symbols, a few slots, or a few times in units of ms). For example, in a system that operates with TDD, a RAR window (or ra-SearchSpace) may be started on a DL resource that appears after a predetermined processing time has elapsed.

Accordingly, when the RO located at the very beginning in time is used, a time corresponding to at least a repetition factor or a sweeping factor may be additionally considered. However, in a case of using an RO located at the very last in time, a difference between relative times when the RO and the RAR window (or ra-SearchSpace) starts may not be large, as in the conventional technical specifications. This has the advantage of allowing reuse of a portion of the existing implementation.

<u>Method 76:</u> A RA-RNTI may be derived by using an RO located at the very last in time in an RO group selected by a terminal 103.

From the amount of allocated resources (e.g., the number of REs) in DCI, a reference value for deriving a transport block size (TBS) may be identified by excluding overhead known in advance. When this reference value is less than a certain boundary value, the TBS may be selected as one of the values specified in the technical specifications. In addition, when this reference value is not less than the certain boundary value, the TBS may be selected as one value from the amount of allocated resources.

According to the conventional technical specifications, the DCI scrambled with the RA-RNTI may include an information field, so as to indicate TBS scaling. The information field may be expressed as one of three scaling factors by using two bits. Table 5 below shows that the same scaling factor (i.e., Ninfo) may be applied not only to the RA-RNTI, but also to a paging-RNTI (P-RNTI) and an MsgB-RNTI. Table 5 may illustrate TS 38.214, Table 5.1.3.2-2: Scaling factor of Ninfo for P-RNTI, RA-RNTI and MsgB-RNTI.

[Table 5]

| TB scaling field | Scaling factor S |
|---|---|
| 00 | 1 |
| 01 | 0.5 |
| 10 | 0.25 |
| 11 | |

According to the exemplary embodiments of the present disclosure, a similar method may be applied to other RNTIs. For example, a TBS scaling factor may be applied not only to a PDSCH scrambled with a RA-RNTI but also to a PDSCH scrambled with a TC-RNTI.

<u>Method 77:</u> A scaling factor may be applied in a RA-RNTI and/or a temporary C-RNTI (TC-RNTI).

<u>Method 78:</u> A base station 101 may use system information or higher layer signaling to indicate, to the terminal 103, whether to apply or not to apply a scaling factor to a PDSCH scrambled with a RA-RNTI and/or a TC-RNTI.

According to the conventional technical specifications, in Table 5, a scaling factor for a TB scaling field indicated as 11 has not yet been defined, so this scaling factor may be determined as a separate signaling received from the base station 101.

**Method 79:** A scaling factor for a case where a TB scaling field is indicated as 11 is defined so that this scaling factor may be applied to a PDSCH scrambled with a RA-RNTI and/or a TC-RNTI.

In a case where method 77, method 78, method 79, etc. are indicated to a terminal 103, a separate TBS scaling table is not required. However, the scaling factor presented in Table 5 has values for securing an additional link budget for the reach of a DL in a mobile communication. In a case where a new deployment scenario (e.g., a non-terrestrial network, a multicast broadcast system, a sidelink, etc.) is considered, a separate scaling factor may be introduced. Two or more of such values are given, so it may be difficult to reuse Table 5. According to the proposed method, a separate table including a separate TBS scaling factor may be introduced.

**Method 80:** In a case of a PDSCH scrambled with at least a RA-RNTI and/or a TC-RNTI, a separate table including a TBS scaling factor is introduced, so that Table 5 or the separate table may be applied.

A terminal 103 is indicated to use only one table from among two tables, so that Table 5 may be reused or a separate table may be applied, whereby this may be for a PDSCH scrambled with at least a RA-RNTI and/or a TC-RNTI. Alternatively, the separate table may be applied even in cases of P-RNTI, RA-RNTI, and MsgB-RNTI.

In order to further extend the reach of a downlink from the base station 101, resources may be allocated in a narrow band in order to obtain power gain. In such a case, since the number of REs allocated to the terminal 103 may not increase, the size of a TB receivable in a single slot may be considerably small. This is because the size of the TB is small compared to the size of information required by the base station 101, and thus, the information may have to be segmented into multiple TBs. In this case, overhead may occur for each segmented unit. For example, a CRC could be appended to each TB. As a result, an effective code rate of the information may not be sufficiently low. In order to solve this problem, it is preferable to be able to derive the size of a TB by using REs allocated in two or more slots as a method of securing the sufficient number of REs while the base station 101 performs transmission in the narrow band.

**Method 81:** The number of REs may be derived by considering a plurality of slots for deriving the size of a TB.

The number of slots N may be increased by N times, as indicated in the higher layer signaling or the scheduling DCI. According to the exemplary embodiment, the N number of slots may be consecutive or non-consecutive.

In the case of the conventional technical specifications, the number of REs that may be used as a criterion for deriving the size of a TB may be given as $N_{RE} = n_{PRB} \cdot min(156, N'_{RE})$ . According to the exemplary embodiment, $n_{PRB}$ is the number of scheduled PRBs, and when following the conventional technical specifications, $N'_{RE}$, $N_{RE}$ may be determined from the number of REs assumed to be allocated in one PRB.

**Method 82:** In a case where N is separately indicated to a terminal 103, it may be increased by N times as

$$N_{RE} = N \cdot n_{PRB} \cdot \ min(156, N'_{RE}).$$

The method proposed above describes a method of allocating a TB of a smaller size and a method of allocating a TB of a larger size, the said sizes being compared to the number of REs allocated in a single slot. These methods may be applied in combination. This is because the size of the TB may be required to be maintained while applying narrowband resource allocation at the base station 101.

**Method 83:** Both of the N number of slots and the TBS scaling factor may be considered in order to derive the size of a TB.

In a case of considering a PDSCH allocated in the N number of slots, a method of signaling this is described. According to the exemplary embodiment, N may be indicated from the scheduling DCI. For example, N may be implicitly derived from an existing information field, or may be indicated directly from a new information field.

For example, information indicating time domain resource allocation (TDRA) of the scheduling DCI is further extended, so that a list including not only a "starting symbol in the slot" to which a PDSCH is allocated, "the number of symbols in the slot", or "a PDSCH mapping type", but also N is indicated to the terminal 103, and one entry among the items of the list may be indicated from the scheduling DCI. Such information may be indicated to the terminal 103 through RRC signaling.

**Method 84:** Information corresponding to the number of slots in SIB 1 may be included, so that time resources with which a PDSCH is allocated to the terminal 103 may be derived.

N included in the scheduling DCI may be derived from a TDRA field, or N may be derived from a separate information field.

Alternatively, in order to prevent the amount of SIB 1 from increasing, SIB 1 may indicate information (i.e., "enable or disable") for indicating that TBs may be mapped in two or more slots, and the N number of specific slots may be indicated in the scheduling DCI. In such a case, an information field may have a value of N in binary.

According to another exemplary embodiment, the number of slots may also be used in a procedure for deriving the size of a TB, but may be independent of the size of the TB as in the conventional technical specifications. When the number of slots is indicated, the terminal 103 may regard this indication as that a PDSCH is repeatedly received. In such a case, the terminal 103 may perform combining of the same TBs. According to the exemplary embodiment, the terminal 103 may perform chase combining or incremental redundancy for the same TBs.

In a case where the chase combining is performed, the same coded bits may be received for each slot for PDSCHs received in two or more slots. In a case where incremental redundancy is performed, coded bits different from each other may be received in each slot. This is because the coded bits where the first mapping begins are expressed differently for each slot. For example, RVs may vary from slot to slot, which may be indicated by the technical specifications or may be indicated by scheduling. In a case of being determined in the technical specifications, RVs may be linked to the number of slots. For example, in a case where the number of slots is 2, the RVs may be given in the order of 0, 0 or in the order of 0,2. In addition, in a case where the number of slots is 4, RVs may be given in the order of 0, 2, 3, 1, or in the order of 0, 2, 1, 3, or in the order of 0, 2, 0, 2, or in the order of 0, 0, 0, 0.

<u>Method 85:</u> A terminal 103 may repeatedly receive a PDSCH scrambled with a RA-RNTI or a TC-RNTI, and in this case, the same coded bits may be received in slots different from each other, or the coded bits different from each other may be received in the slots different from each other.

In a case where an Msg2 PDSCH is considered, the terminal 103 may transmit an Msg3 PUSCH according to a contention resolution procedure. In contrast, in a case where an Msg4 PDSCH is considered, the terminal 103 may transmit a HARQ-ACK for the PDSCH. For convenience of description, this may also be distinguished by an RNTI.

Since the N number of slots may be considered in the case where the Msg2 PDSCH is considered, a criterion for deriving a time for the terminal 103 to prepare the Msg3 PUSCH may be the first slot or the last slot among the N number of slots.

Since the N number of slots may be considered in the case where the Msg4 PDSCH is considered, a criterion for deriving a time for the terminal 103 to prepare a HARQ-ACK of the Msg4 PUSCH may be the first slot or the last slot among the N number of slots.

In a case where an aperiodic CSI report is triggered in the Msg3 PUSCH, a time as a reference may be the first slot or the last slot among the N number of slots.

<u>Method 86:</u> In a case where UL signals/channels for Msg2, Msg3, or Msg4 are transmitted, the UL signals/channels may be prepared on the basis of the first slot or the last slot to which the Msg2 PDSCH or the Msg4 PDSCH is allocated.

In a case where the terminal 103 searches for DCI belonging to a RA response window, this may be determined by whether the DCI scrambled with a RA-RNTI belongs to the RA response window or not.

In a case where a PDSCH is received in a narrowband, reception performance may be good or bad depending on the channel fading of the narrowband. In order to solve this issue, frequency hopping may be performed. In order for the frequency hopping to be performed, two or more frequency resources used by the PDSCH should be given, and the corresponding frequency resources should be applied in slots at least different from each other. Accordingly, it is preferable that one frequency resource is indicated to the terminal 103 and another frequency resource is derived in relation to the bandwidth of a DL BWP.

<u>Method 87:</u> A frequency offset determined by a bandwidth of a DL BWP (i.e., $N_{BWP}$) is derived, and frequency resources may be derived from the frequency offset and frequency resources (i.e., PRBs), which are indicated in the scheduling DCI.

FIG. 25 is a view illustrating frequency hopping that may be performed in a case where PDSCHs are repeatedly transmitted according to the exemplary embodiments of the present disclosure.

When a PRB indicated in the scheduling DCI is given between $n_1$ and $n_2$, frequency hopping is performed so that the PRB may be given between bands $n_1'$ and $n_2'$ 2501 according to FIG. 25. According to the exemplary embodiment, an offset M associated with $N_{BWP}$ may be derived. For example, M may be $N_{BW}/2$ or $N_{BWP}/4$. Since allocation is performed in a narrow band, hopping may be performed to the bands $n_1'$ and $n_2'$ 2501 corresponding to a relatively opposite side of the BWP compared to the bands $n_1$ and $n_2$. In addition, it is assumed that $n_2$, $n_2'$ always belong to the bandwith of the BWP.

The terminal 103 may assume that a PDSCH is received in the first slot with the frequency resources received from the scheduling DCI and that a PDSCH is received in the second slot with the frequency resources derived from the $N_{BWP}$. Thereafter, odd-numbered received frequency resources and even-numbered received frequency resources may be distinguished from each other.

### [Method of extending reach of PUSCH]

In the initial access procedure, a PUSCH may mean a message 3 PUSCH (e.g., an Msg3) or a message A PUSCH (e.g., MsgA). In order to extend UL coverage, a base station 101 may indicate a terminal 103 to allocate high transmission power to the PUSCH. Alternatively, in order to extend the UL coverage, the number of PUSCH transmissions (e.g., time resources) may be increased. "In a case where the PUSCH transmission power of the terminal 103 located at the edge of the UL coverage increases", interference, which is caused by the PUSCH transmission, to other base stations 101 may increase. Accordingly, instead of increasing transmission power, it may be preferable to transmit the PUSCH for a longer period of time.

For example, the random access (RA) procedure (e.g., a RACH procedure and a PRACH procedure) may be classified into a first RA procedure and a second RA procedure. In the first RA procedure, repetitive transmission of messages (e.g., Msg1, Msg2, Msg3, Msg4, MsgA, and/or MsgB) may not be performed, and in the second RA procedure, the repetitive transmission of the messages (e.g., Msg1, Msg2, Msg3, Msg4, MsgA, and/or MsgB) may be performed. In addition, the first RA procedure may be performed in a case where the terminal 103 desires to be managed separately by the base station 101 from the initial access due to reasons such as small data transmission, RAN slicing access stratum Group, or reduced capability, or be performed in a case where the terminal 103 performs the initial access for general mobile communication.

The base station 101 may transmit a SIB, which includes configuration information of the first RA procedure and configuration information of the second RA procedure, and/or dedicated control messages. The configuration information of the first RA procedure (e.g., parameters required for the first RA procedure) may be referred to as first RA configuration information, and the configuration information of the second RA procedure may be referred to as second RA configuration information (e.g., parameters required for the second RA procedure). The terminal 103 may receive the first RA configuration information and the second RA configuration information from the base station 101. The terminal 103 may perform the first RA procedure on the basis of the first RA configuration information in a case where a predefined condition is satisfied. The terminal 103 may perform the second RA procedure on the basis of the second RA configuration information in a case where the predefined condition is not satisfied. In the second RA procedure, the terminal 103 may repeatedly transmit a PUSCH (e.g., Msg3 or MsgA) .

For a UL BWP where the initial access is performed, in a case where any one of small data transmission, RAN slicing access stratum group, or reduced capability is supported and repetitive transmission of Msg3 (and/or MsgA) is supported, the terminal 103 may measure RSRP of an SSB. This value may be compared to a threshold later, so that whether the Msg3 is repeated or not may be determined. When the Msg3 is determined to be repeated, the terminal 103 may perform the second RA procedure, and when the Msg3 is not repeated, the terminal 103 may perform the first RA procedure.

For the UL BWP where the initial access is performed, measuring RSRP of an SSB performed by the terminal 103 may be omitted in a case where the repetitive transmission of Msg3 (and/or MsgA) is supported. According to the exemplary embodiment, the terminal 103 may perform the second RA procedure even though the Msg3 is repeatedly transmitted or not repeatedly transmitted.

When a PUSCH is transmitted repeatedly, the reach may be extended by allocating high power in a narrow band. According to the conventional technical specifications, the size of a TB is derived on the basis of the number of REs allocated in one slot. In resources allocated with a narrow bandwidth, the size of the TB may be limited, and segmentation smaller than the size of Msg3 may have to be performed. In the case of the Msg3 PUSCH, since the terminal 103 is unable to receive two or more UL grants, there occurs a case where the base station 101 is unable to perform allocation to the narrow band.

In order to further extend the reach of the Msg3 PUSCH, a method of deriving the size of a TB may be proposed. In this case, the method applied in the PUSCH scrambled with the C-RNTI may be extended for TC-RNTI as well. When the Msg3 PUSCH may be repeated in multiple slots, it is preferable that the procedure for deriving the size of the TB is improved so as to enable a larger TB to be derived.

<u>Method 88:</u> The number of REs may be derived by considering a plurality of slots for deriving the size of a TB.

The number of slots N is indicated in the higher layer signaling or the scheduling DCI and may be increased by N times. According to the exemplary embodiment, the N number of slots may be consecutive or non-consecutive.

In the case of the conventional technical specifications, the number of REs that may be used as a criterion for deriving the size of a TB may be given as $N_{RE} = n_{PRB} \cdot min(156, N'_{RE})$ . According to the exemplary embodiment, $n_{PRB}$ is the number of scheduled PRBs, and $N'_{RE}$ may be determined from the number of REs assumed to be allocated in one PRB according to the conventional technical specifications.

<u>Method 89:</u> In a case where N is separately indicated to a terminal 103, the number of REs may be increased by N times as $N_{RE} = N \cdot n_{PRB} \cdot min(156, N'_{RE})$ .

According to the exemplary embodiment, N may be derived from an MCS field of DCI, which is scrambled with a MCS field of a RAR UL grant or a TC-RNTI and configured to allocate retransmission of the Msg3 PUSCH. The MCS field is assigned with 2 bits of MSB or LSB, and may be referred to as N. N is a directly indicated value in DCI. Alternatively, the indicated value in the DCI is regarded as a codepoint (or an index), and may mean any one of values indicated in SIB 1.

According to the conventional technical specifications, a scaling factor is considered in a TB transmitted over a PDSCH, a smaller TB than the size of the TB derived from the amount of resources allocated to the PDSCH may be allocated. This may follow the table expressed in Table 5 above. An information field may be included in the DCI scrambled with specific RNTIs (i.e., RA-RNTI, P-RNTI, and MsgB-RNTI), so as to indicate TBS scaling. The information field uses 2 bits, and may express at least one of those three scaling factors.

According to the exemplary embodiment, a similar approach may be applied to a PUSCH as well. For example, a TBS scaling factor may be applied even to a PUSCH scrambled with a TC-RNTI. Alternatively, the TBS scaling factor may be applied to a PUSCH allocated with DCI format 1_0 as well.

<u>Method 90:</u> A base station 101 may use system information or higher layer signaling to indicate a terminal 103 whether to apply or not to apply a scaling factor to a PUSCH scrambled with a TC-RNTI (or a PUSCH allocated in DCI format 1_0).

Since the scaling factor presented in Table 5 quoted above is a value for securing an additional link budget for the reach of a DL in a mobile communication, a separate scaling factor may be introduced for use with the PUSCH.

<u>Method 91:</u> In a case of a PUSCH scrambled with a TC-RNTI (or a PUSCH allocated with DCI format 1_0), a separate table including TBS scaling factors may be introduced.

An Msg3 PUSCH may be allocated according to a UL grant included in a MAC RAR. According to the conventional technical specifications, the resources of the Msg3 PUSCH may be indicated in Table 5 below. An MCS field may include the number of slots though which the Msg3 PUSCH is transmitted. According to the exemplary embodiment, in a case of being transmitted in two or more slots, the Msg3 PUSCH may be transmitted repeatedly, or one TB may be mapped and transmitted in the multiple slots.

In a case where a CSI request is performed, CSI for a DL BWP may be measured and multiplexed in the Msg3 PUSCH. According to the conventional technical specifications, the CSI and Msg3 PUSCH are always multiplexed in the same slot, but According to the exemplary embodiment, the Msg3 PUSCH may be multiplexed in all or part of the slots through which the Msg3 PUSCH is transmitted.

<u>Method 92:</u> CSI may be multiplexed in one slot through which an Msg3 PUSCH is transmitted (e.g., the first slot, the last slot, or the second to last slot).

In order to facilitate the implementation of a terminal 103 by reusing the conventional technical specifications, multiplexing may be performed only in the first slot through which the Msg3 PUSCH is transmitted.

Alternatively, since CSI indicates the quality of a wireless channel, the CSI should be used within a coherence time. Accordingly, it is preferable that most recent CSI is applied. Accordingly, the CSI may be multiplexed only in the last slot through which the Msg3 PUSCH is transmitted. Alternatively, in order to secure a time for decoding the CSI at the base station 101, multiplexing may be performed only in slots other than the last slot. For example, when the CSI is multiplexed in the second to last slot, the base station 101 has the advantage of bringing forward a time point at which decoding for the CSI begins. By using this, the base station 101 may derive the amount of resources for allocating an Msg4 PDSCH.

In contrast, the multiplexing may be performed in multiple slots in order to lower a code rate of CSI. This has the advantage of lowering an error rate at the base station 101 by increasing the amount of resources through which the CSI is transmitted.

<u>Method 93:</u> CSI may be multiplexed across multiple slots through which an Msg3 PUSCH is transmitted (e.g., all slots, or all slots except the last slot).

A method of mapping coded data of an Msg3 in a case where CSI is multiplexed is considered. In a case where the same coded data is repeatedly transmitted in all slots when repetitive transmission of an Msg3 PUSCH is performed, a terminal 103 performs puncturing of the coded data in a slot to which CSI is mapped and it may be assumed that the CSI is mapped. In a case where the coded data different from each other is allocated to each slot when the repetitive transmission of the Msg3 PUSCH is performed, the terminal 103 may perform rate matching or puncturing of the coded data in the slot to which the CSI is mapped.

<u>Method 94:</u> Assuming that a CSI request is not indicated, the size of a TB of an Msg3 PUSCH is derived. However, depending on whether CSI is multiplexed or not, an index where mapping coded data starts in a corresponding slot may be adjusted.

Table 6 illustrates TS 38.213, Table 8.2-1: Random Access Response Grant Content field size.

[Table 6]

| RAR grant field | Number of bits |
| --- | --- |
| Frequency hopping flag | 1 |
| PUSCH frequency resource allocation | 12, for operation with shared spectrum channel access in FR1 or for FR2-2 when *ChannelAccessMode2-rl7* is provided 14, otherwise |
| PUSCH time resource allocation | 4 |
| MCS | 4 |

(continued)

| RAR grant field | Number of bits |
|---|---|
| TPC command for PUSCH | 3 |
| CSI request | 1 |
| ChannelAccess-CPext | 2, for operation with shared spectrum channel access in FR1 or for FR2-2 when *ChannelAccessMode2-rl7* is provided 0, otherwise |

**[Method of extending reach of PUCCH]**

In a case of performing PRACH repetition/sweeping, while a terminal 103 performs a beam failure recovery (BFR) procedure, a Tx beam already indicated in the resource setting of a PUCCH by RRC signaling to the terminal 103 may be used as the Tx beam of the PUCCH. According to the conventional technical specifications, a Tx beam of PRACH transmission last transmitted by the terminal 103 may be reused as the Tx beam of the PUCCH.

In more detail, with respect to PCell or PSCell, a case where the terminal 103 receives an Msg3 PUSCH or MsgA including BFR MAC CE and also a spatial relation is indicated in PUCCH resources is considered. After DCI for allocating an Msg4 PDSCH is received and a predetermined time (e.g., 28 symbols from the last symbol of a CORESET in which DCI is detected) has elapsed, a Tx beam of a PUCCH on which a HARQ-ACK for the Msg4 PDSCH is transmitted may be determined. A serving cell to which the PUCCH is transmitted is the same as a serving cell to which a PRACH is transmitted, and a Tx beam for the PRACH last transmitted by the terminal 103 is reused as a Tx beam of the PUCCH. In addition, the Tx power of PUCCH is derived on the basis of an SSB referenced by the last transmitted PRACH.

In a case where PRACH repetition is performed, a Tx beam is fixed, so the Tx beam may be reused as a Tx beam of a PUCCH. However, since more than two Tx beams may be used in a case where PRACH sweeping is performed, it is not known how it may be used with the Tx beam of the PUCCH.

When the conventional technical specifications are reused, a Tx beam of a PUCCH transmitted at the very last is applied as the Tx beam of the PRACH, so the Tx beam of the PUCCH may have a considerably narrow width. Since the base station 101 may not be able to obtain a sufficient signal to interface plus noise ratio/block error rate (SINR/BLER), it is preferable to perform sweeping (i.e., PUCCH sweeping) with a Tx beam having a narrow width or to perform one-time transmission or repetition with a Tx beam having a wider width.

According to the exemplary embodiment, the terminal 103 may interpret the meaning of the very last transmitted PRACH in units of PRACH sweeping or PRACH repetition.

<u>Method 95:</u> A terminal 103 may reuse any one of Tx beams of PRACH(s) used in the very last transmitted RACH attempt as the Tx beam of the PUCCH (for the PRACH transmission(s) in the last RACH attempt).

According to the exemplary embodiment, RACH attempt is used collectively to mean one or more PRACHs that perform the PRACH sweeping or PRACH repetition. The RACH attempt may also refer to PRACHs transmitted before a RAR is received.

When PRACH sweeping is performed but the same sweeping factor is not reused in a step of transmitting a PUCCH, it may be difficult to reuse any one of Tx beams of PRACH(s) to regard it as a Tx beam of the PUCCH. In this case, the terminal 103 may maintain the commonality derived from the same SSB for the Tx beam of the PUCCH and the Tx beam of the PRACH, but may not assume that all or some of them are reused.

Accordingly, method 96 below is proposed, and may be applied at least to a RACH procedure by BFR, or may be applied even in the initial access step.

<u>Method 96:</u> A Tx beam of a PUCCH may not be derived from a Tx beam associated with a PRACH.

According to the exemplary embodiment, a Tx beam of a PUCCH may be derived from an Rx beam receiving a PDCCH and CORESET that schedule the Msg4 PDSCH. This method may be applied as is even in a case where the PUCCH is transmitted repeatedly.

<u>Method 97:</u> A Tx beam of a PUCCH may be derived from an Rx beam receiving a PDCCH and CORESET that schedule the Msg4 PDSCH.

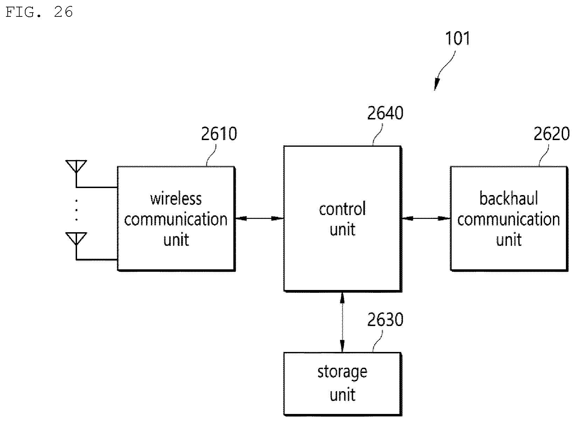

FIG. 26 is a view illustrating a configuration diagram of a base station in a wireless communication system according to various exemplary embodiments of the present disclosure. The configuration illustrated in FIG. 26 may be understood as the configuration of a base station 101. Hereinafter, the terms used below, such as "~ part" and "~ group" mean a unit for processing at least one function or operation and may be implemented by a combination of hardware and/or software.

Referring to FIG. 26, the base station 101 may include a wireless communication unit 2610, a backhaul communication unit 2620, a storage unit 2630, and a control unit 2640.

The wireless communication unit 2610 may transmit and receive wireless signals through a wireless channel. For example, the wireless communication unit 2610 may perform a conversion function between a baseband signal and a bit stream according to the physical layer standards of a system. In addition, when transmitting data, the wireless communication unit 2610 may generate complex symbols by encoding and modulating a transmission bit stream. When receiving data, the communication unit 2610 may restore a reception bit stream by demodulating and decoding the baseband signal.

The wireless communication unit 2610 may upconvert a baseband signal into a radio frequency (RF) band signal and then transmit the RF band signal through an antenna, and downconvert the RF band signal received through the antenna into the baseband signal. To this end, the wireless communication unit 2610 may include a transmission filter, a reception filter, an amplifier, a mixer, an oscillator, a digital-to-analog converter (DAC), an analog-to-digital converter (ADC), and the like.

The wireless communication unit 2610 may include a plurality of transmission and reception paths, and the wireless communication unit 2610 may include at least one antenna array configured with a plurality of antenna elements.

In terms of hardware, the wireless communication unit 2610 may include a digital unit and an analog unit, and the analog unit may include a plurality of sub-units according to operation power, operation frequencies, etc. The digital unit may be implemented with at least one processor (e.g., a digital signal processor (DSP)).

The wireless communication unit 2610 may transmit and receive wireless signals as described above. Accordingly, all or part of the wireless communication unit 2610 may be referred to as a "transmitter", a "receiver", or a "transceiver". In addition, in the following description, transmission and reception that are performed through wireless channels may include features that the above-described processing is performed by the wireless communication unit 2610.

The backhaul communication unit 2620 may provide interfaces for communicating with other nodes in a network. That is, the backhaul communication unit 2620 may convert a bit stream transmitted from the base station 101 to another node, e.g., another access node, another base station, an upper node, a core network, etc., into a physical signal, and convert the physical signal received from another node into the bit stream.

The storage unit 2630 may store data such as fundamental programs, applications, and setting information for the operations of the base station 101. The storage unit 2630 may be composed of a volatile memory, a non-volatile memory, or a combination of the volatile memory and non-volatile memory. In addition, the storage unit 2630 may provide stored data according to a request of the control unit 2640.

The control unit 2640 may control the overall operations of the base station 101. For example, the control unit 2640 may transmit and receive signals through the wireless communication unit 2610 or the backhaul communication unit 2620. In addition, the control unit 2640 may write and read data to and from the storage unit 2630. In addition, the control unit 2640 may perform protocol stack functions required by communication standards.

To this end, the control unit 2640 may include at least one processor.

According to various exemplary embodiments of the present disclosure, the control unit 2640 may control the base station 101 to perform operations thereof according to various exemplary embodiments described in FIGS. 1 to 25.

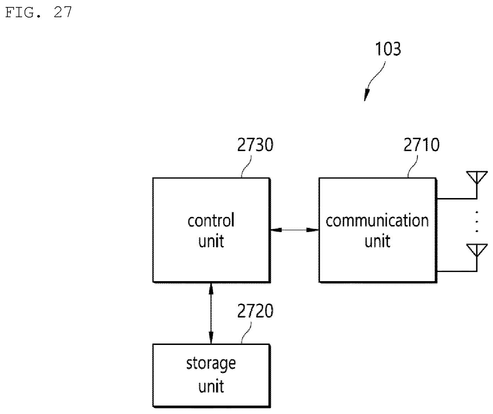

FIG. 27 is a view illustrating a configuration diagram of a terminal 103 in the wireless communication system according to various exemplary embodiments of the present disclosure. The configuration illustrated in FIG. 27 may be understood as the configuration of the terminal 103. Hereinafter, the terms used below, such as "~ part" and "~ group" mean a unit for processing at least one function or operation and may be implemented by a combination of hardware and/or software.

Referring to FIG. 27, the terminal 103 may include a communication unit 2710, a storage unit 2720, and a control unit 2730.

The communication unit 2710 may perform functions for transmitting and receiving signals through a wireless channel. For example, the communication unit 2710 may perform a conversion function between a baseband signal and a bit stream according to the physical layer standards of a system. For example, when transmitting data, the communication unit 2710 may generate complex symbols by encoding and modulating a transmission bit stream. When receiving data, the communication unit 2710 may restore a reception bit stream by demodulating and decoding the baseband signal. In addition, the communication unit 2710 may upconvert a baseband signal into an RF band signal and then transmit the RF band signal through an antenna, and downconvert the RF band signal received through the antenna into the baseband signal. For example, the communication unit 2710 may include a transmission filter, a reception filter, an amplifier, a mixer, an oscillator, a DAC, an ADC, etc.

In addition, the communication unit 2710 may include a plurality of transmission and reception paths. Furthermore, the communication unit 2710 may include at least one antenna array configured with a plurality of antenna elements. In terms of hardware, the communication unit 2710 may include a digital circuit and an analog circuit (e.g., a radio frequency integrated circuit (RFIC)). According to the exemplary embodiment, the digital circuit and the analog circuit may be implemented in one package. In addition, the communication unit 2710 may include a plurality of RF chains. Furthermore, the communication unit 2710 may perform beamforming.

The communication unit 2710 transmits and receives signals as described above. Accordingly, all or part of the communication unit 2710 may be referred to as a "transmitter", a "receiver", or a "transceiver". In addition, in the following description, transmission and reception that are performed through wireless channels may be used to mean that the above-described processing is performed by the communication unit 2710.

The storage unit 2720 may store data such as fundamental programs, applications, and setting information for the operations of the terminal 103. The storage unit 2720 may be composed of a volatile memory, a non-volatile memory, or a combination of the volatile memory and non-volatile memory. In addition, the storage unit 2720 may provide stored data according to a request of the control unit 2730.

The control unit 2730 may control the overall operations of the terminal 103. For example, the control unit 2730 may transmit and receive signals through the communication unit 2710. In addition, the control unit 2730 may write and read data to and from the storage unit 2720. The control unit 2730 may perform protocol stack functions required by communication standards. To this end, the control unit 2730 may include at least one processor or microprocessor, or may be a part of the processor. In addition, a part of the communication unit 2710 and the control unit 2730 may be referred to as a communication processor (CP).

According to various exemplary embodiments, the control unit 2730 may control the terminal 103 to perform operations according to various exemplary embodiments described above in FIGS. 1 to 25.

The methods according to the exemplary embodiments described in the claims or specification of the present disclosure may be implemented in the form of hardware, software, or a combination of hardware and software.

When implemented in software, a computer readable storage medium for storing one or more programs (i.e., software modules) may be provided. One or more programs stored in the computer-readable storage medium are configured for execution by one or more processors in an electronic device. One or more programs include instructions that cause the electronic device to execute the methods according to the exemplary embodiments described in the claims or specification of the present disclosure.

Such programs (i.e., software modules, software) may be stored in a random access memory, a non-volatile memory including a flash memory, a read only memory (ROM), an electrically erasable programmable read only memory (EEPROM), a magnetic disc storage device, a compact disc-ROM (CD-ROM), digital versatile discs (DVDs) or other forms of optical storage devices, or a magnetic cassette. Alternatively, such programs may be stored in a memory composed of a combination of some or all thereof. In addition, a plurality of configuration memories may also be included.

In addition, the programs may be stored in an attachable storage device that may be accessed through a communication network such as the Internet, an intranet, a local area network (LAN), a wide area network (WAN), or a storage area network (SAN), or through a communication network composed of a combination thereof. Such a storage device may be connected to a device for performing the exemplary embodiments of the present disclosure through an external port. In addition, a separate storage device on a communication network may be connected to the device for performing the exemplary embodiments of the present disclosure.

In the specific exemplary embodiments of the present disclosure described above, the components included in the disclosure are expressed in singular or plural numbers according to the specific exemplary embodiments presented. However, the singular or plural expressions are selected appropriately for the presented situation for convenience of description, and the present disclosure is not limited to the singular or plural components. Even components expressed in plural may be composed of a single component, or even a component expressed in a singular number may be composed of a plurality of components.

Meanwhile, in the detailed description of the present disclosure, specific exemplary embodiments have been described, but various modifications may be made without departing from the scope of the present disclosure. Therefore, the scope of the present disclosure should not be limited to the exemplary embodiments described above, but should be defined not only by the scope of claims described later, but also by those equivalent to the scope of these claims.

**Claims**

1. A method performed by a terminal in a wireless communication system, the method comprising:

    measuring received signal received power (RSRP) for a synchronization signal block (SSB) received from a base station (BS);
    determining the number of transmissions of a physical random access channel (PRACH) on the basis of the RSRP;
    selecting valid ROs for transmitting the PRACH among random access channel occasions (ROs) comprised in at least one of an SSB-RO association period or an SSB-RO association pattern period, which is corresponding to the SSB; and
    selecting an RO group for PRACH transmission among the valid ROs by considering a time offset.

2. The method of claim 1, wherein the selecting of the RO group for the PRACH transmission among the valid ROs by considering the time offset comprises:

determining the number of transmissions on the basis of the SSB; and

determining the valid RO on the basis of the number of transmissions and the time offset,

wherein the RO group derived for the PRACH transmission among the valid ROs considering the time offset is the same in contention-based random access (CBRA) and contention free-based random access (CFRA).

3. The method of claim 2, wherein in a case of the CFRA, the valid RO comprised within the time offset is not comprised in RO indexing.

4. The method of claim 1, wherein one RO group is selected by applying a mask index to a derived RO group, and the on RO group allows the PRACH transmission in some or all ROs belonging to the selected RO group.

5. The method of claim 4, wherein the mask index means one RO index or a plurality of RO indexes.

6. The method of claim 1, wherein RO indexing or RO group indexing for indicating the RO group is reset in units of SSB-RO mapping cycle, or is reset in units of SSB-RO group mapping cycle.

7. The method of claim 2, wherein the number of transmissions corresponds to features different from each other, but is indicatable by a same priority.

8. The method of claim 2, wherein separate rach-ConfigGeneric is allocatable for each of the number of transmissions.

9. The method of claim 4, wherein the RO indicated in the mask index is a first RO of the RO group or any one RO belonging to the RO group.

10. The method of claim 4, wherein a PRACH occasion index indicated in the mask index is interpreted as an RO group or as an RO.

11. An apparatus as a terminal in a wireless communication system, the apparatus comprising:

a transceiver; and

a processor operably connected to the transceiver,

wherein the processor is configured to measure received signal received power (RSRP) for a synchronization signal block (SSB) received from a base station (BS), determine the number of transmissions of a physical random access channel (PRACH) on the basis of the RSRP, select valid ROs for transmitting the PRACH among random access channel occasions (ROs) comprised in at least one of an SSB-RO association period or an SSB-RO association pattern period, which is corresponding to the SSB, and select an RO group for PRACH transmission among the valid ROs by considering a time offset.

12. The apparatus of claim 11, wherein, the processor is configured to, in order to select the RO group for the PRACH transmission among the valid ROs by considering the time offset, determine the number of transmissions on the basis of the SSB, and determines the valid RO on the basis of the number of transmissions and the time offset, and select the RO group derived for the PRACH transmission among the valid ROs by considering the time offset is the same in contention-based random access (CBRA) and contention free-based random access (CFRA).

13. The apparatus of claim 12, in a case of the CFRA, the valid RO comprised within the time offset is not comprised in RO indexing.

14. The apparatus of claim 11, wherein one RO group is selected by applying a mask index to a derived RO group, and the one RO group allows the PRACH transmission in some or all ROs belonging to the selected RO group.

15. The apparatus of claim 14, wherein the mask index means one RO index or a plurality of RO indexes.

FIG. 1

FIG. 2

FIG. 3

FIG. 4

FIG. 5

FIG. 6

FIG. 7

Generalized SSB-RO association (pattern) period

Set of legacy ROs

Set of RO groups (2)

Set of RO groups (4)

Set of RO groups (8)

RO not in any RO group

701

FIG. 8

Generalized SSB-RO association (pattern) period

Set of legacy ROs

Set of RO groups (2)

Set of RO groups (4)

Set of RO groups (8)

ROs in the last RO group

801

FIG. 9

Generalized SSB-RO association (pattern) period

Set of legacy ROs

Set of RO groups (2)

Set of RO groups (4)

Set of RO groups (8)

901

FIG. 10

FIG. 11

FIG. 12

FIG. 13

FIG. 14

FIG. 15

For CBRA with SSB a

Preamble index

1503

k=2

Legacy (k=1)

1501

FIG. 16

SSB-RO group mapping cycle

1601

| 4 | 8 |
| 3 | 7 |
| 2 | 6 |
| 1 | 5 |

| 12 | 16 |
| 11 | 15 |
| 10 | 14 |
| 9 | 13 |

| 20 | 24 |
| 19 | 23 |
| 18 | 22 |
| 17 | 21 |

| 4 | 8 |
| 3 | 7 |
| 2 | 6 |
| 1 | 5 |

freq

time

Valid RO

mask index indicating RO index 3
or RO group index 3

FIG. 17

SSB-RO group mapping cycle

1701

| 4 | 8 |
| 3 | 7 |
| 2 | 6 |
| 1 | 5 |

| 12 | 16 |
| 11 | 15 |
| 10 | 14 |
| 9 | 13 |

| 20 | 24 |
| 19 | 23 |
| 18 | 22 |
| 17 | 21 |

| 4 | 8 |
| 3 | 7 |
| 2 | 6 |
| 1 | 5 |

freq

time

Valid RO

1703

First available RO group, with
mask index indicating RO index 7

FIG. 18

SSB-RO group mapping cycle

1801

First available RO group, with
mask index indicating RO group index 6

FIG. 19

SSB-RO group mapping cycle

1901        1901

1903
mask index indicating
RO group index 6 with time offset is 4

FIG. 20

SSB-RO group mapping cycle

2001
mask index indicating
RO group index 10 with time offset is 4

FIG. 21

SSB-RO group mapping cycle

2101

| 4 | 8 |
| 3 | 7 |
| 2 | 6 |
| 1 | 5 |

| 12 | 16 |
| 11 | 15 |
| 10 | 14 |
| 9 | 13 |

| 20 | 24 |
| 19 | 23 |
| 18 | 22 |
| 17 | 21 |

| 4 | 8 |
| 3 | 7 |
| 2 | 6 |
| 1 | 5 |

freq

time

Valid RO

Chosen RO group, with mask index indicating
RO index 7 (PRACH is dropped at RO index 3.)

FIG. 22

For CBRA with SSB a

2205    2207    Preamble index

Δ

k1

2201    k2

2203

FIG. 23

beam group (beam group derived from SS/PBCH blocks) (2303)

beam grid

second axis

Tx beam (2301)

first axis

FIG. 24

SSB-RO association pattern period

| 0 | 1 | 2 | 3 | 4 | 5 | 6 | 7 | 8 | 9 | 10 | 11 | 12 | 13 | 14 | 15 | 16 | 17 | 18 | 19 |

~2401

$k^{th}$ RO group (2)          $k^{th}$ RO group (4)

FIG. 25

frequency
(PRB)

$n_2$

allocated
bandwidth
$(N_{PDSCH})$

bandwidth
of BWP
$(N_{BWP})$

$n_1$

$n_2'$

2501

$n_1'$

M

FIG. 26

101

2640

2610

2620

wireless
communication
unit

control
unit

backhaul
communication
unit

2630

storage
unit

FIG. 27

## INTERNATIONAL SEARCH REPORT

| International application No. |
|---|
| **PCT/KR2024/095615** |

**A. CLASSIFICATION OF SUBJECT MATTER**

**H04W 74/08**(2009.01)i; **H04W 74/00**(2009.01)i; **H04L 1/08**(2006.01)i; **H04W 24/08**(2009.01)i; **H04B 17/318**(2015.01)i; **H04W 72/04**(2009.01)i; **H04B 7/0404**(2017.01)i; **H04B 7/06**(2006.01)i

According to International Patent Classification (IPC) or to both national classification and IPC

**B. FIELDS SEARCHED**

Minimum documentation searched (classification system followed by classification symbols)

H04W 74/08(2009.01); H04L 1/00(2006.01); H04L 5/00(2006.01); H04W 16/28(2009.01); H04W 52/38(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 그룹 (group), SSB (synchronization signal block), RSRP (received signal received power), RO (random access channel occasion), PRACH (physical random access channel)

**C. DOCUMENTS CONSIDERED TO BE RELEVANT**

| Category* | Citation of document, with indication, where appropriate, of the relevant passages | Relevant to claim No. |
|---|---|---|
| X | WO 2021-221381 A1 (INNOVATIVE TECHNOLOGY LAB CO., LTD.) 04 November 2021 (2021-11-04)<br>See paragraphs [0112]-[0343]. | 1-15 |
| A | WO 2022-235033 A1 (SAMSUNG ELECTRONICS CO., LTD.) 10 November 2022 (2022-11-10)<br>See claims 1-6. | 1-15 |
| A | KR 10-2021-0153837 A (INNOVATIVE TECHNOLOGY LAB CO., LTD.) 20 December 2021 (2021-12-20)<br>See paragraphs [0044]-[0193]. | 1-15 |
| A | US 2018-0279136 A1 (MEDIATEK INC.) 27 September 2018 (2018-09-27)<br>See paragraphs [0027]-[0058]. | 1-15 |
| A | WO 2022-262707 A1 (TELEFONAKTIEBOLAGET LM ERICSSON (PUBL)) 22 December 2022 (2022-12-22)<br>See claims 1-25. | 1-15 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 June 2024** | **28 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

| International application No. |
| --- |
| **PCT/KR2024/095615** |

| Patent document cited in search report | | | Publication date (day/month/year) | Patent family member(s) | | | Publication date (day/month/year) |
| --- | --- | --- | --- | --- | --- | --- | --- |
| WO | 2021-221381 | A1 | 04 November 2021 | CN | 115516991 | A | 23 December 2022 |
| | | | | EP | 4145942 | A1 | 08 March 2023 |
| | | | | KR | 10-2021-0133423 | A | 08 November 2021 |
| | | | | US | 2023-0085104 | A1 | 16 March 2023 |
| WO | 2022-235033 | A1 | 10 November 2022 | EP | 4302562 | A1 | 10 January 2024 |
| | | | | US | 2022-0377799 | A1 | 24 November 2022 |
| KR | 10-2021-0153837 | A | 20 December 2021 | None | | | |
| US | 2018-0279136 | A1 | 27 September 2018 | BR | 112019019926 | A2 | 22 April 2020 |
| | | | | BR | 112019019932 | A2 | 22 April 2020 |
| | | | | BR | 112019019944 | A2 | 28 April 2020 |
| | | | | CN | 110268766 | A | 20 September 2019 |
| | | | | CN | 110419245 | A | 05 November 2019 |
| | | | | CN | 110419245 | B | 04 January 2022 |
| | | | | CN | 110463143 | A | 15 November 2019 |
| | | | | CN | 110463143 | B | 05 July 2022 |
| | | | | CN | 114980341 | A | 30 August 2022 |
| | | | | EP | 3602972 | A1 | 05 February 2020 |
| | | | | EP | 3602972 | A4 | 13 January 2021 |
| | | | | EP | 3603207 | A1 | 05 February 2020 |
| | | | | EP | 3603207 | A4 | 15 July 2020 |
| | | | | EP | 3603248 | A1 | 05 February 2020 |
| | | | | EP | 3603248 | A4 | 13 January 2021 |
| | | | | TW | 201841487 | A | 16 November 2018 |
| | | | | TW | 201841538 | A | 16 November 2018 |
| | | | | TW | 201841542 | A | 16 November 2018 |
| | | | | TW | I669016 | B | 11 August 2019 |
| | | | | TW | I695644 | B | 01 June 2020 |
| | | | | TW | I713345 | B | 11 December 2020 |
| | | | | US | 10470222 | B2 | 05 November 2019 |
| | | | | US | 10708789 | B2 | 07 July 2020 |
| | | | | US | 10716014 | B2 | 14 July 2020 |
| | | | | US | 11290894 | B2 | 29 March 2022 |
| | | | | US | 2018-0279378 | A1 | 27 September 2018 |
| | | | | US | 2018-0279379 | A1 | 27 September 2018 |
| | | | | US | 2020-0296602 | A1 | 17 September 2020 |
| | | | | WO | 2018-171746 | A1 | 27 September 2018 |
| | | | | WO | 2018-171801 | A1 | 27 September 2018 |
| | | | | WO | 2018-171802 | A1 | 27 September 2018 |
| WO | 2022-262707 | A1 | 22 December 2022 | EP | 4356667 | A1 | 24 April 2024 |
| | | | | EP | 4356668 | A1 | 24 April 2024 |
| | | | | EP | 4356678 | A1 | 24 April 2024 |
| | | | | EP | 4356679 | A1 | 24 April 2024 |
| | | | | WO | 2022-262411 | A1 | 22 December 2022 |
| | | | | WO | 2022-262412 | A1 | 22 December 2022 |
| | | | | WO | 2022-262498 | A1 | 22 December 2022 |

Form PCT/ISA/210 (patent family annex) (July 2022)